(19) Europäisches Patentamt
European Patent Office
Office européen des brevets

(11) **EP 4 447 335 A1**

(12) **EUROPEAN PATENT APPLICATION**
published in accordance with Art. 153(4) EPC

(43) Date of publication:
**16.10.2024 Bulletin 2024/42**

(21) Application number: **21966737.5**

(22) Date of filing: **09.12.2021**

(51) International Patent Classification (IPC):
**H04B 7/0456** (2017.01)

(52) Cooperative Patent Classification (CPC):
**H04B 7/0456**

(86) International application number:
**PCT/CN2021/136715**

(87) International publication number:
**WO 2023/102814 (15.06.2023 Gazette 2023/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• LIU, Zhe
  **Dongguan, Guangdong 523860 (CN)**
• SHI, Zhihua
  **Dongguan, Guangdong 523860 (CN)**
• ZHANG, Zhi
  **Dongguan, Guangdong 523860 (CN)**

(74) Representative: **Grassi, Stefano**
**Bugnion S.p.A.**
**Viale Lancetti, 17**
**20158 Milano (IT)**

(54) **WIRELESS COMMUNICATION METHOD, TERMINAL DEVICE, AND NETWORK DEVICE**

(57)    Embodiments of the present application provide a wireless communication method, a terminal device, and a network device. A codebook supporting more than four antenna ports is designed. The wireless communication method comprises: the terminal device obtains first information, the first information being used for determining a precoding matrix for uplink information transmission; the terminal device pre-codes uplink information by using the precoding matrix; and the terminal device sends pre-coded uplink information, the first information being determined according to at least one of codebook subset configuration information, antenna port number information, maximum number of transmission layers of uplink information, waveform used by uplink transmission, and first indication information, the codebook subset configuration information being used for indicating a codebook subset to which the precoding matrix belongs, the antenna port number information being used for indicating the number of antenna ports used by the terminal device to send the uplink information, the number of antenna ports being greater than 4, the number of antenna ports being a multiple of 2, and the first indication information being used for indicating a precoding matrix index.

FIG. 4

**Description**

TECHNICAL FIELD

Embodiments of the present disclosure relate to the communication field, in particular to a method for wireless communication, a terminal device and a network device.

BACKGROUND

At present, a codebook based uplink transmission can support codebooks with 2 antenna ports and 4 antenna ports. However, some special terminals can support more antenna ports. How to design a codebook supporting more antenna ports is an urgent problem to be solved.

SUMMARY

Embodiments of the present disclosure provide a method for wireless communication, a terminal device and a network device, and design a codebook supporting the number of antenna ports greater than 4, thereby improving a performance of uplink transmission.

According to a first aspect, there is provided a method for wireless communication, which includes the following operations.

A terminal device acquires first information, the first information being used to determine a precoding matrix for transmission of uplink information.

The terminal device precodes the uplink information using the precoding matrix.

The terminal device sends precoded uplink information.

The first information is determined according to at least one of: codebook subset configuration information, antenna port number information, a maximum number of transmission layers of the uplink information, a waveform used for uplink transmission, first indication information, second indication information and third indication information; and

the codebook subset configuration information is used to indicate a codebook subset to which the precoding matrix belongs, the antenna port number information is used to indicate the number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

According to a second aspect, there is provided a method for wireless communication, which includes the following operations.

A network device sends first information to a terminal device, the first information being used to determine a precoding matrix for transmission of uplink information.

The first information is determined according to at least one of: codebook subset configuration information, antenna port number information, a maximum number of transmission layers of the uplink information, a waveform used for uplink transmission, first indication information, second indication information and third indication information; and the codebook subset configuration information is used to indicate a codebook subset to which the precoding matrix belongs, the antenna port number information is used to indicate the number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

According to a third aspect, there is provided a terminal device, which is configured to implement the method in the above first aspect.

Specifically, the terminal device includes functional modules for implementing the method in the above first aspect.

According to a fourth aspect, there is provided a network device, which is configured to implement the method in the above second aspect.

Specifically, the network device includes functional modules for implementing the method in the above second aspect.

According to a fifth aspect, there is provided a terminal device, including a processor and a memory. The memory is configured to store a computer program, and the processor is configured to call and execute the computer program stored in the memory to implement the above method in the above first aspect.

According to a sixth aspect, there is provided a network device, including a processor and a memory. The memory is configured to store a computer program, and the processor is configured to call and execute the computer program stored in the memory to implement the above method in the above second aspect.

According to a seventh aspect, there is provided an apparatus, which is configured to implement the above method in any of the first aspect to second aspect.

Specifically, the apparatus includes a processor, which is configured to call and execute a computer program in a memory to cause a device equipped with the apparatus to implement the method in any of the first aspect to second aspect.

According to an eighth aspect, there is provided a computer-readable storage medium, which is configured to store a computer program that causes a computer to implement the method in any of the first aspect to second aspect.

According to a ninth aspect, there is provided a computer program product, including computer program instructions that cause a computer to implement the method in any of the first aspect to second aspect.

According to a tenth aspect, there is provided a computer program that, when running on a computer, causes a computer to implement the method in any of the first aspect to second aspect.

Through the above technical proposal, the terminal device can determine the precoding matrix for transmission of the uplink information based on the first information, and the number of antenna ports used by the terminal device to send uplink information is greater than 4, and the number of antenna ports is a multiple of 2. That is, the embodiments of the present disclosure design a codebook supporting the number of antenna ports greater than 4, thereby improving the performance of uplink transmission.

BRIEF DESCRIPTION OF THE DRAWINGS

FIG. 1 is a schematic diagram of a communication system architecture applied in an embodiment of the present disclosure.

FIG. 2 is a schematic diagram of a codebook based uplink transmission applied to an embodiment of the present disclosure.

FIG. 3 is a schematic diagram of an uplink transmission based on a non-codebook applied to an embodiment of the present disclosure.

FIG. 4 is a schematic flowchart of a method for wireless communication according to an embodiment of the present disclosure.

FIG. 5 is a schematic block diagram of a terminal device provided by an embodiment of the present disclosure.

FIG. 6 is a schematic block diagram of a network device provided by an embodiment of the present disclosure.

FIG. 7 is a schematic block diagram of a communication device provided by an embodiment of the present disclosure.

FIG. 8 is a schematic block diagram of an apparatus provided by an embodiment of the present disclosure.

FIG. 9 is a schematic block diagram of a communication system provided by an embodiment of the present disclosure.

DETAILED DESCRIPTION

The technical solution of the embodiments of the present disclosure will be described below in conjunction with drawings in the embodiments of the present disclosure, and it will be apparent that the described embodiments are part of embodiments of the present disclosure, but not all of them. Based on the embodiments in the present disclosure, all other embodiments obtained by those skilled in the art without making creative efforts fall within the scope of protection of the present disclosure.

The technical solution of the embodiments of the present disclosure may be applied to various communication systems. For example, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), an internet of things (IoT), a wireless fidelity (WiFi), a 5th-generation communication system or other communication systems.

Generally speaking, conventional communication systems support a limited number of connections and are easy to implement. However, with the development of communication technology, mobile communication systems will not only support conventional communication, but also support, for example, device to device (D2D) communication, machine to machine (M2M) communication, machine type communication (MTC), vehicle to vehicle (V2V) communication, vehicle to everything (V2X), etc. Embodiments of the present disclosure may also be applied to these communication systems.

In some embodiments, the communication system in the embodiments of the present disclosure may be applied to a carrier aggregation (CA) scenario, a dual connectivity (DC) scenario, and a standalone (SA) network distribution scenario.

In some embodiments, the communication system in the embodiments of the present disclosure may be applied to an unlicensed spectrum, where the unlicensed spectrum may also be considered a shared spectrum. Optionally, the communication system in the embodiments of the present disclosure may also be applied to a licensed spectrum, where the licensed spectrum may also be considered as a non-shared spectrum.

In some embodiments, the communication system in the embodiments of the present disclosure may be applied to a FR1 band (corresponding to a band range of 410 MHz to 7.125 GHz), to a FR2 band (corresponding to a band range of 24.25 GHz to 52.6 GHz), and to new bands such as higher bands corresponding to a band range of 52.6 GHz to 71 GHz or the band range of 71 GHz to 114.25 GHz.

The embodiments of the present disclosure are described in connection with a network device and a terminal device. The terminal device may be referred to as user equipment (UE), an access terminal, a subscriber unit, a subscriber station, a mobile station, a mobile platform, a remote station, a remote terminal, a mobile device, a user terminal, a terminal, a wireless communication device, a user agent, or a user device.

The terminal device may be a STATION (ST) in the WLAN, it may be a cellular phone, a cordless phone, a session initiation protocol (SIP) telephone, a wireless local loop (WLL) station, a personal digital assistant (PDA) device, a handheld device with wireless communication function, a computing device or other processing device connected to wireless modem, an in-vehicle device, a wearable device, a next-generation communication system such as a terminal device in an NR network, or the terminal device in the future evolved public land mobile network (PLMN) network, etc.

In the embodiments of the present disclosure, the terminal device may be deployed on land, including indoor or outdoor, hand-held, wearable or in-vehicle. The terminal device may also be deployed on the water (such as ships, etc.). The terminal device may also be deployed on the air (such as airplanes, balloons and satellites), etc.

In the embodiments of the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or smart home, a vehicle communication device, a wireless communication chip/application specific integrated circuit (ASIC)/System on Chip (SoC) etc.

By way of example and not limitation, in the embodiments of the present disclosure, the terminal device may also be a wearable device. The wearable device may also be called a wearable intelligent device, which is the general name of wearable devices developed by applying wearable technology to intelligently design daily wear, such as glasses, gloves, watches, clothing and shoes. The wearable device is a porTable device that is worn directly on the body or integrated into the user's clothes or accessories. The wearable device is not only a kind of hardware device, but also realizes powerful functions through software support, data interaction and cloud interaction. Generalized wearable smart devices include full functions and large size, which may realize complete or partial functions without relying on smart phones, such as smart watches or smart glasses, and only focus on certain application functions, and the wearable smart devices need to be used in conjunction with other devices such as smart phones, such as various smart bracelets and smart jewelry for monitoring physical signs.

In the embodiments of the present disclosure, the network device may be a device for communicating with a mobile device, and the network device may be an access point (AP) in WLAN, a base transceiver station (BTS) in GSM or CDMA, a base station (NodeB, NB) in WCDMA, an evolutional node B (eNB or eNodeB) in LTE, a relay station or an access point, or an in-vehicle device, a wearable device, a network device or a base station (gNB) in the NR network, a network device in future evolved PLMN network or a network device in the NTN network, etc.

By way of example and not limitation, in the embodiments of the present disclosure, the network device may have mobility characteristics, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. In some embodiments, the network device may also be a base station arranged on land, water and the like.

In the embodiments of the present disclosure, the network device may provide services for a cell, the terminal device communicates with the network device through transmission resources (e.g. frequency domain resources, or spectrum resources) used by the cell, the cell may be a cell corresponding to a network device (e.g. a base station), the cell may belong to a macro base station or a base station corresponding to a small cell. The small cell may include a metro cell, a micro cell, a pico cell, a femto cell, etc. These small cells have the characteristics of small coverage and low transmission power, and are suiTable for providing high-speed data transmission services.

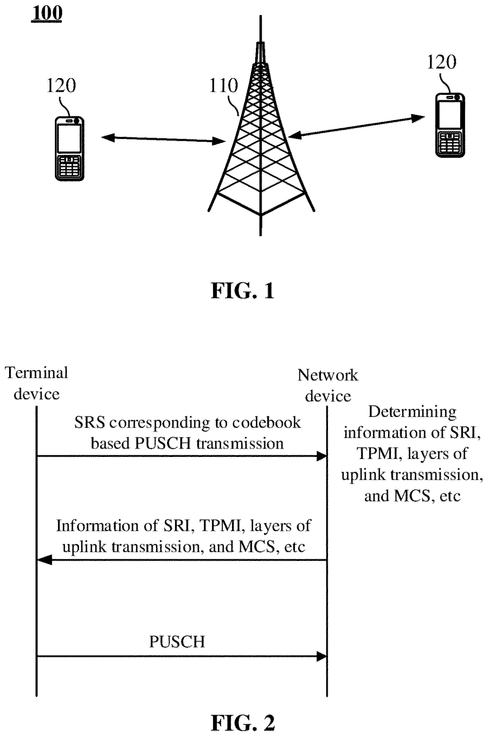

Exemplarily, a communication system 100 applied in the embodiments of the present disclosure is illustrated in FIG. 1. The communication system 100 may include a network device 110, which may be a device that communicates with a terminal device 120 (or referred to as a communication terminal or a terminal). The network device 110 may provide communication coverage for a particular geographic area and may communicate with terminal devices located within the coverage area.

FIG. 1 exemplarily illustrates one network device and two terminal devices. In some embodiments, the communication system 100 may include multiple network devices and other numbers of terminal devices may be included within the coverage of each network device, which is not limited by embodiments of the present disclosure.

In some embodiments, the communication system 100 may also include other network entities such as network controllers, mobility management entities and the like, which are not limited by the embodiments of the present disclosure.

It should be understood that a device having a communication function in a network/system in the embodiments of the present disclosure may be referred to as a communication device. Taking the communication system 100 illustrated in FIG. 1 as an example, the communication device may include a network device 110 and a terminal device 120 having a communication function, the network device 110 and the terminal device 120 may be specific devices described above and will not be described here again. The communication device may also include other devices in the communication system 100 such as network controllers, mobility management entities and other network entities, which are not limited in the embodiments of the present disclosure.

It should be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects.

It should be understood that the present disclosure relates to a first communication device and a second communication device, the first communication device may be a terminal device, such as a mobile phone, a machine facility, a Customer Front End device (CPE), an industrial device, a vehicle, and the like. The second communication device may be an opposite communication device of the first communication device, such as a network device, a mobile phone, an industrial device, a vehicle, etc. The present disclosure takes the first communication device being the terminal device and the second communication device being the network device as specific examples.

Terms used in the embodiments of the present disclosure are used only for explanation of specific embodiments of the present disclosure and are not intended to be limiting. Terms "first", "second", "third", "fourth", etc. in the description and claims of the present disclosure and the above drawings are used to distinguish different objects, and are not used to describe a particular order. Furthermore, the terms "including" and "having" and any variations thereof are intended to cover non-exclusive inclusion.

It should be understood that the reference to "indicate" in the embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B.

In the description of embodiments of the present disclosure, the term "correspond" may mean that there is a direct correspondence or an indirect correspondence relationship between the two, may also mean that there is an association relationship between the two, may also be a relationship between indication and being indicated, configuration and being configured, etc.

In embodiments of the present disclosure, the "predefined" or "pre-configured" may be implemented by pre-storing corresponding codes, Tables, or other manners that may be used to indicate relevant information in devices (e.g., including terminal devices and network devices), the specific implementation of which is not limited by the present disclosure. For example, predefined may refer to what is defined in the protocol.

In the embodiments of the present disclosure, the "protocol" may refer to standard protocols in the communication field, such as an LTE protocol, a NR protocol, and related protocols applied in future communication systems, which are not limited herein.

In order to facilitate understanding of the technical solution of the embodiments of the present disclosure, the technical solution of the present disclosure will be described in detail by specific embodiments below. The following related technologies may be combined with the technical solution of the embodiments of the present disclosure arbitrarily as an optional solution, all of which belong to the protection scope of the embodiments of the present disclosure. Embodiments of the present disclosure include at least some of the following.

In order to better understand the embodiments of the present disclosure, a scheme of a codebook based physical uplink shared channel (PUSCH) transmission of the present disclosure is described.

Specifically, as illustrated in FIG. 2, a flow of the scheme of the codebook based transmission may include the following steps.

    1. The terminal device sends a sounding reference signal (SRS) corresponding to the codebook based PUSCH transmission to the network device.

    2. The network device performs uplink channel detection according to SRS sent by the terminal device, performs resource scheduling for the terminal device, and determines SRS resources corresponding to PUSCH transmission, an SRS resource indicator (SRI), a Transmit Precoding Matrix Indicator (TPMI), layers of uplink transmission, and a Modulation and Coding Scheme (MCS); and the network device indicates the above information to the terminal device through downlink control information (DCI).

3. The terminal device receives DCI and sends PUSCH according to the instructions of DCI.

In order to better understand the embodiments of the present disclosure, a scheme of the non-codebook based PUSCH transmission of the present disclosure is described.

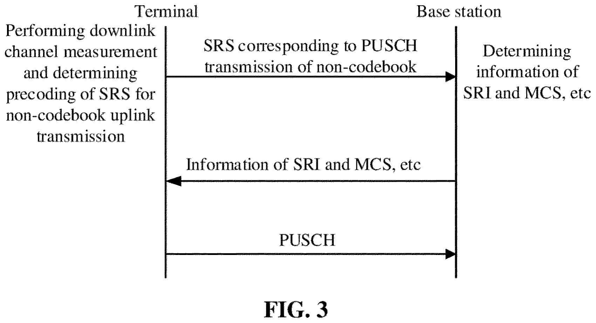

Specifically, as illustrated in FIG. 3, a flow of the scheme of the non-codebook based transmission may include the following steps.

1. The terminal device measures a downlink reference signal, obtains a candidate precoding matrix, and sends the SRS corresponding to PUSCH transmission to the network device after precoding the SRS by using the candidate precoding matrix.

2. The network device performs uplink channel detection according to the SRS sent by the terminal device, performs resource scheduling for the terminal device, and determines the SRS resources corresponding to beams for the PUSCH transmission; and the network device instructs the above information to the terminal device through DCI.

3. The terminal device receives DCI and sends PUSCH according to the instructions of DCI.

In order to better understand the embodiments of the present disclosure, control signaling(s) of the codebook based PUSCH transmission of the present disclosure is described.

In the scheme of the codebook based PUSCH transmission, the network device indicates the SRS resources corresponding to PUSCH, the number of layers of uplink transmission and the precoding matrix to the terminal device through a DCI format. The fields in DCI are Precoding information and number of layers and SRI.

Affecting factors of the number of TPMI bits in DCI include: the number of antenna ports, a codebook subset determined according to a configuration state of the high-level parameter codebook subset (codebookSubset), and the maximum number of transmission layers. The state of codebookSubset configuration should be configured according to ability reported by the terminal device, and contents reported by the terminal device include: all antennas in the terminal device perform coherent transmission, antennas in the terminal device perform partial coherent transmission, and antennas in the terminal device perform non-coherent transmission.

Corresponding to the above, each state in the TPMI indicates precoding matrix(matrices) used for transmission of uplink information.

In order to better understand the embodiments of the present disclosure, problems solved in the present disclosure are explained.

1. Uplink transmission can support 4 antenna ports at most.

2. The terminal device can report an ability of supporting partial coherent transmission, and antenna ports that can perform partial coherent transmission are 2 ports in 4 ports.

For uplink transmission with more antenna ports (for example, the number of antenna ports is 6 or the number of antenna ports is 8), the codebook design has not been involved.

Based on the above problems, the present disclosure proposes a codebook design scheme for multi-port transmission, and designs a codebook supporting the number of antenna ports greater than 4, thus improving the performance of uplink transmission.

The technical solution of the present disclosure will be described in detail by specific embodiments below.

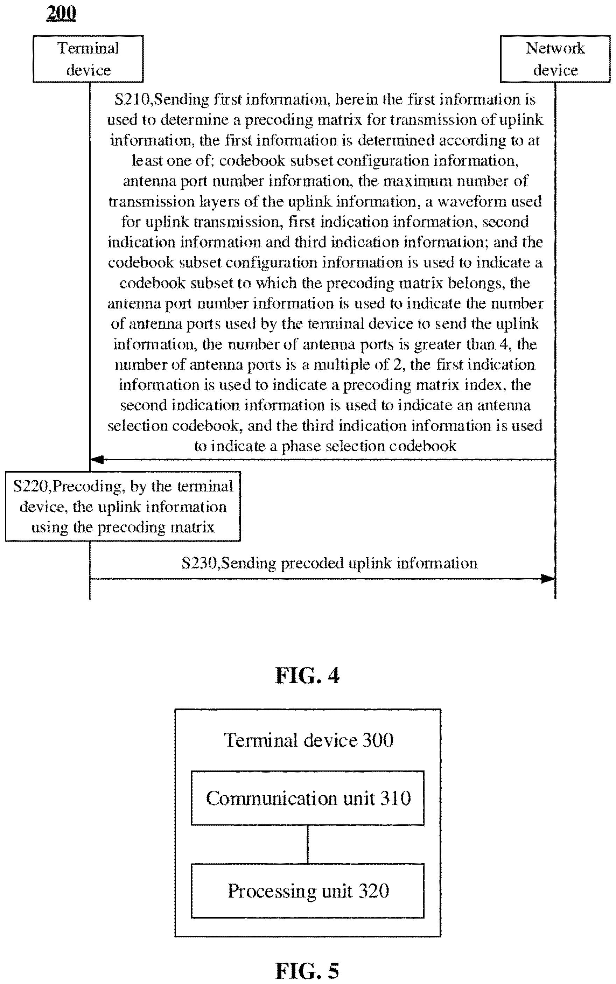

FIG. 4 is a schematic flowchart of a method for wireless communication 200 according to an embodiment of the present disclosure. As illustrated in FIG. 4, the method for wireless communication 200 may include at least some of the following operations:

At S210, a network device sends first information to a terminal device, herein the first information is used to determine a precoding matrix for transmission of uplink information; the first information is determined according to at least one of: codebook subset configuration information, antenna port number information, the maximum number of transmission layers of the uplink information, a waveform used for uplink transmission, first indication information, second indication information and third indication information; and the codebook subset configuration information is used to indicate a codebook subset to which the precoding matrix belongs, the antenna port number information is used to indicate the number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

At S220, the terminal device precodes the uplink information using the precoding matrix.

At S230, the terminal device sends precoded uplink information.

In the embodiment of the present disclosure, the number of antenna ports used by terminal device to send uplink information is greater than 4, and the number of antenna ports is a multiple of 2, that is, the precoding matrix for transmission of uplink information may correspond to a codebook supporting the number of antenna ports greater than 4.

Specifically, for example, the number of antenna ports used by the terminal device to send uplink information is N, and N=2n, where N is an integer greater than 2, for example, N=6, 8, 10, 12, 14, ... , 2n.

In the embodiment of the present disclosure, when a plurality of groups of polarized antennas or a plurality of antenna array blocks (i.e., panels) are arranged in the terminal device, uplink data may be transmitted only by using ports corresponding to one group of polarized antennas (or one panel) facing the network device or ports corresponding to two adjacent groups of polarized antennas (or two panels), thereby concentrating power on the most efficient part of antenna ports and improving the performance of uplink transmission.

In the embodiment of the present disclosure, antennas of the terminal device may perform coherent transmission in the form of antenna groups, that is, uplink information may be mapped to a group of antenna ports (the same meaning as an antenna port group) and coherent transmission may be performed.

In the embodiments of the present disclosure, the terminal device supports a codebook subset for partial coherent transmission, and the terminal device also supports a codebook subset for non-coherent transmission.

In the embodiment of the present disclosure, the terminal device supports a precoding matrix in a codebook subset for partial coherent transmission to precode the uplink information, where antenna ports, that the terminal device is capable of performing coherent transmission, corresponding to the codebook subset for partial coherent transmission is a subset of all antenna ports of the terminal device, or an antenna port group, that the terminal device is capable of performing coherent transmission, corresponding to the codebook subset for partial coherent transmission is a subset of all antenna port groups of the terminal device.

In the embodiment of the present disclosure, the antenna ports or the antenna port group, that the terminal device is capable of performing coherent transmission, corresponding to the codebook subset for partial coherent transmission is a subset of all antenna ports of the terminal device.

In some embodiments, the uplink information includes, but is not limited to, at least one of following: a physical uplink shared channel (PUSCH), and a sounding reference signal (SRS).

In some embodiments, precoding vectors in a precoding matrix are discrete Fourier transform vectors, and/or, a part of elements of at least one precoding vector in a precoding matrix are 0 and another part of elements are discrete Fourier transform vectors.

In some embodiments, precoding vectors in a precoding matrix are a combination of antenna selection codebook and phase selection codebook, and/or, a part of elements of at least one precoding vector in a precoding matrix are 0 and another part of elements are a combination of antenna selection codebook and phase selection codebook.

In some embodiments, the maximum number of transmission layers of the uplink information may be the number of actual transmission layers or the maximum number of transmission layers.

In some embodiments, the codebook subset configuration information is associated with first capability information and first antenna information; herein the first capability information comprises that the terminal device supports a codebook subset for partial coherent transmission; herein the first antenna information is used to determine antenna port group(s) for partial coherent transmission.

In some embodiments, the network device receives first capability information sent by the terminal device, herein the first capability information comprises that the terminal device supports a codebook subset for partial coherent transmission; and the network device determines the codebook subset configuration information based on the first capability information and first antenna information, herein the first antenna information is used to determine antenna port group(s) for partial coherent transmission.

In some embodiments, the first antenna information is predefined, or the first antenna information is determined based on antenna capability information reported by the terminal device.

In some embodiments, the number of antenna ports for coherent transmission of the terminal device is $N_1$, herein $N_1$ is greater than or equal to 2 and $N_1$ is less than 8. In this case, the first antenna information may be predefined, or the first antenna information may be determined based on antenna capability information reported by the terminal device. Optionally, in this case, the number of antenna ports which is used by the terminal device to send the uplink information and is indicated by the antenna port number information is 8.

Specifically, for example, $N_1=2$, antenna port indexes corresponding to an antenna port group for coherent transmission determined by the first antenna information include, but is not limited to, one of the following:

antenna port 1 and antenna port 3;

antenna port 2 and antenna port 4;
antenna port 5 and antenna port 7;
antenna port 6 and antenna port 8;
antenna port 1 and antenna port 2;
antenna port 3 and antenna port 4;
antenna port 5 and antenna port 6;
antenna port 7 and antenna port 8.

That is, in the case of $N_1$=2, coherent transmission through antenna port 1 and antenna port 3 may be determined by the first antenna information, or coherent transmission through antenna port 2 and antenna port 4 may be determined by the first antenna information, or coherent transmission through antenna port 5 and antenna port 7 may be determined by the first antenna information, or coherent transmission through antenna port 6 and antenna port 8 may be determined by the first antenna information, or coherent transmission through antenna port 1 and antenna port 2 may be determined by the first antenna information, or coherent transmission through antenna port 3 and antenna port 4 may be determined by the first antenna information, or coherent transmission through antenna port 5 and antenna port 6 may be determined by the first antenna information, or coherent transmission through antenna port 7 and antenna port 8 may be determined by the first antenna information.

In addition, in a case of $N_1$=2, antenna port indexes corresponding to an antenna port group for coherent transmission determined by the first antenna information may further include one of the following:

antenna port 1 and antenna port 8;
antenna port 2 and antenna port 7;
antenna port 3 and antenna port 6;
antenna port 4 and antenna port 5;
antenna port 1 and antenna port 6;
antenna port 2 and antenna port 5;
antenna port 3 and antenna port 7;
antenna port 4 and antenna port 8.

Specifically, for example, $N_1$=4, antenna port indexes corresponding to an antenna port group for coherent transmission determined by the first antenna information include, but is not limited to, one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

That is, in the case of $N_1$=4, coherent transmission through antenna port 1, antenna port 2, antenna port 3 and antenna port 4 may be determined by the first antenna information, or coherent transmission through antenna port 5, antenna port 6, antenna port 7 and antenna port 8 may be determined by the first antenna information, or coherent transmission through antenna port 1, antenna port 3, antenna port 5 and antenna port 7 may be determined by the first antenna information, or coherent transmission through antenna port 2, antenna port 4, antenna port 6 and antenna port 8 may be determined by the first antenna information.

In addition, in a case of $N_1$=4, antenna port indexes corresponding to an antenna port group for coherent transmission determined by the first antenna information may further include one of the following:

antenna port 1, antenna port 2, antenna port 7 and antenna port 8;
antenna port 3, antenna port 4, antenna port 5 and antenna port 6;
antenna port 1, antenna port 3, antenna port 6 and antenna port 8;
antenna port 2, antenna port 4, antenna port 5 and antenna port 7.

Specifically, for example, $N_1$=6, antenna port indexes corresponding to an antenna port group for coherent transmission determined by the first antenna information include one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7 and antenna port 8.

That is, in the case of $N_1=6$, coherent transmission through antenna port 1, antenna port 2, antenna port 3, antenna port 4, antenna port 5 and antenna port 6 may be determined by the first antenna information, or coherent transmission through antenna port 2, antenna port 3, antenna port 4, antenna port 5, antenna port 6 and antenna port 7 may be determined by the first antenna information, or coherent transmission through antenna port 3, antenna port 4, antenna port 5, antenna port 6, antenna port 7 and antenna port 8 may be determined by the first antenna information.

In some embodiments, the number of antenna ports for coherent transmission of the terminal device is $N_2$, herein $N_2$ is greater than or equal to 2 and $N_2$ is less than 6. In this case, the first antenna information may be predefined, or the first antenna information may be determined based on antenna capability information reported by the terminal device. Optionally, in this case, the number of antenna ports which is used by the terminal device to send the uplink information and is indicated by the antenna port number information is 6.

Specifically, for example, $N_2=2$, antenna port indexes corresponding to an antenna port group for coherent transmission determined by the first antenna information include, but is not limited to, one of the following:

antenna port 1 and antenna port 3;
antenna port 2 and antenna port 4;
antenna port 5 and antenna port 6;
antenna port 1 and antenna port 2;
antenna port 3 and antenna port 5;
antenna port 4 and antenna port 6.

That is, in the case of $N_2=2$, coherent transmission through antenna port 1 and antenna port 3 may be determined by the first antenna information, or coherent transmission through antenna port 2 and antenna port 4 may be determined by the first antenna information, or coherent transmission through antenna port 5 and antenna port 6 may be determined by the first antenna information, or coherent transmission through antenna port 1 and antenna port 2 may be determined by the first antenna information, or coherent transmission through antenna port 3 and antenna port 5 may be determined by the first antenna information, or coherent transmission through antenna port 4 and antenna port 6 may be determined by the first antenna information.

Specifically, for example, $N_2=3$, antenna port indexes corresponding to an antenna port group for coherent transmission determined by the first antenna information include, but is not limited to, one of the following:

antenna port 1, antenna port 2 and antenna port 3;
antenna port 4, antenna port 5 and antenna port 6;
antenna port 1, antenna port 3 and antenna port 5;
antenna port 2, antenna port 4 and antenna port 6.

That is, in the case of $N_2=3$, coherent transmission through antenna port 1, antenna port 2 and antenna port 3 may be determined by the first antenna information, or coherent transmission through antenna port 4, antenna port 5 and antenna port 6 may be determined by the first antenna information, or coherent transmission through antenna port 1, antenna port 3 and antenna port 5 may be determined by the first antenna information, or coherent transmission through antenna port 2, antenna port 4 and antenna port 6 may be determined by the first antenna information.

Specifically, for example, $N_2=4$, antenna port indexes corresponding to an antenna port group for coherent transmission determined by the first antenna information include, but is not limited to, one of the following:

antenna port 1, antenna port 2, antenna port 3 and antenna port 4;
antenna port 2, antenna port 3, antenna port 4 and antenna port 5;
antenna port 3, antenna port 4, antenna port 5 and antenna port 6.

That is, in the case of $N_2=4$, coherent transmission through antenna port 1, antenna port 2, antenna port 3 and antenna port 4 may be determined by the first antenna information, or coherent transmission through antenna port 2, antenna port 3, antenna port 4 and antenna port 5 may be determined by the first antenna information, or coherent transmission through antenna port 3, antenna port 4, antenna port 5 and antenna port 6 may be determined by the first antenna information.

In some embodiments, the first antenna information is determined based on first antenna capability information reported by the terminal device. Optionally, in this case, the number of antenna ports which is used by the terminal device to send the uplink information and is indicated by the antenna port number information is 8.

Specifically, the first antenna capability information is used to indicate one of the following: a first type of antenna port group, a second type of antenna port group, and a third type of antenna port group; herein the number of antenna ports for coherent transmission included in the first type of antenna port group is 2, the number of antenna ports for coherent transmission included in the second type of antenna port group is 4, and the number of antenna ports for coherent transmission included in the third type of antenna port group is 6.

For example, the network device receives the first antenna capability information sent by the terminal device; and the network device determines the first antenna information according to the first antenna capability information. Optionally, in this case, the number of antenna ports which is used by the terminal device to send the uplink information and is indicated by the antenna port number information is 8.

In some embodiments, in a case where the first antenna capability information is used to indicate the first type of antenna port group, antenna port indexes corresponding to an antenna port group for coherent transmission determined by the first antenna information include, but is not limited to, one of the following:

antenna port 1 and antenna port 3;
antenna port 2 and antenna port 4;
antenna port 5 and antenna port 7;
antenna port 6 and antenna port 8;
antenna port 1 and antenna port 2;
antenna port 3 and antenna port 4;
antenna port 5 and antenna port 6;
antenna port 7 and antenna port 8.

That is, in a case where the first antenna capability information is used to indicate the first type of antenna port group, coherent transmission through antenna port 1 and antenna port 3 may be determined by the first antenna information, or coherent transmission through antenna port 2 and antenna port 4 may be determined by the first antenna information, or coherent transmission through antenna port 5 and antenna port 7 may be determined by the first antenna information, or coherent transmission through antenna port 6 and antenna port 8 may be determined by the first antenna information, or coherent transmission through antenna port 1 and antenna port 2 may be determined by the first antenna information, or coherent transmission through antenna port 3 and antenna port 4 may be determined by the first antenna information, or coherent transmission through antenna port 5 and antenna port 6 may be determined by the first antenna information, or coherent transmission through antenna port 7 and antenna port 8 may be determined by the first antenna information.

In some embodiments, in a case where the first antenna capability information is used to indicate the second type of antenna port group, antenna port indexes corresponding to an antenna port group for coherent transmission determined by the first antenna information include, but is not limited to, one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

That is, in a case where the first antenna capability information is used to indicate the second type of antenna port group, coherent transmission through antenna port 1, antenna port 2, antenna port 3 and antenna port 4 may be determined by the first antenna information, or coherent transmission through antenna port 5, antenna port 6, antenna port 7 and antenna port 8 may be determined by the first antenna information, or coherent transmission through antenna port 1, antenna port 3, antenna port 5 and antenna port 7 may be determined by the first antenna information, or coherent transmission through antenna port 2, antenna port 4, antenna port 6 and antenna port 8 may be determined by the first antenna information.

In some embodiments, in a case where the first antenna capability information is used to indicate the third type of antenna port group, antenna port indexes corresponding to an antenna port group for coherent transmission determined by the first antenna information include, but is not limited to, one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7 and antenna port 8.

That is, in a case where the first antenna capability information is used to indicate the third type of antenna port group, coherent transmission through antenna port 1, antenna port 2, antenna port 3, antenna port 4, antenna port 5, and antenna port 6 may be determined by the first antenna information, or coherent transmission through antenna port 2, antenna port 3, antenna port 4, antenna port 5, antenna port 6, and antenna port 7 may be determined by the first antenna information, or coherent transmission through antenna port 3, antenna port 4, antenna port 5, antenna port 6, antenna port 7, and antenna port 8 may be determined by the first antenna information.

In some embodiments, the first antenna information is determined based on second antenna capability information reported by the terminal device. Optionally, in this case, the number of antenna ports which is used by the terminal device to send the uplink information and is indicated by the antenna port number information is 6.

Specifically, the second antenna capability information is used to indicate one of the following: a fourth type of antenna port group, a fifth type of antenna port group, and a sixth type of antenna port group; herein the number of antenna ports for coherent transmission included in the fourth type of antenna port group is 2, the number of antenna ports for coherent transmission included in the fifth type of antenna port group is 3, and the number of antenna ports for coherent transmission included in the sixth type of antenna port group is 4.

Specifically, for example, the network device receives the second antenna capability information sent by the terminal device; and the network device determines the first antenna information according to the second antenna capability information. Optionally, in this case, the number of antenna ports which is used by the terminal device to send the uplink information and is indicated by the antenna port number information is 6.

In some embodiments, in a case where the second antenna capability information is used to indicate the fourth type of antenna port group, antenna port indexes corresponding to an antenna port group for coherent transmission determined by the first antenna information include, but is not limited to, one of the following:

antenna port 1 and antenna port 3;
antenna port 2 and antenna port 4;
antenna port 5 and antenna port 6;
antenna port 1 and antenna port 2;
antenna port 3 and antenna port 5;
antenna port 4 and antenna port 6.

That is, in a case where the second antenna capability information is used to indicate the fourth type of antenna port group, coherent transmission through antenna port 1 and antenna port 3 may be determined by the first antenna information, or coherent transmission through antenna port 2 and antenna port 4 may be determined by the first antenna information, or coherent transmission through antenna port 5 and antenna port 6 may be determined by the first antenna information, or coherent transmission through antenna port 1 and antenna port 2 may be determined by the first antenna information, or coherent transmission through antenna port 3 and antenna port 5 may be determined by the first antenna information, or coherent transmission through antenna port 4 and antenna port 6 may be determined by the first antenna information.

In some embodiments, in a case where the second antenna capability information is used to indicate the fifth type of antenna port group, antenna port indexes corresponding to an antenna port group for coherent transmission determined by the first antenna information include, but is not limited to, one of the following:

antenna port 1, antenna port 2 and antenna port 3;
antenna port 4, antenna port 5 and antenna port 6;
antenna port 1, antenna port 3 and antenna port 5;
antenna port 2, antenna port 4 and antenna port 6.

That is, in a case where the second antenna capability information is used to indicate the fifth type of antenna port group, coherent transmission through antenna port 1, antenna port 2 and antenna port 3 may be determined by the first antenna information, or coherent transmission through antenna port 4, antenna port 5 and antenna port 6 may be determined by the first antenna information, or coherent transmission through antenna port 1, antenna port 3 and antenna port 5 may be determined by the first antenna information, or coherent transmission through antenna port 2, antenna port 4 and antenna port 6 may be determined by the first antenna information.

In some embodiments, in a case where the second antenna capability information is used to indicate the sixth type of antenna port group, antenna port indexes corresponding to an antenna port group for coherent transmission determined by the first antenna information include, but is not limited to, one of the following:

antenna port 1, antenna port 2, antenna port 3 and antenna port 4;
antenna port 2, antenna port 3, antenna port 4 and antenna port 5;
antenna port 3, antenna port 4, antenna port 5 and antenna port 6.

That is, in a case where the second antenna capability information is used to indicate the sixth type of antenna port group, coherent transmission through antenna port 1, antenna port 2, antenna port 3 and antenna port 4 may be determined by the first antenna information, or coherent transmission through antenna port 2, antenna port 3, antenna port 4 and antenna port 5 may be determined by the first antenna information, or coherent transmission through antenna port 3, antenna port 4, antenna port 5 and antenna port 6 may be determined by the first antenna information.

In some embodiments, the first antenna information is determined based on third antenna capability information reported by the terminal device. The third antenna capability information is used to indicate one of the following: a seventh type of antenna port group, an eighth type of antenna port group, a ninth type of antenna port group, and a tenth type of antenna port group; herein the number of antenna ports for coherent transmission included in the seventh type of antenna port group is 2, the number of antenna ports for coherent transmission included in the eighth type of antenna port group is 3, the number of antenna ports for coherent transmission included in the ninth type of antenna port group is 4, and the number of antenna ports for coherent transmission included in the tenth type of antenna port group is 6.

Specifically, for example, the network device receives the third antenna capability information sent by the terminal device; and the network device determines the first antenna information according to the third antenna capability information.

In some embodiments, the antenna port indexes correspond to element indexes in each column of precoding vectors in the precoding matrix; elements corresponding to element indexes associated with the antenna port indexes are non-zero, and elements corresponding to other element indexes are zero.

Specifically, for example, antenna port 1 corresponds to a first antenna port, and antenna port 2 corresponds to a second antenna port and so on.

It should be noted that the above example is only described by taking the number of antenna ports, used by the terminal device to send the uplink information, indicated by the antenna port number information being 6 or 8 (i.e., N=6 or N=8) as an example. When N is another value, the antenna port index corresponding to the antenna port group for coherent transmission determined by the first antenna information may be specifically referred to in the above example and will not be repeated here.

In the embodiment of the present disclosure, the number of the antenna ports that the terminal device is capable of partial coherent transmission is 2, 3, or 4, which can increase a flexibility of partial coherent transmission. The antenna ports capable of performing partial coherent transmission are determined in a predefined manner, which can reduce signaling overhead. The antenna ports capable of partial coherent transmission are determined in a manner of reporting terminal capability, so that a configuration of the network device matches a capability of the terminal device better.

In some embodiments, the terminal device may determine the number of ports used for uplink information transmission based on the antenna port number information. For example, the antenna port number information may be the number of antenna ports used for PUSCH transmission, and the number of antenna ports used for the PUSCH transmission is 8 or 6. For another example, the antenna port number information may be the number of antenna ports used for SRS transmission associated with the PUSCH, PUSCH transmission uses the same number of ports as the SRS transmission, and the number of antenna ports used for the SRS transmission associated with the PUSCH is 8 or 6.

The precoding matrix for transmission of uplink information determined in the present disclosure is described in detail below by way of specific embodiments.

In embodiment 1, the number of transmission layers of uplink information is a single layer, and antennas of the terminal device perform partial coherent transmission. Embodiment 1 takes the number of antenna ports, used by the terminal device to send the uplink information, indicated by the antenna port number information being 8 (i.e., N=8) as an example, and when N is another value, reference can be made to the embodiment of the present disclosure and no further description will be given herein.

In embodiment 1, antenna port information is partial coherent transmission of antennas of the terminal device, for example, antennas of the terminal device may perform coherent transmission in the form of antenna groups. When the number of transmission layers of uplink information is a single layer, it may be mapped to a group of antenna ports, and antenna groups may also be understood as antenna port groups. The antenna ports of the terminal device that are capable of performing coherent transmission may be predefined, or the antenna ports of the terminal device that are capable of performing coherent transmission may be determined by capability information reported by the terminal device. For example, the antenna ports of the terminal device that are capable of performing coherent transmission may be predefined, and the antenna ports of the terminal device have indexes of 1 to 8.

It should be noted that the antenna selection codebook may be understood as a codebook for beam selection or as a codebook for selecting antenna ports capable of performing coherent transmission.

In example 11 of embodiment 1, the number of antenna ports of the terminal device that are capable of performing coherent transmission is 2. The precoding matrix(matrices) for transmission of uplink information may be determined based on the antenna selection codebook and the phase selection codebook. That is, the precoding matrix(matrices) for transmission of uplink information may be determined based on the above second indication information and the third indication information.

In example 11, the antenna selection codebook may include at least one of the following:

$$\text{index 0: } \begin{bmatrix} 1 \\ 0 \\ 1 \\ 0 \\ 0 \\ 0 \\ 0 \\ 0 \end{bmatrix}, \text{ index 1: } \begin{bmatrix} 0 \\ 1 \\ 0 \\ 1 \\ 0 \\ 0 \\ 0 \\ 0 \end{bmatrix}, \text{ index 2: } \begin{bmatrix} 0 \\ 0 \\ 0 \\ 0 \\ 1 \\ 0 \\ 1 \\ 0 \end{bmatrix}, \text{ index 3: } \begin{bmatrix} 0 \\ 0 \\ 0 \\ 0 \\ 0 \\ 1 \\ 0 \\ 1 \end{bmatrix}.$$

In example 11, the phase selection codebook may include at least one of the following:

index 0: $\begin{bmatrix} 1 \\ 1 \end{bmatrix}$, index 1: $\begin{bmatrix} 1 \\ -1 \end{bmatrix}$, index 2: $\begin{bmatrix} 1 \\ j \end{bmatrix}$, index 3: $\begin{bmatrix} 1 \\ -j \end{bmatrix}$. Where 1,-1, j and -j are quadrature amplitude modulation character sets, which may also be understood as phase information of selected beams.

In example 11, taking the antenna selection codebook being index 0 as an example, the transmission codebook of uplink information may be illustrated in the following Table 1. Precoding vectors of a precoding matrix corresponding to each precoding matrix index need to perform precoding vector power normalization . That is, the precoding matrix(matrices) in Table 1 is(are) multiplied by factor $\dfrac{1}{\sqrt{P_1}}$, and the precoding matrix(matrices) may be a product of any one or more items in Table 1 and $\dfrac{1}{\sqrt{P_1}}$, and $P_1$ is a positive integer. $[\cdot]^T$ represents a conjugate transposition operation.

Table 1

| Precoding matrix indexes | precoding matrices, the number of transmission layers is 1, and the indexes are incremented from left to right |
|---|---|
| 0~3 | $[1\ 0\ 1\ 0\ 0\ 0\ 0\ 0]^T$, $[1\ 0\ \text{-}\ 1\ 0\ 0\ 0\ 0\ 0]^T$, $[1\ 0\ j\ 0\ 0\ 0\ 0\ 0]^T$, $[1\ 0\ \text{-}\ j\ 0\ 0\ 0\ 0\ 0]^T$ |
| 4~7 | $[0\ 1\ 0\ 1\ 0\ 0\ 0\ 0]^T$, $[0\ 1\ 0\ \text{-}\ 1\ 0\ 0\ 0\ 0]^T$, $[0\ 1\ 0\ j\ 0\ 0\ 0\ 0]^T$, $[0\ 1\ 0\ \text{-}\ j\ 0\ 0\ 0\ 0]^T$ |
| 8~11 | $[0\ 0\ 0\ 0\ 1\ 0\ 1\ 0]^T$, $[0\ 0\ 0\ 0\ 1\ 0\ \text{-}\ 1\ 0]^T$, $[0\ 0\ 0\ 0\ 1\ 0\ j\ 0]^T$, $[0\ 0\ 0\ 0\ 1\ 0\ \text{-}\ j\ 0]^T$ |
| 12~15 | $[0\ 0\ 0\ 0\ 0\ 1\ 0\ 1]^T$, $[0\ 0\ 0\ 0\ 0\ 1\ 0\ j]^T$, $[0\ 0\ 0\ 0\ 0\ 1\ 0\ \text{-}j]^T$ |

In example 11, the precoding matrix indexes are indicated by first indication information, which may occupy up to 4 bits, e.g. 1 bit-4 bits, each bit state corresponds to one precoding matrix in Table 1; or the precoding matrix(matrices) for transmission of uplink information is(are) determined by the second indication information and the third indication information. The second indication information is used to indicate the antenna selection codebook, and the third indication information is used to indicate the phase selection codebook. Specifically, the first information may be determined according to the first indication information, or the first information may be determined according to the second indication information and the third indication information.

In example 12 of embodiment 1, the number of antenna ports of the terminal device that are capable of coherent transmission is 4. The precoding matrix for transmission of uplink information may be determined based on the antenna selection codebook and the phase selection codebook. That is, the precoding matrix for transmission of uplink information may be determined based on the above second indication information and the third indication information.

In example 12, the antenna selection codebook may include at least one of the following:

$$\text{index 0: } \begin{bmatrix} 1 \\ 1 \\ 1 \\ 1 \\ 0 \\ 0 \\ 0 \\ 0 \end{bmatrix}, \text{ index 1: } \begin{bmatrix} 0 \\ 0 \\ 0 \\ 0 \\ 1 \\ 1 \\ 1 \\ 1 \end{bmatrix}, \text{ index 2: } \begin{bmatrix} 1 \\ 0 \\ 1 \\ 0 \\ 1 \\ 0 \\ 1 \\ 0 \end{bmatrix}, \text{ index 3: } \begin{bmatrix} 0 \\ 1 \\ 0 \\ 1 \\ 0 \\ 1 \\ 0 \\ 1 \end{bmatrix}.$$

In example 12, the phase selection codebook may include at least one of the following:
index 0: $[1\,1\,1\,1]^T$, index 1: $[1\,1\,j\,j]^T$, index 2: $[1\,1\,-1\,-1]^T$, index 3: $[1\,1\,-j\,-j]^T$, index 4: $[1\,j\,1\,j]^T$, index 5: $[1\,j\,j\,-1]^T$, index 6: $[1\,j\,-1\,-j]^T$, index 7: $[1\,j\,-j\,1]^T$, index 8: $[1\,-1\,1\,-1]^T$, index 9: $[1\,-1\,j\,-j]^T$, index 10: $[1\,-1\,-1\,1]^T$, index 11: $[1\,-1\,-j\,j]^T$, index 12: $[1\,-j\,1\,-j]^T$, index 13: $[1\,-j\,j\,1]^T$, index 14: $[1\,-j\,-1\,j]^T$, index 15: $[1\,-j\,-j\,-1]^T$.

Here. 1,-1, j and -j are quadrature amplitude modulation character sets, which may also be understood as phase information of selected beams. $[\cdot]^T$ represents a conjugate transposition operation. In example 12, after each antenna selection codebook is combined with a phase selection codebook, taking the antenna selection codebook being index 0 as an example, the codebook for transmission of uplink information is illustrated in Table 2 below. The precoding matrix(matrices) is(are) multiplied by a power normalization factor $\dfrac{1}{\sqrt{P_2}}$, and the precoding matrix(matrices) may be a product of any one or more items in the Table 2 and $\dfrac{1}{\sqrt{P_2}}$, and $P_2$ is a positive integer.

Table 2

| Precoding matrix indexes | precoding matrices, and the number of transmission layers is 1 |
|---|---|
| 0~15 | $[1\,1\,1\,1\,0\,0\,0\,0]^T$, $[1\,1\,j\,j\,0\,0\,0\,0]^T$, $[1\,1\,-1\,-1\,0\,0\,0\,0]^T$, $[1\,1\,-j\,-j\,0\,0\,0\,0]^T$, $[1\,j\,1\,j\,0\,0\,0\,0]^T$, $[1\,j\,j\,-1\,0\,0\,0\,0]^T$, $[1\,j\,-1\,-j\,0\,0\,0\,0]^T$, $[1\,j\,-j\,1\,0\,0\,0\,0]^T$, $[1\,-1\,1\,-1\,0\,0\,0\,0]^T$, $[1\,-1\,j\,-j\,0\,0\,0\,0]^T$, $[1\,-1\,-1\,1\,0\,0\,0\,0]^T$, $[1\,-1\,-j\,j\,0\,0\,0\,0]^T$, $[1\,-j\,1\,-j\,0\,0\,0\,0]^T$, $[1\,-j\,j\,1\,0\,0\,0\,0]^T$, $[1\,-j\,-1\,j\,0\,0\,0\,0]^T$, $[1\,-j\,-j\,-1\,0\,0\,0\,0]^T$ |
| 16~31 | $[0\,0\,0\,0\,1\,1\,1\,1]^T$, $[0\,0\,0\,0\,1\,1\,j\,j]^T$, $[0\,0\,0\,0\,1\,1\,-1\,-1]^T$, $[0\,0\,0\,0\,1\,1\,-j\,-j]^T$, $[0\,0\,0\,0\,1\,j\,1\,j]^T$, $[0\,0\,0\,0\,1\,j\,j\,-1]^T$, $[0\,0\,0\,0\,1\,j\,-1\,-j]^T$, $[0\,0\,0\,0\,1\,j\,-j\,1]^T$, $[0\,0\,0\,0\,1\,-1\,1\,-1]^T$, $[0\,0\,0\,0\,1\,-1\,j\,-j]^T$, $[0\,0\,0\,0\,1\,-1\,-1\,1]^T$, $[0\,0\,0\,0\,1\,-1\,-j\,j]^T$, $[0\,0\,0\,0\,1\,-j\,1\,-j]^T$, $[0\,0\,0\,0\,1\,-j\,j\,1]^T$, $[0\,0\,0\,0\,1\,-j\,-1\,j]^T$, $[0\,0\,0\,0\,1\,-j\,-j\,-1]^T$ |
| 32~47 | $[1\,0\,1\,0\,1\,0\,1\,0]^T$, $[1\,0\,1\,0\,j\,0\,j\,0]^T$, $[1\,0\,1\,0\,-1\,0\,-1\,0]^T$, $[1\,0\,1\,0\,-j\,0\,-j\,0]^T$, $[1\,0\,j\,0\,1\,0\,j\,0]^T$, $[1\,0\,j\,0\,j\,0\,-1\,0]^T$, $[1\,0\,j\,0\,-1\,0\,-j\,0]^T$, $[1\,0\,j\,0\,-j\,0\,1\,0]^T$, $[1\,0\,-1\,0\,1\,0\,-1\,0]^T$, $[1\,0\,-1\,0\,j\,0\,-j\,0]^T$, $[1\,0\,-1\,0\,-1\,0\,1\,0]^T$, $[1\,0\,-1\,0\,-j\,0\,j\,0]^T$, $[1\,0\,-j\,0\,1\,0\,-j\,0]^T$, $[1\,0\,-j\,0\,j\,0\,1\,0]^T$, $[1\,0\,-j\,0\,-1\,0\,j\,0]^T$, $[1\,0\,-j\,0\,-j\,0\,-1\,0]^T$ |
| 48~63 | $[0\,1\,0\,1\,0\,1\,0\,1]^T$, $[0\,1\,0\,1\,0\,j\,0\,j]^T$, $[0\,1\,0\,1\,0\,-1\,0\,-1]^T$, $[0\,1\,0\,1\,0\,-j\,0\,-j]^T$, $[0\,1\,0\,j\,0\,1\,0\,j]^T$, $[0\,1\,0\,j\,0\,j\,0\,-1]^T$, $[0\,1\,0\,j\,0\,-1\,0\,-j]^T$, $[0\,1\,0\,j\,0\,-j\,0\,1]^T$, $[0\,1\,0\,-1\,0\,1\,0\,-1]^T$, $[0\,1\,0\,-1\,0\,j\,0\,-j]^T$, $[0\,1\,0\,-1\,0\,-1\,0\,1]^T$, $[0\,1\,0\,-1\,0\,-j\,0\,j]^T$, $[0\,1\,0\,-j\,0\,1\,0\,-j]^T$, $[0\,1\,0\,-j\,0\,j\,0\,1]^T$, $[0\,1\,0\,-j\,0\,-1\,0\,j]^T$, $[0\,1\,0\,-j\,0\,-j\,0\,-1]^T$ |

It should be noted that in Table 2, the precoding matrices corresponding to the precoding matrix indexes 16 to 31 may be described as precoding matrices obtained by replacing elements '1' in an antenna selection codebook with index 1 by elements in phase selection codebook indexes 0 to 15 in sequence. For example, an element '1' of port 5 in the antenna selection codebook with index 1 is replaced by a first element '1' in the phase selection codebook with index 1, an element '1' of port 6 is replaced by a second element '1' in the phase selection codebook with index 1, an element '1' of port 7 is replaced by a third element 'j' in the phase selection codebook with index 1, and an element '1' of port 8 is replaced by the fourth element 'j' in the phase selection codebook with index 1. The precoding matrices corresponding to the precoding matrix indexes 32 to 47 may be described as precoding matrices obtained by replacing elements '1' in an antenna selection codebook with index 2 by elements in phase selection codebook indexes 0 to 15 in sequence. The precoding matrices corresponding to the precoding matrix indexes 48 to 63 may be described as precoding matrices obtained by replacing elements '1' in an antenna selection codebook with index 3 by elements in phase selection codebook indexes 0 to 15 in sequence.

In example 12, the precoding matrix indexes are indicated by first indication information, which may occupy up to 6 bits, e.g. 1 bit-6 bits, each bit state corresponds to one precoding matrix in Table 2; or the precoding matrix(matrices) is(are) determined by second indication information and third indication information, the second indication information is used for indicating the antenna selection codebook, and third indication information is used for indicating the phase selection codebook. Specifically, the first information may be determined according to the first indication information, or the first information may be determined according to the second indication information and the third indication information.

In embodiment 2, the number of transmission layers of uplink information is 2 layers, and antennas of the terminal device perform partial coherent transmission. Embodiment 2 takes the number of antenna ports, used by the terminal device to send the uplink information, indicated by the antenna port number information being 8 (i.e., N=8) as an example, and when N is another value, reference can be made to the embodiment of the present disclosure and no further description will be given herein.

In embodiment 2, antenna port information is partial coherent transmission of antennas of the terminal device, for example, antennas of the terminal device may perform coherent transmission in the form of antenna groups. When the number of transmission layers of uplink information is 2, each layer of 2-layer data stream may be mapped to the same antenna port group, or may be mapped to different antenna port groups. The antenna ports of the terminal device that are capable of performing coherent transmission may be predefined, or the antenna ports of the terminal device that are capable of performing coherent transmission may be determined by capability information reported by the terminal device. For example, the antenna ports of the terminal device that are capable of performing coherent transmission may be predefined, and the antenna ports of the terminal device have indexes of 1 to 8.

It should be noted that the antenna selection codebook may be understood as a codebook for beam selection or as a codebook for selecting antenna ports capable of performing coherent transmission.

In example 21 of embodiment 2, the number of antenna ports of the terminal device that are capable of performing coherent transmission is 2. The precoding matrix(matrices) for transmission of uplink information may be determined based on the antenna selection codebook and the phase selection codebook. That is, the precoding matrix(matrices) for transmission of uplink information may be determined based on the above second indication information and the third indication information.

In example 21, the antenna selection codebook may include at least one of the following:

$$
\text{index } 0: \begin{bmatrix} 1 & 0 \\ 0 & 1 \\ 1 & 0 \\ 0 & 1 \\ 0 & 0 \\ 0 & 0 \\ 0 & 0 \\ 0 & 0 \end{bmatrix}, \text{ index } 1: \begin{bmatrix} 1 & 0 \\ 0 & 0 \\ 1 & 0 \\ 0 & 0 \\ 0 & 1 \\ 0 & 0 \\ 0 & 1 \\ 0 & 0 \end{bmatrix}, \text{ index } 2: \begin{bmatrix} 1 & 0 \\ 0 & 0 \\ 1 & 0 \\ 0 & 0 \\ 0 & 0 \\ 0 & 1 \\ 0 & 0 \\ 0 & 1 \end{bmatrix}, \text{ index } 3: \begin{bmatrix} 0 & 0 \\ 1 & 0 \\ 0 & 0 \\ 1 & 0 \\ 0 & 1 \\ 0 & 0 \\ 0 & 1 \\ 0 & 0 \end{bmatrix}, \text{ index } 4: \begin{bmatrix} 0 & 0 \\ 1 & 0 \\ 0 & 0 \\ 1 & 0 \\ 0 & 0 \\ 0 & 1 \\ 0 & 0 \\ 0 & 1 \end{bmatrix}, \text{ index } 5:
$$

$$
\begin{bmatrix} 1 & 1 \\ 0 & 0 \\ 1 & 1 \\ 0 & 0 \\ 0 & 0 \\ 0 & 0 \\ 0 & 0 \\ 0 & 0 \end{bmatrix}, \text{ index } 6: \begin{bmatrix} 0 & 0 \\ 1 & 1 \\ 0 & 0 \\ 1 & 1 \\ 0 & 0 \\ 0 & 0 \\ 0 & 0 \\ 0 & 0 \end{bmatrix}, \text{ index } 7: \begin{bmatrix} 0 & 0 \\ 0 & 0 \\ 0 & 0 \\ 0 & 0 \\ 1 & 1 \\ 0 & 0 \\ 1 & 1 \\ 0 & 0 \end{bmatrix}, \text{ index } 8: \begin{bmatrix} 0 & 0 \\ 0 & 0 \\ 0 & 0 \\ 0 & 0 \\ 0 & 0 \\ 1 & 1 \\ 0 & 0 \\ 1 & 1 \end{bmatrix}.
$$

In example 21, the phase selection codebook may include at least one of the following:

$$
\text{index } 0: \begin{bmatrix} 1 & 1 \\ 1 & -j \end{bmatrix}, \text{ index } 1: \begin{bmatrix} 1 & 1 \\ 1 & j \end{bmatrix}, \text{ index } 2: \begin{bmatrix} 1 & 1 \\ -j & 1 \end{bmatrix}, \text{ index } 3: \begin{bmatrix} 1 & 1 \\ -j & -1 \end{bmatrix}, \text{ index } 4:
$$

$$
\begin{bmatrix} 1 & 1 \\ -1 & -j \end{bmatrix}, \text{ index } 5: \begin{bmatrix} 1 & 1 \\ -1 & j \end{bmatrix}, \text{index } 6: \begin{bmatrix} 1 & 1 \\ j & 1 \end{bmatrix}, \text{ index } 7: \begin{bmatrix} 1 & 1 \\ j & -1 \end{bmatrix}, \text{ index } 8: \begin{bmatrix} 1 & 1 \\ 1 & -1 \end{bmatrix}, \text{ index } 9:
$$

$$
\begin{bmatrix} 1 & 1 \\ j & -j \end{bmatrix}.
$$

In example 21, taking the antenna selection codebook being index 0 as an example, the transmission codebook of uplink information may be illustrated in at least one of the indexes 0 to 9 of the following Table 3. Precoding vectors of a precoding matrix corresponding to each precoding matrix index need to perform precoding vector power normalization.

That is, the precoding matrix(matrices) in Table 3 is(are) multiplied by factor $\dfrac{1}{\sqrt{P_3}}$, and the precoding matrix(matrices) may be a product of any one or more items in Table 3 and $\dfrac{1}{\sqrt{P_3}}$, and $P_3$ is a positive integer.

Table 3

| Precoding matrix indexes | precoding matrices, the number of transmission layers is 2, and the indexes are incremented from left to right and from top to bottom |
|---|---|
| 0~9 | $$\begin{bmatrix} 1 & 0 \\ 0 & 1 \\ 1 & 0 \\ 0 & -j \\ 0 & 0 \\ 0 & 0 \\ 0 & 0 \\ 0 & 0 \end{bmatrix} \begin{bmatrix} 1 & 0 \\ 0 & 1 \\ 1 & 0 \\ 0 & j \\ 0 & 0 \\ 0 & 0 \\ 0 & 0 \\ 0 & 0 \end{bmatrix} \begin{bmatrix} 1 & 0 \\ 0 & 1 \\ -j & 0 \\ 0 & 1 \\ 0 & 0 \\ 0 & 0 \\ 0 & 0 \\ 0 & 0 \end{bmatrix} \begin{bmatrix} 1 & 0 \\ 0 & 1 \\ -j & 0 \\ 0 & -1 \\ 0 & 0 \\ 0 & 0 \\ 0 & 0 \\ 0 & 0 \end{bmatrix} \begin{bmatrix} 1 & 0 \\ 0 & 1 \\ -1 & 0 \\ 0 & -j \\ 0 & 0 \\ 0 & 0 \\ 0 & 0 \\ 0 & 0 \end{bmatrix} \begin{bmatrix} 1 & 0 \\ 0 & 1 \\ -1 & 0 \\ 0 & j \\ 0 & 0 \\ 0 & 0 \\ 0 & 0 \\ 0 & 0 \end{bmatrix} \begin{bmatrix} 1 & 0 \\ 0 & 1 \\ j & 0 \\ 0 & 1 \\ 0 & 0 \\ 0 & 0 \\ 0 & 0 \\ 0 & 0 \end{bmatrix} \begin{bmatrix} 1 & 0 \\ 0 & 1 \\ j & 0 \\ 0 & -1 \\ 0 & 0 \\ 0 & 0 \\ 0 & 0 \\ 0 & 0 \end{bmatrix} \begin{bmatrix} 1 & 0 \\ 0 & 1 \\ 1 & 0 \\ 0 & -1 \\ 0 & 0 \\ 0 & 0 \\ 0 & 0 \\ 0 & 0 \end{bmatrix}$$ $$\begin{bmatrix} 1 & 0 \\ 0 & 1 \\ j & 0 \\ 0 & -j \\ 0 & 0 \\ 0 & 0 \\ 0 & 0 \\ 0 & 0 \end{bmatrix}$$ |
| 10~19 | similar to the above definition, elements '1' in the antenna selection codebook with index 1 is replaced by the phase selection codebook indexes 0 to 9 |
| 20~29 | similar to the above definition, elements '1' in the antenna selection codebook with index 2 is replaced by the phase selection codebook indexes 0 to 9 |
| 30~39 | similar to the above definition, elements '1' in the antenna selection codebook with index 3 is replaced by the phase selection codebook indexes 0 to 9 |
| 40~49 | similar to the above definition, elements '1' in the antenna selection codebook with index 4 is replaced by the phase selection codebook indexes 0 to 9 |
| 50~59 | similar to the above definition, elements '1' in the antenna selection codebook with index 5 is replaced by the phase selection codebook indexes 0 to 9 |
| 60~69 | similar to the above definition, elements '1' in the antenna selection codebook with index 6 is replaced by the phase selection codebook indexes 0 to 9 |
| 70~79 | similar to the above definition, elements '1' in the antenna selection codebook with index 7 is replaced by the phase selection codebook indexes 0 to 9 |
| 80~89 | similar to the above definition, elements '1' in the antenna selection codebook with index 8 is replaced by elements in the phase selection codebook indexes 0 to 9 |

It should be noted that the description "elements '1' in the antenna selection codebook with index 1 is replaced by the phase selection codebook indexes 0 to 9" in Table 3 means that the precoding matrices are obtained by sequential replacement. For example, an element '1' of port 5 in the antenna selection codebook with index 1 is replaced by an element of first row in the phase selection codebook with index 0, an element '1' of port 6 is replaced by an element of second row in the phase selection codebook with index 0, the element '1' of port 7 is replaced by an element of third row in the phase selection codebook with index 0, and the element '1' of port 8 is replaced by an element of fourth row in the phase selection codebook with index 0. In Table 3, the description "elements '1' in the antenna selection codebook with index 4 is replaced by the phase selection codebook indexes 0 to 9" means that the precoding matrices are obtained by sequential replacement. For example, an element '1' of port 1 in the antenna selection codebook with index 4 is replaced by a first element of a first row in the phase selection codebook with index 0, an element '1' of port 2 is replaced by a first element of a second row in the phase selection codebook with index 0, an element '1' of port 3 is replaced by a first element of a third row in the phase selection codebook with index 0, an element '1' of port 4 is replaced by a first element of a fourth row in the phase selection codebook with index 0, an element '1' of port 5 is replaced by a second element of a first row in the phase selection codebook with index 0, an element '1' of port 6 is replaced by a second element of a second row in the phase selection codebook with index 0, an element '1' of port 7 is replaced by a second element of a third row in the phase selection codebook with index 0, an element '1' of port 8 is replaced by a second element of a fourth row in the phase selection codebook with index 0. Other similarities will not be repeated here.

In example 21, the precoding matrix indexes are indicated by first indication information, which may occupy up to 7 bits, e.g. 1 bit-7 bits, each bit state corresponds to one precoding matrix in Table 3; or the precoding matrix(matrices) is(are) determined by second indication information and third indication information, the second indication information is used for indicating the antenna selection codebook, and third indication information is used for indicating the phase selection codebook. Specifically, the first information may be determined according to the first indication information, or the first information may be determined according to the second indication information and the third indication information.

In example 22 of embodiment 2, the number of antenna ports of the terminal device that are capable of performing coherent transmission is 4. The precoding matrix(matrices) for transmission of uplink information may be determined based on the antenna selection codebook and the phase selection codebook, and the 2-layer data stream may use the same antenna port or different antenna ports.

In example 22, the antenna selection codebook may include at least one of the following:

$$\text{index } 0: \begin{bmatrix} 1 & 1 \\ 1 & 1 \\ 1 & 1 \\ 1 & 1 \\ 0 & 0 \\ 0 & 0 \\ 0 & 0 \\ 0 & 0 \end{bmatrix}, \text{ index } 1: \begin{bmatrix} 0 & 0 \\ 0 & 0 \\ 0 & 0 \\ 0 & 0 \\ 1 & 1 \\ 1 & 1 \\ 1 & 1 \\ 1 & 1 \end{bmatrix}, \text{ index } 2: \begin{bmatrix} 1 & 1 \\ 0 & 0 \\ 1 & 1 \\ 0 & 0 \\ 1 & 1 \\ 0 & 0 \\ 1 & 1 \\ 0 & 0 \end{bmatrix}, \text{ index } 3: \begin{bmatrix} 0 & 0 \\ 1 & 1 \\ 0 & 0 \\ 1 & 1 \\ 0 & 0 \\ 1 & 1 \\ 0 & 0 \\ 1 & 1 \end{bmatrix}, \text{ index } 4: \begin{bmatrix} 1 & 0 \\ 1 & 0 \\ 1 & 0 \\ 1 & 0 \\ 0 & 1 \\ 0 & 1 \\ 0 & 1 \\ 0 & 1 \end{bmatrix}, \text{ index } 5:$$

$$\begin{bmatrix} 1 & 0 \\ 0 & 1 \\ 1 & 0 \\ 0 & 1 \\ 1 & 0 \\ 0 & 1 \\ 1 & 0 \\ 0 & 1 \end{bmatrix}.$$

In example 22, the phase selection codebook may include at least one of the following:

$$\text{index } 0: \begin{bmatrix} 1 & 1 \\ 1 & 1 \\ 1 & -1 \\ 1 & -1 \end{bmatrix}, \text{ index } 1: \begin{bmatrix} 1 & 1 \\ 1 & 1 \\ j & -j \\ j & -j \end{bmatrix}, \text{ index } 2: \begin{bmatrix} 1 & 1 \\ j & j \\ 1 & -1 \\ j & -j \end{bmatrix}, \text{ index } 3: \begin{bmatrix} 1 & 1 \\ j & j \\ j & -j \\ -j & 1 \end{bmatrix}, \text{ index } 4:$$

$$\begin{bmatrix} 1 & 1 \\ -1 & -1 \\ 1 & -1 \\ -1 & 1 \end{bmatrix}, \text{ index } 5: \begin{bmatrix} 1 & 1 \\ -1 & -1 \\ j & -j \\ -j & j \end{bmatrix}, \text{ index } 6: \begin{bmatrix} 1 & 1 \\ -j & -j \\ 1 & -1 \\ -j & j \end{bmatrix}, \text{ index } 7: \begin{bmatrix} 1 & 1 \\ -j & -j \\ j & -j \\ 1 & -1 \end{bmatrix}.$$

Here 1,-1, j and -j are quadrature amplitude modulation character sets, which may also be understood as phase information of selected beams. $[\cdot]^T$ represents a conjugate transposition operation. In example 22, after each antenna selection codebook is combined with a phase selection codebook, taking the antenna selection codebook being index 0 as an example, the codebook for transmission of uplink information is illustrated in Table 4 below. The precoding matrix(matrices) is(are) multiplied by a power normalization factor $\frac{1}{\sqrt{P_4}}$, and the precoding matrix(matrices) may be a product of any one or more items in the Table 4 and $\frac{1}{\sqrt{P_4}}$, and $P_4$ is a positive integer.

Table 4

| Precoding matrix indexes | precoding matrices, and the number of transmission layers is 2 |
|---|---|
| 0~7 | $$\begin{bmatrix} 1 & 1 \\ 1 & 1 \\ 1 & -1 \\ 1 & -1 \\ 0 & 0 \\ 0 & 0 \\ 0 & 0 \\ 0 & 0 \end{bmatrix} \begin{bmatrix} 1 & 1 \\ 1 & 1 \\ j & -j \\ j & -j \\ 0 & 0 \\ 0 & 0 \\ 0 & 0 \\ 0 & 0 \end{bmatrix} \begin{bmatrix} 1 & 1 \\ j & j \\ 1 & -1 \\ j & -j \\ 0 & 0 \\ 0 & 0 \\ 0 & 0 \\ 0 & 0 \end{bmatrix} \begin{bmatrix} 1 & 1 \\ j & j \\ j & -j \\ -j & 1 \\ 0 & 0 \\ 0 & 0 \\ 0 & 0 \\ 0 & 0 \end{bmatrix} \begin{bmatrix} 1 & 1 \\ -1 & -1 \\ 1 & -1 \\ -1 & 1 \\ 0 & 0 \\ 0 & 0 \\ 0 & 0 \\ 0 & 0 \end{bmatrix} \begin{bmatrix} 1 & 1 \\ -1 & -1 \\ j & -j \\ -j & j \\ 0 & 0 \\ 0 & 0 \\ 0 & 0 \\ 0 & 0 \end{bmatrix} \begin{bmatrix} 1 & 1 \\ -j & -j \\ 1 & -1 \\ -j & j \\ 0 & 0 \\ 0 & 0 \\ 0 & 0 \\ 0 & 0 \end{bmatrix}$$ $$\begin{bmatrix} 1 & 1 \\ -j & -j \\ j & -j \\ 1 & -1 \\ 0 & 0 \\ 0 & 0 \\ 0 & 0 \\ 0 & 0 \end{bmatrix}$$ |
| 8~15 | similar to the above definition, elements '1' in the antenna selection codebook with index 1 is replaced by the phase selection codebook indexes 0 to 7 |
| 16~23 | same as the above definition, elements '1' in the antenna selection codebook with index 2 is replaced by the phase selection codebook indexes 0 to 7 |
| 24~31 | same as the above definition, elements '1' in the antenna selection codebook with index 3 is replaced by the phase selection codebook indexes 0 to 7 |
| 32~39 | same as the above definition, elements '1' in the antenna selection codebook with index 4 is replaced by the phase selection codebook indexes 0 to 7 |
| 40~47 | same as the above definition, elements '1' in the antenna selection codebook with index 5 is replaced by elements in the phase selection codebook indexes 0 to 7 |

It should be noted that the description "elements '1' in the antenna selection codebook with index 1 is replaced by the phase selection codebook indexes 0 to 7" in Table 4 means that the precoding matrices are obtained by sequential replacement. For example, elements ' 1' of port 5 in the antenna selection codebook with index 1 is replaced by elements of first row in the phase selection codebook with index 0, elements ' 1' of port 6 is replaced by elements of second row in the phase selection codebook with index 0, elements ' 1' of port 7 is replaced by elements of third row in the phase selection codebook with index 0, and elements '1' of port 8 is replaced by elements of fourth row in the phase selection codebook with index 0. In Table 3, the description "elements '1' in the antenna selection codebook with index 4 is replaced by the phase selection codebook indexes 0 to 9" means that the precoding matrices are obtained by sequential replacement, for example, an element ' 1' of port 1 in the antenna selection codebook with index 4 is replaced by a first element of a first row in the phase selection codebook with index 0, an element ' 1' of port 2 is replaced by a first element of a second row in the phase selection codebook with index 0, an element '1' of port 3 is replaced by a first element of a third row in the phase selection codebook with index 0, an element '1' of port 4 is replaced by a first element of a fourth row in the phase selection codebook with index 0, an element '1' of port 5 is replaced by a second element of a first row in the phase selection codebook with index 0, an element '1' of port 6 is replaced by a second element of a second row in the phase selection codebook with index 0, an element '1' of port 7 is replaced by a second element of a third row in the phase selection codebook with index 0, an element ' 1' of port 8 is replaced by a second element of a fourth row in the phase selection codebook with index 0. Other similarities will not be repeated here.

In example 22, the precoding matrix indexes are indicated by first indication information, which may occupy up to 6 bits, e.g. 1 bit-6 bits, each bit state corresponds to one precoding matrix in Table 4; or the precoding matrix(matrices) is(are) determined by second indication information and third indication information, the second indication information is used for indicating the antenna selection codebook, and third indication information is used for indicating the phase selection codebook. Specifically, the first information may be determined according to the first indication information, or the first information may be determined according to the second indication information and the third indication information.

In embodiment 3, the number of transmission layers of uplink information is 4 layers, and antennas of the terminal device perform partial coherent transmission. Embodiment 3 takes the number of antenna ports, used by the terminal device to send the uplink information, indicated by the antenna port number information being 8 (i.e., N=8) as an example, and when N is another value, reference can be made to the embodiment of the present disclosure and no further description will be given herein.

In embodiment 3, antenna port information is partial coherent transmission of antennas of the terminal device, for example, antennas of the terminal device may perform coherent transmission in the form of antenna groups. When the number of transmission layers of uplink information is 4, each 2-layer in the 4-layer data stream may be mapped to the same antenna port group, or each 2-layer data stream may be mapped to different antenna port groups. The antenna ports of the terminal device that are capable of performing coherent transmission may be predefined, or the antenna ports of the terminal device that are capable of performing coherent transmission may be determined by capability information reported by the terminal device. For example, the antenna ports of the terminal device that are capable of coherent transmission may be predefined, and the antenna ports of the terminal device have indexes of 1 to 8.

It should be noted that the antenna selection codebook may be understood as a codebook for beam selection or as a codebook for selecting antenna ports capable of performing coherent transmission.

In example 31 of embodiment 3, the number of antenna ports of the terminal device that are capable of performing coherent transmission is 2. The precoding matrix(matrices) for transmission of uplink information may be determined based on the antenna selection codebook and the phase selection codebook.

In example 31, the antenna selection codebook may include at least one of the following:

$$\text{index 0: } \begin{bmatrix} 1 & 1 & 0 & 0 \\ 0 & 0 & 1 & 1 \\ 1 & 1 & 0 & 0 \\ 0 & 0 & 1 & 1 \\ 0 & 0 & 0 & 0 \\ 0 & 0 & 0 & 0 \\ 0 & 0 & 0 & 0 \\ 0 & 0 & 0 & 0 \end{bmatrix}, \text{ index 1: } \begin{bmatrix} 0 & 0 & 0 & 0 \\ 0 & 0 & 0 & 0 \\ 0 & 0 & 0 & 0 \\ 0 & 0 & 0 & 0 \\ 1 & 1 & 0 & 0 \\ 0 & 0 & 1 & 1 \\ 1 & 1 & 0 & 0 \\ 0 & 0 & 1 & 1 \end{bmatrix}.$$

In example 31, the phase selection codebook may include at least one of the following:

$$\text{index 0: } \begin{bmatrix} 1 & 1 & 0 & 0 \\ 0 & 0 & 1 & 1 \\ 1 & -1 & 0 & 0 \\ 0 & 0 & 1 & -1 \end{bmatrix}, \text{ index 1: } \begin{bmatrix} 1 & 1 & 0 & 0 \\ 0 & 0 & 1 & 1 \\ j & -j & 0 & 0 \\ 0 & 0 & j & -j \end{bmatrix}.$$

In example 31, taking the antenna selection codebook being index 0 as an example, the transmission codebook of uplink information may be illustrated in at least one of the indexes 0 to 1 of the following Table 5. Taking the antenna selection codebook as index 1 as an example, the transmission codebook of uplink information may be illustrated in at least one of the indexes 2 to 3 of the following Table 5. Precoding vectors of a precoding matrix corresponding to each precoding matrix index need to perform precoding vector power normalization. That is, the precoding matrix(matrices) in Table 5 is(are) multiplied by factor $\dfrac{1}{\sqrt{P_5}}$, and the precoding matrix(matrices) may be a product of any one or more items in Table 5 and $\dfrac{1}{\sqrt{P_5}}$, and $P_5$ is a positive integer.

Table 5

| Precoding matrix indexes | precoding matrices, the number of transmission layers is 4, and the indexes are incremented from left to right and from top to bottom |
|---|---|
| 0 和 1 | $\begin{bmatrix} 1 & 1 & 0 & 0 \\ 0 & 0 & 1 & 1 \\ 1 & -1 & 0 & 0 \\ 0 & 0 & 1 & -1 \\ 0 & 0 & 0 & 0 \\ 0 & 0 & 0 & 0 \\ 0 & 0 & 0 & 0 \\ 0 & 0 & 0 & 0 \end{bmatrix} \begin{bmatrix} 1 & 1 & 0 & 0 \\ 0 & 0 & 1 & 1 \\ j & -j & 0 & 0 \\ 0 & 0 & j & -j \\ 0 & 0 & 0 & 0 \\ 0 & 0 & 0 & 0 \\ 0 & 0 & 0 & 0 \\ 0 & 0 & 0 & 0 \end{bmatrix}$ |
| 2 和 3 | same as the above definition, elements '1' in the antenna selection codebook with index 1 is replaced by elements in the phase selection codebook indexes 0 and 1 |
| | $\begin{bmatrix} 0 & 0 & 0 & 0 \\ 0 & 0 & 0 & 0 \\ 0 & 0 & 0 & 0 \\ 0 & 0 & 0 & 0 \\ 1 & 1 & 0 & 0 \\ 0 & 0 & 1 & 1 \\ 1 & -1 & 0 & 0 \\ 0 & 0 & 1 & -1 \end{bmatrix} \begin{bmatrix} 0 & 0 & 0 & 0 \\ 0 & 0 & 0 & 0 \\ 0 & 0 & 0 & 0 \\ 0 & 0 & 0 & 0 \\ 1 & 1 & 0 & 0 \\ 0 & 0 & 1 & 1 \\ j & -j & 0 & 0 \\ 0 & 0 & j & -j \end{bmatrix}$ |

In example 31, the precoding matrix indexes are indicated by first indication information, which may occupy up to 2 bits, e.g. 1 bit or 2 bits, each bit state corresponds to one precoding matrix in Table 5; or the precoding matrix(matrices) is(are) determined by second indication information and third indication information, the second indication information is used for indicating the antenna selection codebook, and third indication information is used for indicating the phase selection codebook. Specifically, the first information may be determined according to the first indication information, or the first information may be determined according to the second indication information and the third indication information.

In example 32 of embodiment 3, the number of antenna ports of the terminal device that are capable of performing coherent transmission is 4. The precoding matrix(matrices) for transmission of uplink information may be determined based on the antenna selection codebook and the phase selection codebook.

In example 32, the antenna selection codebook may include at least one of the following:

$$\text{index } 0: \begin{bmatrix} 1\,1\,1\,1 \\ 1\,1\,1\,1 \\ 1\,1\,1\,1 \\ 1\,1\,1\,1 \\ 0\,0\,0\,0 \\ 0\,0\,0\,0 \\ 0\,0\,0\,0 \\ 0\,0\,0\,0 \end{bmatrix}, \text{ index } 1: \begin{bmatrix} 0\,0\,0\,0 \\ 0\,0\,0\,0 \\ 0\,0\,0\,0 \\ 0\,0\,0\,0 \\ 1\,1\,1\,1 \\ 1\,1\,1\,1 \\ 1\,1\,1\,1 \\ 1\,1\,1\,1 \end{bmatrix}, \text{ index } 2: \begin{bmatrix} 1\,1\,1\,1 \\ 0\,0\,0\,0 \\ 1\,1\,1\,1 \\ 0\,0\,0\,0 \\ 1\,1\,1\,1 \\ 0\,0\,0\,0 \\ 1\,1\,1\,1 \\ 0\,0\,0\,0 \end{bmatrix}, \text{ index } 3: \begin{bmatrix} 0\,0\,0\,0 \\ 1\,1\,1\,1 \\ 0\,0\,0\,0 \\ 1\,1\,1\,1 \\ 0\,0\,0\,0 \\ 1\,1\,1\,1 \\ 0\,0\,0\,0 \\ 1\,1\,1\,1 \end{bmatrix}, \text{ index } 4:$$

$$\begin{bmatrix} 1\,1\,0\,0 \\ 0\,0\,1\,1 \\ 1\,1\,0\,0 \\ 0\,0\,1\,1 \\ 1\,1\,0\,0 \\ 0\,0\,1\,1 \\ 1\,1\,0\,0 \\ 0\,0\,1\,1 \end{bmatrix}.$$

In example 32, the phase selection codebook may include at least one of the following:

$$\text{index } 0: \begin{bmatrix} 1 & 1 & 1 & 1 \\ 1 & -1 & 1 & -1 \\ 1 & 1 & -1 & 1 \\ 1 & -1 & -1 & 1 \end{bmatrix}, \text{index } 1: \begin{bmatrix} 1 & 1 & 1 & 1 \\ 1 & -1 & 1 & -1 \\ j & j & -j & -j \\ j & -j & -j & j \end{bmatrix}.$$

In example 32, after each antenna selection codebook is combined with a phase selection codebook, taking the antenna selection codebook being index 0 as an example, the transmission codebook of uplink information is illustrated in index 0 and index 1 of Table 6 below. When the antenna selection codebook is index 1, the transmission codebook of uplink information is illustrated in index 2 and index 3 of Table 6 below, and so on, when the antenna selection codebook is index 4, the transmission codebook of uplink information is illustrated in index 8 and index 9 of Table 6 below. The precoding matrix(matrices) is(are) multiplied by a power normalization factor $\frac{1}{\sqrt{P_6}}$, and the precoding matrix(matrices) may be a product of any one or more items in the Table 6 and $\frac{1}{\sqrt{P_6}}$, and $P_6$ is a positive integer.

Table 6

| Precoding matrix indexes | precoding matrices, and the number of transmission layers is 4 |
|---|---|
| 0~3 | $\begin{bmatrix} 1 & 1 & 1 & 1 \\ 1 & -1 & 1 & -1 \\ 1 & 1 & -1 & 1 \\ 1 & -1 & -1 & 1 \\ 0 & 0 & 0 & 0 \\ 0 & 0 & 0 & 0 \\ 0 & 0 & 0 & 0 \\ 0 & 0 & 0 & 0 \end{bmatrix} \begin{bmatrix} 1 & 1 & 1 & 1 \\ 1 & -1 & 1 & -1 \\ j & j & -j & -j \\ j & -j & -j & j \\ 0 & 0 & 0 & 0 \\ 0 & 0 & 0 & 0 \\ 0 & 0 & 0 & 0 \\ 0 & 0 & 0 & 0 \end{bmatrix} \begin{bmatrix} 0 & 0 & 0 & 0 \\ 0 & 0 & 0 & 0 \\ 0 & 0 & 0 & 0 \\ 0 & 0 & 0 & 0 \\ 1 & 1 & 1 & 1 \\ 1 & -1 & 1 & -1 \\ 1 & 1 & -1 & 1 \\ 1 & -1 & -1 & 1 \end{bmatrix}$ <br><br> $\begin{bmatrix} 0 & 0 & 0 & 0 \\ 0 & 0 & 0 & 0 \\ 0 & 0 & 0 & 0 \\ 0 & 0 & 0 & 0 \\ 1 & 1 & 1 & 1 \\ 1 & -1 & 1 & -1 \\ j & j & -j & -j \\ j & -j & -j & j \end{bmatrix}$ |

(continued)

| Precoding matrix indexes | precoding matrices, and the number of transmission layers is 4 |
|---|---|
| 4~7 | $\begin{bmatrix} 1 & 1 & 1 & 1 \\ 0 & 0 & 0 & 0 \\ 1 & -1 & 1 & -1 \\ 0 & 0 & 0 & 0 \\ 1 & 1 & -1 & 1 \\ 0 & 0 & 0 & 0 \\ 1 & -1 & -1 & 1 \\ 0 & 0 & 0 & 0 \end{bmatrix} \begin{bmatrix} 1 & 1 & 1 & 1 \\ 0 & 0 & 0 & 0 \\ 1 & -1 & 1 & -1 \\ 0 & 0 & 0 & 0 \\ j & j & -j & -j \\ 0 & 0 & 0 & 0 \\ j & -j & -j & j \\ 0 & 0 & 0 & 0 \end{bmatrix} \begin{bmatrix} 0 & 0 & 0 & 0 \\ 1 & 1 & 1 & 1 \\ 0 & 0 & 0 & 0 \\ 1 & -1 & 1 & -1 \\ 0 & 0 & 0 & 0 \\ 1 & 1 & -1 & 1 \\ 0 & 0 & 0 & 0 \\ 1 & -1 & -1 & 1 \end{bmatrix}$ <br><br> $\begin{bmatrix} 0 & 0 & 0 & 0 \\ 1 & 1 & 1 & 1 \\ 0 & 0 & 0 & 0 \\ 1 & -1 & 1 & -1 \\ 0 & 0 & 0 & 0 \\ j & j & -j & -j \\ 0 & 0 & 0 & 0 \\ j & -j & -j & j \end{bmatrix}$ |
| 8 and 9 | $\begin{bmatrix} 1 & 1 & 0 & 0 \\ 0 & 0 & 1 & 1 \\ 1 & -1 & 0 & 0 \\ 0 & 0 & 1 & -1 \\ 1 & 1 & -1 & 1 \\ 0 & 0 & -1 & 1 \\ 1 & -1 & 0 & 0 \\ 0 & 0 & -1 & 1 \end{bmatrix} \begin{bmatrix} 1 & 1 & 0 & 0 \\ 0 & 0 & 1 & 1 \\ 1 & -1 & 0 & 0 \\ 0 & 0 & 1 & -1 \\ j & j & 0 & 0 \\ 0 & 0 & -j & -j \\ j & -j & 0 & 0 \\ 0 & 0 & -j & j \end{bmatrix}$ |

In example 32, the precoding matrix indexes are indicated by first indication information, which may occupy 4 bits, e.g. 1 bit-4 bits, each bit state corresponds to one precoding matrix in Table 6; or the precoding matrix(matrices) is(are) determined by second indication information and third indication information, the second indication information is used for indicating the antenna selection codebook, and third indication information is used for indicating the phase selection codebook. Specifically, the first information may be determined according to the first indication information, or the first information may be determined according to the second indication information and the third indication information.

Therefore, in the embodiment of the present disclosure, the terminal device may determine the precoding matrix(matrices) for transmission of the uplink information based on the first information, and the number of antenna ports used by the terminal device to send uplink information is greater than 4, and the number of antenna ports is a multiple of 2. That is, the embodiments of the present disclosure design a codebook supporting the number of antenna ports greater than 4, thereby improving the performance of uplink transmission.

In the embodiment of the present disclosure, a generation method of a precoding matrix corresponding to the number of antenna ports being 6 is similar to the generation method of the precoding matrix corresponding to the number of antenna ports being 8 in the above example and will not be described in detail.

In some embodiments, the terminal device sends precoding capability information to the network device, the precoding capability information is used to indicate at least one transmit precoding matrix indicator (TPMI) supported by the terminal device, or the precoding capability information is used to indicate a TPMI group supported by the terminal device. Specifically, precoding matrix(matrices) corresponding to the at least one TPMI supports the terminal device to perform physical uplink shared channel (PUSCH) full power transmission; or precoding matrix(matrices) corresponding to the TPMI group supports the terminal device to perform PUSCH full power transmission. Specifically, for example, the terminal device sends the precoding capability information to the network device before the terminal device acquires the first information.

In some embodiments, the terminal device receives second information sent by the network device, and the second information is used to instruct the terminal device to send a PUSCH using the indicated TPMI, and the precoding matrix corresponding to the indicated TPMI supports the terminal device to send the PUSCH using full power. Specifically, the second information is determined based on the precoding capability information, that is, the network device may determine the second information based on the precoding capability information.

In some embodiments, the first information and the second information may be the same information, that is, the first information may also be used to instruct the terminal device to send the PUSCH using the indicated TPMI.

In some embodiments, the precoding capability information is associated with the number of antenna ports of the terminal device and/or first antenna information. The first antenna information is used to determine an antenna port group for partial coherent transmission.

In some embodiments, the precoding capability information is associated with antenna port power information of the terminal device. The antenna port power information is related to a radio frequency of the terminal device, or the antenna port power information is related to a design of a power amplifier (PA) of the terminal device.

In some embodiments, the at least one TPMI corresponds to one or more precoding matrices in a target precoding matrix set, or the TPMI group corresponds to one or more precoding matrices in the target precoding matrix set; and precoding matrix(matrices) in the target precoding matrix set belong(s) to at least one precoding matrix set.

In some embodiments, the at least one precoding matrix set includes a first precoding matrix set. The number of transmission layers corresponding to each precoding matrix in the first precoding matrix set is 1 (i.e., rank=1), the precoding matrix(matrices) in the first precoding matrix set correspond to first antenna port power information of the terminal device, and the first antenna port power information includes that the terminal device contains two coherent ports with half-power transmission capability.

For example, when the number of antenna ports in the terminal device is 8 and for rank = 1, the first precoding matrix set includes at least one of the following:

$$[1 \quad 0 \quad 1 \quad 0 \quad 0 \quad 0 \quad 0 \quad 0]^T, [1 \quad 0 \quad -1 \quad 0 \quad 0 \quad 0 \quad 0 \quad 0]^T,$$

$$[1 \quad 0 \quad j \quad 0 \quad 0 \quad 0 \quad 0 \quad 0]^T, [1 \quad 0 \quad -j \quad 0 \quad 0 \quad 0 \quad 0 \quad 0]^T,$$

$$[0 \quad 1 \quad 0 \quad 1 \quad 0 \quad 0 \quad 0 \quad 0]^T, [0 \quad 1 \quad 0 \quad -1 \quad 0 \quad 0 \quad 0 \quad 0]^T,$$

$$[0 \quad 1 \quad 0 \quad j \quad 0 \quad 0 \quad 0 \quad 0]^T, [0 \quad 1 \quad 0 \quad -j \quad 0 \quad 0 \quad 0 \quad 0]^T,$$

$$[0 \quad 0 \quad 0 \quad 0 \quad 1 \quad 0 \quad 1 \quad 0]^T, [0 \quad 0 \quad 0 \quad 0 \quad 1 \quad 0 \quad -1 \quad 0]^T,$$

$$[0 \quad 0 \quad 0 \quad 0 \quad 1 \quad 0 \quad j \quad 0]^T, [0 \quad 0 \quad 0 \quad 0 \quad 1 \quad 0 \quad -j \quad 0]^T,$$

$$[0 \quad 0 \quad 0 \quad 0 \quad 0 \quad 1 \quad 0 \quad 1]^T, [0 \quad 0 \quad 0 \quad 0 \quad 0 \quad 1 \quad 0 \quad -1]^T,$$

$$[0 \quad 0 \quad 0 \quad 0 \quad 0 \quad 1 \quad 0 \quad j]^T, [0 \quad 0 \quad 0 \quad 0 \quad 0 \quad 1 \quad 0 \quad -j]^T.$$

In some embodiments, the first precoding matrix set may further comprises precoding matrix(matrices) that supports incoherent transmission, i.e. only one antenna port in each precoding matrix vector corresponds to an element 1 and the remaining elements are 0. For example, when the number of antenna ports in the terminal device is 8 and for rank = 1, the precoding matrix(matrices) for incoherent transmission in the first precoding matrix set includes at least one of the following:

$$[1 \quad 0 \quad 0 \quad 0 \quad 0 \quad 0 \quad 0 \quad 0]^T, [0 \quad 1 \quad 0 \quad 0 \quad 0 \quad 0 \quad 0 \quad 0]^T,$$

$$[0 \quad 0 \quad 1 \quad 0 \quad 0 \quad 0 \quad 0 \quad 0]^T, [0 \quad 0 \quad 0 \quad 1 \quad 0 \quad 0 \quad 0 \quad 0]^T,$$

$$[0 \quad 0 \quad 0 \quad 0 \quad 1 \quad 0 \quad 0 \quad 0]^T, [0 \quad 0 \quad 0 \quad 0 \quad 0 \quad 1 \quad 0 \quad 0]^T,$$

$$[0 \quad 0 \quad 0 \quad 0 \quad 0 \quad 0 \quad 1 \quad 0]^T, [0 \quad 0 \quad 0 \quad 0 \quad 0 \quad 0 \quad 0 \quad 1]^T.$$

In some embodiments, the first precoding matrix set includes at least one of the following, or the precoding matrix(matrices) in the first precoding matrix set include at least one of the following before performing precoding vector power normalization:

$$[1 \quad 0 \quad 1 \quad 0 \quad 0 \quad 0 \quad 0 \quad 0]^T, [1 \quad 0 \quad -1 \quad 0 \quad 0 \quad 0 \quad 0 \quad 0]^T,$$

$$[1 \quad 0 \quad j \quad 0 \quad 0 \quad 0 \quad 0 \quad 0]^T, [1 \quad 0 \quad -j \quad 0 \quad 0 \quad 0 \quad 0 \quad 0]^T,$$

$$[0 \quad 1 \quad 0 \quad 1 \quad 0 \quad 0 \quad 0 \quad 0]^T, [0 \quad 1 \quad 0 \quad -1 \quad 0 \quad 0 \quad 0 \quad 0]^T,$$

$$[0 \quad 1 \quad 0 \quad j \quad 0 \quad 0 \quad 0 \quad 0]^T, [0 \quad 1 \quad 0 \quad -j \quad 0 \quad 0 \quad 0 \quad 0]^T,$$

$$[0 \quad 0 \quad 0 \quad 0 \quad 1 \quad 0 \quad 1 \quad 0]^T, [0 \quad 0 \quad 0 \quad 0 \quad 1 \quad 0 \quad -1 \quad 0]^T,$$

$$[0 \quad 0 \quad 0 \quad 0 \quad 1 \quad 0 \quad j \quad 0]^T, [0 \quad 0 \quad 0 \quad 0 \quad 1 \quad 0 \quad -j \quad 0]^T,$$

$$[0 \quad 0 \quad 0 \quad 0 \quad 0 \quad 1 \quad 0 \quad 1]^T, [0 \quad 0 \quad 0 \quad 0 \quad 0 \quad 1 \quad 0 \quad -1]^T,$$

$$[0 \quad 0 \quad 0 \quad 0 \quad 0 \quad 1 \quad 0 \quad j]^T, [0 \quad 0 \quad 0 \quad 0 \quad 0 \quad 1 \quad 0 \quad -j]^T,$$

$$[1 \quad 0 \quad 0 \quad 0 \quad 0 \quad 0 \quad 0 \quad 0]^T, [0 \quad 1 \quad 0 \quad 0 \quad 0 \quad 0 \quad 0 \quad 0]^T,$$

$$[0 \quad 0 \quad 1 \quad 0 \quad 0 \quad 0 \quad 0 \quad 0]^T, [0 \quad 0 \quad 0 \quad 1 \quad 0 \quad 0 \quad 0 \quad 0]^T,$$

$$[0 \quad 0 \quad 0 \quad 0 \quad 1 \quad 0 \quad 0 \quad 0]^T, [0 \quad 0 \quad 0 \quad 0 \quad 0 \quad 1 \quad 0 \quad 0]^T,$$

$$[0 \quad 0 \quad 0 \quad 0 \quad 0 \quad 0 \quad 1 \quad 0]^T, [0 \quad 0 \quad 0 \quad 0 \quad 0 \quad 0 \quad 0 \quad 1]^T.$$

In some embodiments, precoding vector power normalization is performed on the precoding matrix(martices) in the first precoding matrix set, i.e. the precoding matrix(martices) in the first precoding matrix set is multiplied by a power normalization coefficient, which may be $\frac{1}{\sqrt{P_7}}$, for example, $\frac{1}{\sqrt{P_7}} = 1/2$.

In some embodiments, the precoding matrix with rank=1 corresponds to first antenna port power information of the terminal device. The first antenna port power information comprises that the terminal device contains two coherent ports with half-power transmission capability.

In some embodiments, the at least one precoding matrix set includes a second precoding matrix set.

The number of transmission layers corresponding to each precoding matrix in the second precoding matrix set is 2 (i.e., rank=2), the each precoding matrix in the second precoding matrix set is a combination of any two precoding matrices with numbers of transmission layers being 1, or the each precoding matrix in the second precoding matrix set is a combination, satisfying a first condition, of two precoding matrices in precoding matrices with numbers of transmission layers being 1.

Specifically, the first condition is that precoding matrix with the number of transmission layers being 2 supports coherent transmission of 2 ports or 4 ports; or the first condition is that precoding matrix with the number of transmission layers being 2 supports coherent transmission of one antenna port group or two antenna port groups.

In some embodiments, precoding matrices in the second precoding matrix set correspond to second antenna port power information of the terminal device; the second antenna port power information includes that the terminal device contains two coherent ports with half-power transmission capability, or the second antenna port power information includes that the terminal device contains four coherent ports with half-power transmission capability.

In some embodiments, the precoding matrices in the second precoding matrix set are divided into two groups.

Specifically, in one precoding matrix group in the second precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group; and in another precoding matrix group in the second precoding matrix set, the terminal device contains 4 coherent ports with half-power transmission capability, or precoding matrix(matrices) support(s) coherent transmission of 4 ports, or the precoding matrix(matrices) support(s) coherent transmission of 2 antenna port groups.

Specifically, for example, a precoding matrix in one precoding matrix group in the second precoding matrix set is composed of any 2 items of the following as precoding vectors (to be multiplied by a power normalization coefficient):

$$[1 \quad 0 \quad 0 \quad 0 \quad 0 \quad 0 \quad 0 \quad 0]^T, [0 \quad 1 \quad 0 \quad 0 \quad 0 \quad 0 \quad 0 \quad 0]^T,$$

$$[0 \quad 0 \quad 1 \quad 0 \quad 0 \quad 0 \quad 0 \quad 0]^T, [0 \quad 0 \quad 0 \quad 1 \quad 0 \quad 0 \quad 0 \quad 0]^T,$$

$$[0 \quad 0 \quad 0 \quad 0 \quad 1 \quad 0 \quad 0 \quad 0]^T, [0 \quad 0 \quad 0 \quad 0 \quad 0 \quad 1 \quad 0 \quad 0]^T,$$

$$[0 \quad 0 \quad 0 \quad 0 \quad 0 \quad 0 \quad 1 \quad 0]^T, [0 \quad 0 \quad 0 \quad 0 \quad 0 \quad 0 \quad 0 \quad 1]^T.$$

For example, a precoding matrix in one precoding matrix group in the second precoding matrix set is

$$\begin{bmatrix} 1 & 0 \\ 0 & 1 \\ 0 & 0 \\ 0 & 0 \\ 0 & 0 \\ 0 & 0 \\ 0 & 0 \\ 0 & 0 \end{bmatrix}.$$

Specifically, for example, a precoding matrix in another precoding matrix group in the second precoding matrix set is composed of any 2 items of the following as precoding vectors (to be multiplied by a power normalization coefficient), and positions of non-zero elements of any two vectors are different:

$$[1 \quad 0 \quad 1 \quad 0 \quad 0 \quad 0 \quad 0 \quad 0]^T, [1 \quad 0 \quad -1 \quad 0 \quad 0 \quad 0 \quad 0 \quad 0]^T,$$

$$[1 \quad 0 \quad j \quad 0 \quad 0 \quad 0 \quad 0 \quad 0]^T, [1 \quad 0 \quad -j \quad 0 \quad 0 \quad 0 \quad 0 \quad 0]^T,$$

$$[0 \quad 1 \quad 0 \quad 1 \quad 0 \quad 0 \quad 0 \quad 0]^T, [0 \quad 1 \quad 0 \quad -1 \quad 0 \quad 0 \quad 0 \quad 0]^T,$$

$$[0 \quad 1 \quad 0 \quad j \quad 0 \quad 0 \quad 0 \quad 0]^T, [0 \quad 1 \quad 0 \quad -j \quad 0 \quad 0 \quad 0 \quad 0]^T,$$

$$[0 \quad 0 \quad 0 \quad 0 \quad 1 \quad 0 \quad 1 \quad 0]^T, [0 \quad 0 \quad 0 \quad 0 \quad 1 \quad 0 \quad -1 \quad 0]^T,$$

$$[0 \quad 0 \quad 0 \quad 0 \quad 1 \quad 0 \quad j \quad 0]^T, [0 \quad 0 \quad 0 \quad 0 \quad 1 \quad 0 \quad -j \quad 0]^T,$$

$$[0 \quad 0 \quad 0 \quad 0 \quad 0 \quad 1 \quad 0 \quad 1]^T, [0 \quad 0 \quad 0 \quad 0 \quad 0 \quad 1 \quad 0 \quad -1]^T,$$

$$[0 \quad 0 \quad 0 \quad 0 \quad 0 \quad 1 \quad 0 \quad j]^T, [0 \quad 0 \quad 0 \quad 0 \quad 0 \quad 1 \quad 0 \quad -j]^T.$$

In some embodiments, precoding vector power normalization is performed on the precoding matrices in the second precoding matrix set, that is, the precoding matrices in the second precoding matrix set are multiplied by a power normalization coefficient, which may be $\dfrac{1}{\sqrt{P_8}}$, e.g.

$$\frac{1}{\sqrt{P_8}} = 1/2.$$

In some embodiments, the at least one precoding matrix set includes a third precoding matrix set.

The number of transmission layers corresponding to each precoding matrix in the third precoding matrix set is 3 (i.e., rank=3), the each precoding matrix in the third precoding matrix set is a combination of any three precoding matrices with numbers of transmission layers being 1, or the each precoding matrix in the third precoding matrix set is a combination, satisfying a second condition, of three precoding matrices in precoding matrices with numbers of transmission layers being 1.

Specifically, the second condition is that precoding matrix with the number of transmission layers being 3 supports coherent transmission of 2 ports or 6 ports; or the second condition is that precoding matrix with the number of transmission layers being 3 supports coherent transmission of one antenna port group or three antenna port groups.

In some embodiments, precoding matrices in the third precoding matrix set correspond to third antenna port power information of the terminal device; the third antenna port power information includes that the terminal device contains two coherent ports with half-power transmission capability, or the third antenna port power information includes that the terminal device contains six coherent ports with half-power transmission capability.

In some embodiments, the precoding matrices in the third precoding matrix set are divided into two groups.

In one precoding matrix group in the third precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group.

In another precoding matrix set in the third precoding matrix set, the terminal device contains 6 coherent ports with half-power transmission capability, or precoding matrix(matrices) support(s) coherent transmission of 6 ports, or the precoding matrix(matrices) support(s) coherent transmission of 3 antenna port groups.

Specifically, for example, a precoding matrix in one precoding matrix group in the third precoding matrix set is composed of any 3 items of the following as a precoding vectors (to be multiplied by a power normalization coefficient):

$$[1 \ 0 \ 0 \ 0 \ 0 \ 0 \ 0 \ 0]^T, [0 \ 1 \ 0 \ 0 \ 0 \ 0 \ 0 \ 0]^T,$$

$$[0 \ 0 \ 1 \ 0 \ 0 \ 0 \ 0 \ 0]^T, [0 \ 0 \ 0 \ 1 \ 0 \ 0 \ 0 \ 0]^T,$$

$$[0 \ 0 \ 0 \ 0 \ 1 \ 0 \ 0 \ 0]^T, [0 \ 0 \ 0 \ 0 \ 0 \ 1 \ 0 \ 0]^T,$$

$$[0 \ 0 \ 0 \ 0 \ 0 \ 0 \ 1 \ 0]^T, [0 \ 0 \ 0 \ 0 \ 0 \ 0 \ 0 \ 1]^T.$$

For example, a precoding matrix in one precoding matrix group in the third precoding matrix set is

$$\begin{bmatrix} 1 & 0 & 0 \\ 0 & 1 & 0 \\ 0 & 0 & 1 \\ 0 & 0 & 0 \\ 0 & 0 & 0 \\ 0 & 0 & 0 \\ 0 & 0 & 0 \\ 0 & 0 & 0 \end{bmatrix}.$$

Specifically, for example, a precoding matrix in another precoding matrix group in the third precoding matrix set is composed of any 3 items of the following as precoding vectors (to be multiplied by a power normalization coefficient), and positions of non-zero elements of any two vectors are different:

$$[1 \ 0 \ 1 \ 0 \ 0 \ 0 \ 0 \ 0]^T, [1 \ 0 \ -1 \ 0 \ 0 \ 0 \ 0 \ 0]^T,$$

$$[1 \ 0 \ j \ 0 \ 0 \ 0 \ 0 \ 0]^T, [1 \ 0 \ -j \ 0 \ 0 \ 0 \ 0 \ 0]^T,$$

$$[0 \ 1 \ 0 \ 1 \ 0 \ 0 \ 0 \ 0]^T, [0 \ 1 \ 0 \ -1 \ 0 \ 0 \ 0 \ 0]^T,$$

$$[0 \ 1 \ 0 \ j \ 0 \ 0 \ 0 \ 0]^T, [0 \ 1 \ 0 \ -j \ 0 \ 0 \ 0 \ 0]^T,$$

$$[0 \ 0 \ 0 \ 0 \ 1 \ 0 \ 1 \ 0]^T, [0 \ 0 \ 0 \ 0 \ 1 \ 0 \ -1 \ 0]^T,$$

$$[0 \ 0 \ 0 \ 0 \ 1 \ 0 \ j \ 0]^T, [0 \ 0 \ 0 \ 0 \ 1 \ 0 \ -j \ 0]^T,$$

$$[0 \ 0 \ 0 \ 0 \ 0 \ 1 \ 0 \ 1]^T, [0 \ 0 \ 0 \ 0 \ 0 \ 1 \ 0 \ -1]^T,$$

$$[0 \ 0 \ 0 \ 0 \ 0 \ 1 \ 0 \ j]^T, [0 \ 0 \ 0 \ 0 \ 0 \ 1 \ 0 \ -j]^T.$$

In some embodiments, precoding vector power normalization is performed on the precoding matrices in the third precoding matrix set, i.e. the precoding matrices are multiplied by a power normalization coefficient, which may be $\frac{1}{\sqrt{P_9}}$, e.g. $\frac{1}{\sqrt{P_9}} = 1/2$.

In some embodiments, the at least one precoding matrix set includes a fourth precoding matrix set.

The number of transmission layers corresponding to each precoding matrix in the fourth precoding matrix set is 4 (i.e., rank=4), and the each precoding matrix in the fourth precoding matrix set is a combination of any four precoding matrices with numbers of transmission layers being 1, or the each precoding matrix in the fourth precoding matrix set is a combination, satisfying a third condition, of four precoding matrices in precoding matrices with numbers of transmission layers being 1;

Specifically, the third condition is that precoding matrix with the number of transmission layers being 4 supports coherent transmission of 4 ports; or the third condition is that precoding matrix with the number of transmission layers being 3 supports coherent transmission of 2 antenna port groups.

In some embodiments, precoding matrices in the fourth precoding matrix set correspond to fourth antenna port power information of the terminal device; the fourth antenna port power information includes that the terminal device contains four coherent ports with half-power transmission capability.

In an implementation, in the fourth precoding matrix set, the terminal device contains 4 coherent ports with half-power transmission capability, or precoding matrix(matrices) may support coherent transmission of 4 ports, or precoding matrix(matrices) may support coherent transmission of 2 antenna port groups.

Specifically, for example, a precoding matrix in the fourth precoding matrix set is composed of any 4 items of the following as precoding vectors (to be multiplied by a power normalization coefficient):

$$[1 \ 0 \ 0 \ 0 \ 0 \ 0 \ 0 \ 0]^T, [0 \ 1 \ 0 \ 0 \ 0 \ 0 \ 0 \ 0]^T,$$

$$[0 \ 0 \ 1 \ 0 \ 0 \ 0 \ 0 \ 0]^T, [0 \ 0 \ 0 \ 1 \ 0 \ 0 \ 0 \ 0]^T,$$

$$[0 \ 0 \ 0 \ 0 \ 1 \ 0 \ 0 \ 0]^T, [0 \ 0 \ 0 \ 0 \ 0 \ 1 \ 0 \ 0]^T,$$

$$[0 \ 0 \ 0 \ 0 \ 0 \ 0 \ 1 \ 0]^T, [0 \ 0 \ 0 \ 0 \ 0 \ 0 \ 0 \ 1]^T.$$

For example, a precoding matrix in one precoding matrix group in the fourth precoding matrix set is

$$\begin{bmatrix} 1 & 0 & 0 & 0 \\ 0 & 1 & 0 & 0 \\ 0 & 0 & 1 & 0 \\ 0 & 0 & 0 & 1 \\ 0 & 0 & 0 & 0 \\ 0 & 0 & 0 & 0 \\ 0 & 0 & 0 & 0 \\ 0 & 0 & 0 & 0 \end{bmatrix}.$$

Optionally, precoding vector power normalization is performed on the precoding matrices in the fourth precoding matrix set, that is, the precoding matrices are multiplied by a power normalization coefficient, which may be $\frac{1}{\sqrt{P_{10}}}$ , e.g. $\frac{1}{\sqrt{P_{10}}} = 1/2$ .

In some embodiments, the at least one precoding matrix set includes a fifth precoding matrix set.

The number of transmission layers corresponding to each precoding matrix in the fifth precoding matrix set is 5 (i.e., rank=5), the each precoding matrix in the fifth precoding matrix set is a combination of any five precoding matrices with numbers of transmission layers being 1, or the each precoding matrix in the fifth precoding matrix set is a combination, satisfying a fourth condition, of five precoding matrices in precoding matrices with numbers of transmission layers being 1.

Specifically, the fourth condition is that precoding matrix with the number of transmission layers being 5 supports coherent transmission of 4 ports; or the fourth condition is that precoding matrix with the number of transmission layers being 5 supports coherent transmission of 2 antenna port groups.

In some embodiments, precoding matrices in the fifth precoding matrix set correspond to fifth antenna port power information of the terminal device; the fifth antenna port power information includes that the terminal device contains fifth coherent ports with half-power transmission capability.

In some embodiments, in the fifth precoding matrix set, the terminal device contains 5 coherent ports with half-power transmission capability, or precoding matrix(matrices) may support coherent transmission of 4 ports, or precoding matrix(matrices) may support coherent transmission of 2 antenna port groups.

Specifically, for example, a precoding matrix in the fifth precoding matrix set is composed of any 5 items of the following as precoding vectors (to be multiplied by a power normalization coefficient):

$$[1 \quad 0 \quad 0 \quad 0 \quad 0 \quad 0 \quad 0 \quad 0]^{T}, [0 \quad 1 \quad 0 \quad 0 \quad 0 \quad 0 \quad 0 \quad 0]^{T},$$

$$[0 \quad 0 \quad 1 \quad 0 \quad 0 \quad 0 \quad 0 \quad 0]^{T}, [0 \quad 0 \quad 0 \quad 1 \quad 0 \quad 0 \quad 0 \quad 0]^{T},$$

$$[0 \quad 0 \quad 0 \quad 0 \quad 1 \quad 0 \quad 0 \quad 0]^{T}, [0 \quad 0 \quad 0 \quad 0 \quad 0 \quad 1 \quad 0 \quad 0]^{T},$$

$$[0 \quad 0 \quad 0 \quad 0 \quad 0 \quad 0 \quad 1 \quad 0]^{T}, [0 \quad 0 \quad 0 \quad 0 \quad 0 \quad 0 \quad 0 \quad 1]^{T}.$$

For example, a precoding matrix in one precoding matrix group in the fifth precoding matrix set is

$$\begin{bmatrix} 1 & 0 & 0 & 0 & 0 \\ 0 & 1 & 0 & 0 & 0 \\ 0 & 0 & 1 & 0 & 0 \\ 0 & 0 & 0 & 1 & 0 \\ 0 & 0 & 0 & 0 & 1 \\ 0 & 0 & 0 & 0 & 0 \\ 0 & 0 & 0 & 0 & 0 \\ 0 & 0 & 0 & 0 & 0 \end{bmatrix}.$$

In some embodiments, precoding vector power normalization is performed on the precoding matrices in the fifth precoding matrix set, that is, the precoding matrices are multiplied by a power normalization coefficient, which may be $\frac{1}{\sqrt{P_{11}}}$, e.g. $\frac{1}{\sqrt{P_{11}}} = 1/2$.

In some embodiments, the at least one precoding matrix set includes a sixth precoding matrix set.

The number of transmission layers corresponding to each precoding matrix in the sixth precoding matrix set is 6 (i.e., rank=6), the each precoding matrix in the sixth precoding matrix set is a combination of any six precoding matrices with numbers of transmission layers being 1, or the each precoding matrix in the sixth precoding matrix set is a combination, satisfying a fifth condition, of six precoding matrices in precoding matrices with number of transmission layers being 1.

Specifically, the fifth condition is that precoding matrix with the number of transmission layers being 6 supports coherent transmission of 6 ports; or the fifth condition is that precoding matrix with the number of transmission layers being 6 supports coherent transmission of 3 antenna port groups.

In some embodiments, precoding matrices in the sixth precoding matrix set correspond to sixth antenna port power information of the terminal device; the sixth antenna port power information includes that the terminal device contains sixth coherent ports with half-power transmission capability.

In some embodiments, in the sixth precoding matrix set, the terminal device contains 6 coherent ports with half-power transmission capability, or precoding matrix(matrices) may support coherent transmission of 6 ports, or precoding matrix(matrices) may support coherent transmission of 3 antenna port groups.

Specifically, for example, the precoding matrix in the sixth precoding matrix set is composed of any 6 items of the following as precoding vectors (to be multiplied by a power normalization coefficient):

$$[1 \quad 0 \quad 0 \quad 0 \quad 0 \quad 0 \quad 0 \quad 0]^{T}, [0 \quad 1 \quad 0 \quad 0 \quad 0 \quad 0 \quad 0 \quad 0]^{T},$$

$$[0 \quad 0 \quad 1 \quad 0 \quad 0 \quad 0 \quad 0 \quad 0]^{T}, [0 \quad 0 \quad 0 \quad 1 \quad 0 \quad 0 \quad 0 \quad 0]^{T},$$

$$[0 \quad 0 \quad 0 \quad 0 \quad 1 \quad 0 \quad 0 \quad 0]^{T}, [0 \quad 0 \quad 0 \quad 0 \quad 0 \quad 1 \quad 0 \quad 0]^{T},$$

$$[0 \quad 0 \quad 0 \quad 0 \quad 0 \quad 0 \quad 1 \quad 0]^{T}, [0 \quad 0 \quad 0 \quad 0 \quad 0 \quad 0 \quad 0 \quad 1]^{T}.$$

For example, a precoding matrix in one precoding matrix group in the sixth precoding matrix set is

$$\begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & 1 & 0 & 0 \\ 0 & 0 & 0 & 0 & 1 & 0 \\ 0 & 0 & 0 & 0 & 0 & 1 \\ 0 & 0 & 0 & 0 & 0 & 0 \\ 0 & 0 & 0 & 0 & 0 & 0 \end{bmatrix}.$$

In some embodiments, precoding vector power normalization is performed on the precoding matrices in the sixth precoding matrix set, i.e. the precoding matrices are multiplied by a power normalization coefficient, which may be $\frac{1}{\sqrt{P_{12}}}$, e.g. $\frac{1}{\sqrt{P_{12}}} = 1/2$.

In some embodiments, the at least one precoding matrix set includes a seventh precoding matrix set.

The number of transmission layers corresponding to each precoding matrix in the seventh precoding matrix set is 7 (i.e., rank=7), and the each precoding matrix in the seventh precoding matrix set is a combination of any seven precoding matrices with numbers of transmission layers being 1, or the each precoding matrix in the seventh precoding matrix set is a combination, satisfying a sixth condition, of seven precoding matrices in precoding matrices with numbers of transmission layers being 1.

Specifically, the sixth condition is that precoding matrix with the number of transmission layers being 7 supports coherent transmission of 6 ports; or the sixth condition is that precoding matrix with the number of transmission layers being 7 supports coherent transmission of 3 antenna port groups.

In some embodiments, precoding matrices in the sixth precoding matrix set correspond to seventh antenna port power information of the terminal device; the seventh antenna port power information includes that the terminal device contains sixth coherent ports with half-power transmission capability.

In some embodiments, in the seventh precoding matrix set, the terminal device contains 6 coherent ports with half-power transmission capability, or precoding matrix(matrices) may support coherent transmission of 6 ports, or precoding matrix(matrices) may support coherent transmission of 3 antenna port groups.

Specifically, for, a precoding matrix in the seventh precoding matrix set is composed of any 7 items of the following as precoding vectors (to be multiplied by a power normalization coefficient):

$$[1 \quad 0 \quad 0 \quad 0 \quad 0 \quad 0 \quad 0 \quad 0]^T, [0 \quad 1 \quad 0 \quad 0 \quad 0 \quad 0 \quad 0 \quad 0]^T,$$

$$[0 \quad 0 \quad 1 \quad 0 \quad 0 \quad 0 \quad 0 \quad 0]^T, [0 \quad 0 \quad 0 \quad 1 \quad 0 \quad 0 \quad 0 \quad 0]^T,$$

$$[0 \quad 0 \quad 0 \quad 0 \quad 1 \quad 0 \quad 0 \quad 0]^T, [0 \quad 0 \quad 0 \quad 0 \quad 0 \quad 1 \quad 0 \quad 0]^T,$$

$$[0 \quad 0 \quad 0 \quad 0 \quad 0 \quad 0 \quad 1 \quad 0]^T, [0 \quad 0 \quad 0 \quad 0 \quad 0 \quad 0 \quad 0 \quad 1]^T.$$

For example, a precoding matrix in one precoding matrix group in the seventh precoding matrix set is

$$\begin{bmatrix} 1 & 0 & 0 & 0 & 0 & 0 & 0 \\ 0 & 1 & 0 & 0 & 0 & 0 & 0 \\ 0 & 0 & 1 & 0 & 0 & 0 & 0 \\ 0 & 0 & 0 & 1 & 0 & 0 & 0 \\ 0 & 0 & 0 & 0 & 1 & 0 & 0 \\ 0 & 0 & 0 & 0 & 0 & 1 & 0 \\ 0 & 0 & 0 & 0 & 0 & 0 & 1 \\ 0 & 0 & 0 & 0 & 0 & 0 & 0 \end{bmatrix}.$$

In some embodiments, precoding vector power normalization is performed on the precoding matrices in the seventh precoding matrix set, i.e. the precoding matrices are multiplied by a power normalization coefficient, which may be $\frac{1}{\sqrt{P_{13}}}$, e.g. $\frac{1}{\sqrt{P_{13}}} = 1/2$.

In some embodiments, the at least one precoding matrix set includes an eighth precoding matrix set.

The number of transmission layers corresponding to each precoding matrix in the eighth precoding matrix set is 1 (i.e., rank=1), and the each precoding matrix in the eighth precoding matrix set supports coherent transmission of 4 antenna ports.

In some embodiments, in the eighth precoding matrix set, the terminal device contains 4 coherent ports with half-power transmission capability, or precoding matrix(matrices) support coherent transmission of 4 ports, or precoding matrix(matrices) support coherent transmission of 2 antenna port groups.

In some embodiments, the at least one precoding matrix set includes a ninth precoding matrix set.

The number of transmission layers corresponding to each precoding matrix in the ninth precoding matrix set is 1 (i.e., rank=1), and the each precoding matrix in the ninth precoding matrix set supports coherent transmission of 6 antenna ports.

In some embodiments, in the ninth precoding matrix set, the terminal device contains 6 coherent ports with half-power transmission capability, or precoding matrix(matrices) support coherent transmission of 6 ports, or precoding matrix(matrices) support coherent transmission of 3 antenna port groups.

Therefore, in the embodiment of the present disclosure, the terminal device may report the precoding capability information to the network device, and the network device may instruct, based on the precoding capability information, the terminal device to send PUSCH using the indicated TPMI, thereby improving the performance of uplink transmission.

The method embodiments of the present disclosure have been described in detail above with reference to FIG. 4, and the apparatus embodiments of the present disclosure have been described in detail below with reference to FIG. 5 to FIG. 9. It should be understood that the apparatus embodiments and the method embodiments correspond to each other, and similar descriptions may refer to the method embodiments.

FIG. 5 illustrates a schematic block diagram of a terminal device 300 according to an embodiment of the present disclosure. As illustrated in FIG. 5, the terminal device 300 includes a communication unit 310 and a processing unit 320.

The communication unit 310 is configured to acquire first information. The first information is used to determine a precoding matrix for transmission of uplink information.

The processing unit 320 is configured to precode the uplink information using the precoding matrix.

The communication unit 310 is further configured to send precoded uplink information.

The first information is determined according to at least one of: codebook subset configuration information, antenna port number information, a maximum number of transmission layers of the uplink information, a waveform used for uplink transmission, first indication information, second indication information and third indication information.

The codebook subset configuration information is used to indicate a codebook subset to which the precoding matrix belongs, the antenna port number information is used to indicate the number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

In some embodiments, the codebook subset configuration information is determined according to first capability information and first antenna information.

The first capability information includes that the terminal device supports a codebook subset for partial coherent transmission.

The first antenna information is used to determine an antenna port group for partial coherent transmission.

In some embodiments, the first antenna information is predefined, or the first antenna information is determined based on antenna capability information reported by the terminal device.

In some embodiments, the number of antenna ports for coherent transmission of the terminal device is $N_1$, where $N_1$ is greater than or equal to 2 and $N_1$ is less than 8. Optionally, in this case, the number of antenna ports which is used by the terminal device to send the uplink information and is indicated by the antenna port number information is 8.

In some embodiments, in a case of $N_1=2$, antenna port indexes corresponding to an antenna port group for coherent transmission determined by the first antenna information include one of the following:

antenna port 1 and antenna port 3;
antenna port 2 and antenna port 4;
antenna port 5 and antenna port 7;
antenna port 6 and antenna port 8;
antenna port 1 and antenna port 2;
antenna port 3 and antenna port 4;
antenna port 5 and antenna port 6;
antenna port 7 and antenna port 8.

In some embodiments, in a case of $N_1$=4, antenna port indexes corresponding to an antenna port group for coherent transmission determined by the first antenna information include one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

In some embodiments, in a case of $N_1$=6, antenna port indexes corresponding to an antenna port group for coherent transmission determined by the first antenna information include one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7 and antenna port 8.

In some embodiments, the number of antenna ports for coherent transmission of the terminal device is $N_2$, where $N_2$ is greater than or equal to 2 and $N_2$ is less than 6. Optionally, in this case, the number of antenna ports which is used by the terminal device to send the uplink information and is indicated by the antenna port number information is 6.

In some embodiments, in a case of $N_2$=2, antenna port indexes corresponding to an antenna port group for coherent transmission determined by the first antenna information include one of the following:

antenna port 1 and antenna port 3;
antenna port 2 and antenna port 4;
antenna port 5 and antenna port 6;
antenna port 1 and antenna port 2;
antenna port 3 and antenna port 5;
antenna port 4 and antenna port 6.

In some embodiments, in a case of $N_2$=3, antenna port indexes corresponding to an antenna port group for coherent transmission determined by the first antenna information include one of the following:

antenna port 1, antenna port 2 and antenna port 3;
antenna port 4, antenna port 5 and antenna port 6;
antenna port 1, antenna port 3 and antenna port 5;
antenna port 2, antenna port 4 and antenna port 6.

In some embodiments, in a case of $N_2$=4, antenna port indexes corresponding to an antenna port group for coherent transmission determined by the first antenna information include one of the following:

antenna port 1, antenna port 2, antenna port 3 and antenna port 4;
antenna port 2, antenna port 3, antenna port 4 and antenna port 5;
antenna port 3, antenna port 4, antenna port 5 and antenna port 6.

In some embodiments, the first antenna information is determined based on first antenna capability information reported by the terminal device. Optionally, in this case, the number of antenna ports which is used by the terminal device to send the uplink information and is indicated by the antenna port number information is 8.

The first antenna capability information is used to indicate one of the following: a first type of antenna port group, a second type of antenna port group, and a third type of antenna port group.

The number of antenna ports for coherent transmission included in the first type of antenna port group is 2, the number of antenna ports for coherent transmission included in the second type of antenna port group is 4, and the number of antenna ports for coherent transmission included in the third type of antenna port group is 6.

In some embodiments, in a case where the first antenna capability information is used to indicate the first type of antenna port group, antenna port indexes corresponding to an antenna port group for coherent transmission determined by the first antenna information include one of the following:

antenna port 1 and antenna port 3;
antenna port 2 and antenna port 4;
antenna port 5 and antenna port 7;

antenna port 6 and antenna port 8;
antenna port 1 and antenna port 2;
antenna port 3 and antenna port 4;
antenna port 5 and antenna port 6;
antenna port 7 and antenna port 8.

In some embodiments, in a case where the first antenna capability information is used to indicate the second type of antenna port group, antenna port indexes corresponding to an antenna port group for coherent transmission determined by the first antenna information include one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

In some embodiments, in a case where the first antenna capability information is used to indicate the third type of antenna port group, antenna port indexes corresponding to an antenna port group for coherent transmission determined by the first antenna information include one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7 and antenna port 8.

In some embodiments, the first antenna information is determined based on second antenna capability information reported by the terminal device. Optionally, in this case, the number of antenna ports which is used by the terminal device to send the uplink information and is indicated by the antenna port number information is 6.

The second antenna capability information is used to indicate one of the following: a fourth type of antenna port group, a fifth type of antenna port group, and a sixth type of antenna port group.

The number of antenna ports for coherent transmission included in the fourth type of antenna port group is 2, the number of antenna ports for coherent transmission included in the fifth type of antenna port group is 3, and the number of antenna ports for coherent transmission included in the sixth type of antenna port group is 4.

In some embodiments, in a case where the second antenna capability information is used to indicate the fourth type of antenna port group, antenna port indexes corresponding to an antenna port group for coherent transmission determined by the first antenna information include one of the following:

antenna port 1 and antenna port 3;
antenna port 2 and antenna port 4;
antenna port 5 and antenna port 6;
antenna port 1 and antenna port 2;
antenna port 3 and antenna port 5;
antenna port 4 and antenna port 6.

In some embodiments, in a case where the second antenna capability information is used to indicate the fifth type of antenna port group, antenna port indexes corresponding to an antenna port group for coherent transmission determined by the first antenna information include one of the following:

antenna port 1, antenna port 2 and antenna port 3;
antenna port 4, antenna port 5 and antenna port 6;
antenna port 1, antenna port 3 and antenna port 5;
antenna port 2, antenna port 4 and antenna port 6.

In some embodiments, in a case where the second antenna capability information is used to indicate the sixth type of antenna port group, antenna port indexes corresponding to an antenna port group for coherent transmission determined by the first antenna information include one of the following:

antenna port 1, antenna port 2, antenna port 3 and antenna port 4;
antenna port 2, antenna port 3, antenna port 4 and antenna port 5;
antenna port 3, antenna port 4, antenna port 5 and antenna port 6.

In some embodiments, the first antenna information is determined based on third antenna capability information reported by the terminal device.

The third antenna capability information is used to indicate one of the following: a seventh type of antenna port group, an eighth type of antenna port group, a ninth type of antenna port group, and a tenth type of antenna port group.

The number of antenna ports for coherent transmission included in the seventh type of antenna port group is 2, the number of antenna ports for coherent transmission included in the eighth type of antenna port group is 3, the number of antenna ports for coherent transmission included in the ninth type of antenna port group is 4, and the number of antenna ports for coherent transmission included in the tenth type of antenna port group is 6.

In some embodiments, the antenna port indexes correspond to element indexes in each column of precoding vectors in the precoding matrix; elements corresponding to element indexes associated with the antenna port indexes are non-zero, and elements corresponding to other element indexes are zero.

In some embodiments, the communication unit 310 is further configured to send precoding capability information before the terminal device acquires the first information.

The precoding capability information is used to indicate at least one transmit precoding matrix indicator (TPMI) supported by the terminal device, and precoding matrix(matrices) corresponding to the at least one TPMI supports the terminal device to perform physical uplink shared channel (PUSCH) full power transmission; or

the precoding capability information is used to indicate a TPMI group supported by the terminal device, and a precoding matrix corresponding to the TPMI group supports the terminal device to perform PUSCH full power transmission.

In some embodiments, the communication unit 310 is further configured to receive second information.

The second information is determined based on the precoding capability information, and the second information is used to instruct the terminal device to send a PUSCH using the indicated TPMI, and the precoding matrix corresponding to the indicated TPMI supports the terminal device to send the PUSCH using full power.

In some embodiments, the precoding capability information is associated with the number of antenna ports of the terminal device and/or first antenna information, herein the first antenna information is used to determine an antenna port group for partial coherent transmission; or

the precoding capability information is associated with antenna port power information of the terminal device, herein the antenna port power information is associated with a radio frequency of the terminal device or a power amplifier of the terminal device.

In some embodiments, the at least one TPMI corresponds to one or more precoding matrices in a target precoding matrix set, or the TPMI group corresponds to one or more precoding matrices in the target precoding matrix set.

Precoding matrix(matrices) in the target precoding matrix set belong(s) to at least one precoding matrix set.

In some embodiments, the at least one precoding matrix set includes a first precoding matrix set.

The number of transmission layers corresponding to each precoding matrix in the first precoding matrix set is 1, the precoding matrix(matrices) in the first precoding matrix set correspond to first antenna port power information of the terminal device, and the first antenna port power information includes that the terminal device contains two coherent ports with half-power transmission capability.

In some embodiments, the at least one precoding matrix set includes a second precoding matrix set.

The number of transmission layers corresponding to each precoding matrix in the second precoding matrix set is 2, the each precoding matrix in the second precoding matrix set is a combination of any two precoding matrices with numbers of transmission layers being 1, or the each precoding matrix in the second precoding matrix set is a combination, satisfying a first condition, of two precoding matrices in precoding matrices with numbers of transmission layers being 1.

The first condition is that precoding matrix with the number of transmission layers being 2 supports coherent transmission of 2 ports or 4 ports; or the first condition is that precoding matrix with the number of transmission layers being 2 supports coherent transmission of one antenna port group or two antenna port groups.

In some embodiments, precoding matrices in the second precoding matrix set correspond to second antenna port power information of the terminal device.

The second antenna port power information includes that the terminal device contains two coherent ports with half-power transmission capability, or the second antenna port power information includes that the terminal device contains four coherent ports with half-power transmission capability.

In some embodiments, the precoding matrices in the second precoding matrix set are divided into two groups.

In one precoding matrix group in the second precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group.

In another precoding matrix group in the second precoding matrix set, the terminal device contains 4 coherent ports with half-power transmission capability, or precoding matrix(matrices) support(s) coherent transmission of 4 ports, or the precoding matrix(matrices) support(s) coherent transmission of 2 antenna port groups.

In some embodiments, the at least one precoding matrix set includes a third precoding matrix set.

The number of transmission layers corresponding to each precoding matrix in the third precoding matrix set is 3, the each precoding matrix in the third precoding matrix set is a combination of any three precoding matrices with numbers of transmission layers being 1, or the each precoding matrix in the third precoding matrix set is a combination, satisfying a second condition, of three precoding matrices in precoding matrices with numbers of transmission layers being 1.

The second condition is that precoding matrix with the number of transmission layers being 3 supports coherent transmission of 2 ports or 6 ports; or the second condition is that precoding matrix with the number of transmission layers being 3 supports coherent transmission of one antenna port group or three antenna port groups.

In some embodiments, the precoding matrices in the third precoding matrix set correspond to third antenna port power information of the terminal device.

The third antenna port power information includes that the terminal device contains two coherent ports with half-power transmission capability, or the third antenna port power information includes that the terminal device contains six coherent ports with half-power transmission capability.

In some embodiments, the precoding matrices in the third precoding matrix set are divided into two groups.

In one precoding matrix group in the third precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group.

In another precoding matrix set in the third precoding matrix set, the terminal device contains 6 coherent ports with half-power transmission capability, or precoding matrix(matrices) support(s) coherent transmission of 6 ports, or the precoding matrix(matrices) support(s) coherent transmission of 3 antenna port groups.

In some embodiments, the at least one precoding matrix set includes a fourth precoding matrix set.

The number of transmission layers corresponding to each precoding matrix in the fourth precoding matrix set is 4, and the each precoding matrix in the fourth precoding matrix set is a combination of any four precoding matrices with numbers of transmission layers being 1, or the each precoding matrix in the fourth precoding matrix set is a combination, satisfying a third condition, of four precoding matrices in precoding matrices with numbers of transmission layers being 1.

The third condition is that precoding matrix with the number of transmission layers being 4 supports coherent transmission of 4 ports; or the third condition is that precoding matrix with the number of transmission layers being 3 supports coherent transmission of 2 antenna port groups.

In some embodiments, the precoding matrix(matrices) in the fourth precoding matrix set correspond(s) to fourth antenna port power information of the terminal device.

The fourth antenna port power information includes that the terminal device contains four coherent ports with half-power transmission capability.

In some embodiments, the at least one precoding matrix set includes a fifth precoding matrix set.

The number of transmission layers corresponding to each precoding matrix in the fifth precoding matrix set is 5, the each precoding matrix in the fifth precoding matrix set is a combination of any five precoding matrices with numbers of transmission layers being 1, or the each precoding matrix in the fifth precoding matrix set is a combination, satisfying a fourth condition, of five precoding matrices in precoding matrices with numbers of transmission layers being 1.

The fourth condition is that precoding matrix with the number of transmission layers being 5 supports coherent transmission of 4 ports; or the fourth condition is that precoding matrix with the number of transmission layers being 5 supports coherent transmission of 2 antenna port groups.

In some embodiments, the precoding matrix(matrices) in the fifth precoding matrix set correspond(s) to fifth antenna port power information of the terminal device.

The fifth antenna port power information includes that the terminal device contains fifth coherent ports with half-power transmission capability.

In some embodiments, the at least one precoding matrix set includes a sixth precoding matrix set.

The number of transmission layers corresponding to each precoding matrix in the sixth precoding matrix set is 6, the each precoding matrix in the sixth precoding matrix set is a combination of any six precoding matrices with numbers of transmission layers being 1, or the each precoding matrix in the sixth precoding matrix set is a combination, satisfying a fifth condition, of six precoding matrices in precoding matrices with number of transmission layers being 1.

The fifth condition is that precoding matrix with the number of transmission layers being 6 supports coherent transmission of 6 ports; or the fifth condition is that precoding matrix with the number of transmission layers being 6 supports coherent transmission of 3 antenna port groups.

In some embodiments, the precoding matrix(matrices) in the sixth precoding matrix set correspond(s) to sixth antenna port power information of the terminal device; and

the sixth antenna port power information includes that the terminal device contains sixth coherent ports with half-power transmission capability.

In some embodiments, the at least one precoding matrix set includes a seventh precoding matrix set.

The number of transmission layers corresponding to each precoding matrix in the seventh precoding matrix set is 7, and the each precoding matrix in the seventh precoding matrix set is a combination of any seven precoding matrices with numbers of transmission layers being 1, or the each precoding matrix in the seventh precoding matrix set is a combination, satisfying a sixth condition, of seven precoding matrices in precoding matrices with numbers of transmission layers being 1.

The sixth condition is that precoding matrix with the number of transmission layers being 7 supports coherent transmission of 6 ports; or the sixth condition is that precoding matrix with the number of transmission layers being 7 supports coherent transmission of 3 antenna port groups.

In some embodiments, the precoding matrix(matrices) in the seventh precoding matrix set correspond(s) to seventh antenna port power information of the terminal device.

The seventh antenna port power information includes that the terminal device contains sixth coherent ports with half-power transmission capability.

In some embodiments, the at least one precoding matrix set includes an eighth precoding matrix set.

The number of transmission layers corresponding to each precoding matrix in the eighth precoding matrix set is 1, and the each precoding matrix in the eighth precoding matrix set supports coherent transmission of 4 antenna ports.

In some embodiments, in the eighth precoding matrix set, the terminal device contains 4 coherent ports with half-power transmission capability, or precoding matrix(matrices) support(s) coherent transmission of 4 ports, or precoding matrix(matrices) support(s) coherent transmission of 2 antenna port groups.

In some embodiments, the at least one precoding matrix set includes a ninth precoding matrix set.

The number of transmission layers corresponding to each precoding matrix in the ninth precoding matrix set is 1, and the each precoding matrix in the ninth precoding matrix set supports coherent transmission of 6 antenna ports.

In some embodiments, in the ninth precoding matrix set, the terminal device contains 6 coherent ports with half-power transmission capability, or precoding matrix(matrices) support(s) coherent transmission of 6 ports, or precoding matrix(matrices) support(s) coherent transmission of 3 antenna port groups.

In some embodiments, the uplink information includes at least one of following: a physical uplink shared channel (PUSCH), and a sounding reference signal (SRS).

In some embodiments, the above mentioned communication unit may be a communication interface or transceiver, or may be an input-output interface of a communication chip or a system-on-chip. The processing unit may be one or more processors.

It should be understood that the terminal device 300 according to the embodiment of the present disclosure may correspond to the terminal device in the method embodiment of the present disclosure, and the above and other operations and/or functions of the individual units in the terminal device 300 are designed to implement the respective flow of the terminal device in the method 200 illustrated in FIG. 4, respectively, which will not be repeated here for the sake of brevity.

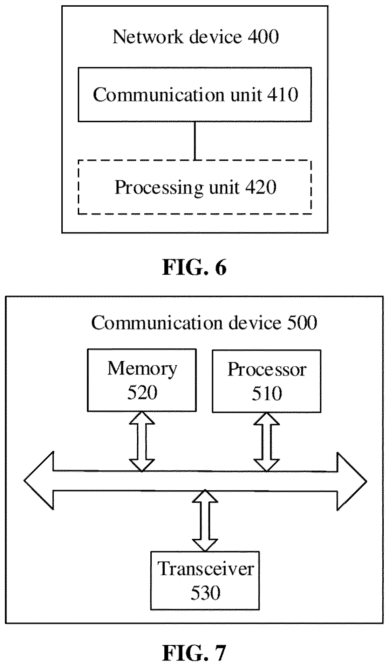

FIG. 6 shows a schematic block diagram of a network device 400 according to an embodiment of the present disclosure. As illustrated in FIG. 6, the network device 400 includes a communication unit 410.

The communication unit 410 is configured to send first information to a terminal device. The first information is used to determine a precoding matrix for transmission of uplink information.

The first information is determined according to at least one of: codebook subset configuration information, antenna port number information, a maximum number of transmission layers of the uplink information, a waveform used for uplink transmission, first indication information, second indication information and third indication information.

The codebook subset configuration information is used to indicate a codebook subset to which the precoding matrix belongs, the antenna port number information is used to indicate the number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

In some embodiments, the network device 400 includes a processing unit 420.

The communication unit 410 is further configured to receive first capability information sent by the terminal device. The first capability information includes that the terminal device supports a codebook subset for partial coherent transmission.

The processing unit 420 is configured to determine the codebook subset configuration information based on the first capability information and first antenna information, herein the first antenna information is used to determine an antenna port group for partial coherent transmission.

In some embodiments, the first antenna information is predefined, or the first antenna information is determined based on antenna capability information reported by the terminal device.

In some embodiments, the number of antenna ports for coherent transmission of the terminal device is $N_1$, where $N_1$ is greater than or equal to 2 and $N_1$ is less than 8. Optionally, in this case, the number of antenna ports which is used by the terminal device to send the uplink information and is indicated by the antenna port number information is 8.

In some embodiments, in a case of Ni=2, antenna port indexes corresponding to an antenna port group for coherent transmission determined by the first antenna information include one of the following:

antenna port 1 and antenna port 3;
antenna port 2 and antenna port 4;
antenna port 5 and antenna port 7;
antenna port 6 and antenna port 8;
antenna port 1 and antenna port 2;
antenna port 3 and antenna port 4;
antenna port 5 and antenna port 6;
antenna port 7 and antenna port 8.

In some embodiments, in a case of Ni=4, antenna port indexes corresponding to an antenna port group for coherent transmission determined by the first antenna information include one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

In some embodiments, in a case of $N_1$=6, antenna port indexes corresponding to an antenna port group for coherent transmission determined by the first antenna information include one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7 and antenna port 8.

In some embodiments, the number of antenna ports for coherent transmission of the terminal device is $N_2$, where $N_2$ is greater than or equal to 2 and $N_2$ is less than 6. Optionally, in this case, the number of antenna ports which is used by the terminal device to send the uplink information and is indicated by the antenna port number information is 6.

In some embodiments, in a case of $N_2$=2, antenna port indexes corresponding to an antenna port group for coherent transmission determined by the first antenna information include one of the following:

antenna port 1 and antenna port 3;
antenna port 2 and antenna port 4;
antenna port 5 and antenna port 6;
antenna port 1 and antenna port 2;
antenna port 3 and antenna port 5;
antenna port 4 and antenna port 6.

In some embodiments, in a case of $N_2$=3, antenna port indexes corresponding to an antenna port group for coherent transmission determined by the first antenna information include one of the following:

antenna port 1, antenna port 2 and antenna port 3;
antenna port 4, antenna port 5 and antenna port 6;
antenna port 1, antenna port 3 and antenna port 5;
antenna port 2, antenna port 4 and antenna port 6.

In some embodiments, in a case of $N_2$=4, antenna port indexes corresponding to an antenna port group for coherent transmission determined by the first antenna information include one of the following:

antenna port 1, antenna port 2, antenna port 3 and antenna port 4;
antenna port 2, antenna port 3, antenna port 4 and antenna port 5;
antenna port 3, antenna port 4, antenna port 5 and antenna port 6.

In some embodiments, the network device 400 includes a processing unit 420.

The communication unit 410 is further configured to receive first antenna capability information sent by the terminal device, herein the first antenna capability information is used to indicate one of the following: a first type of antenna port group, a second type of antenna port group, and a third type of antenna port group; herein the number of antenna ports for coherent transmission included in the first type of antenna port group is 2, the number of antenna ports for coherent transmission included in the second type of antenna port group is 4, and the number of antenna ports for coherent transmission included in the third type of antenna port group is 6.

The processing unit 420 is configured to determine the first antenna information based on the first antenna capability information. Optionally, in this case, the number of antenna ports which is used by the terminal device to send the uplink information and is indicated by the antenna port number information is 8.

In some embodiments, in a case where the first antenna capability information is used to indicate the first type of antenna port group, antenna port indexes corresponding to an antenna port group for coherent transmission determined by the first antenna information include one of the following:

antenna port 1 and antenna port 3;
antenna port 2 and antenna port 4;
antenna port 5 and antenna port 7;
antenna port 6 and antenna port 8;
antenna port 1 and antenna port 2;
antenna port 3 and antenna port 4;
antenna port 5 and antenna port 6;
antenna port 7 and antenna port 8.

In some embodiments, in a case where the first antenna capability information is used to indicate the second type of antenna port group, antenna port indexes corresponding to an antenna port group for coherent transmission determined by the first antenna information include one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

In some embodiments, in a case where the first antenna capability information is used to indicate the third type of antenna port group, antenna port indexes corresponding to an antenna port group for coherent transmission determined by the first antenna information include one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7 and antenna port 8.

In some embodiments, the network device 400 includes a processing unit 420.

The communication unit 410 is further configured to receive second antenna capability information sent by the terminal device, herein the second antenna capability information is used to indicate one of the following: a fourth type of antenna port group, a fifth type of antenna port group, and a sixth type of antenna port group; herein the number of antenna ports for coherent transmission included in the fourth type of antenna port group is 2, the number of antenna ports for coherent transmission included in the fifth type of antenna port group is 3, and the number of antenna ports for coherent transmission included in the sixth type of antenna port group is 4.

When the number of antenna ports which is used by the terminal device to send the uplink information and is indicated by the antenna port number information is 6, the processing unit 420 is configured to determine the first antenna information according to the second antenna capability information.

In some embodiments, in a case where the second antenna capability information is used to indicate the fourth type of antenna port group, antenna port indexes corresponding to an antenna port group for coherent transmission determined by the first antenna information include one of the following:

antenna port 1 and antenna port 3;
antenna port 2 and antenna port 4;
antenna port 5 and antenna port 6;
antenna port 1 and antenna port 2;
antenna port 3 and antenna port 5;
antenna port 4 and antenna port 6.

In some embodiments, in a case where the second antenna capability information is used to indicate the fifth type of antenna port group, antenna port indexes corresponding to an antenna port group for coherent transmission determined by the first antenna information include one of the following:

antenna port 1, antenna port 2 and antenna port 3;
antenna port 4, antenna port 5 and antenna port 6;
antenna port 1, antenna port 3 and antenna port 5;
antenna port 2, antenna port 4 and antenna port 6.

In some embodiments, in a case where the second antenna capability information is used to indicate the sixth type of antenna port group, antenna port indexes corresponding to an antenna port group for coherent transmission determined by the first antenna information include one of the following:

antenna port 1, antenna port 2, antenna port 3 and antenna port 4;
antenna port 2, antenna port 3, antenna port 4 and antenna port 5;
antenna port 3, antenna port 4, antenna port 5 and antenna port 6.

In some embodiments, the network device 400 includes a processing unit 420.

The communication unit 410 is further configured to receive third antenna capability information sent by the terminal device, the third antenna capability information being used to indicate one of the following: a seventh type of antenna port group, an eighth type of antenna port group, a ninth type of antenna port group, and a tenth type of antenna port group; herein the number of antenna ports for coherent transmission included in the seventh type of antenna port group is 2, the number of antenna ports for coherent transmission included in the eighth type of antenna port group is 3, the number of antenna ports for coherent transmission included in the ninth type of antenna port group is 4, and the number of antenna ports for coherent transmission included in the tenth type of antenna port group is 6.

The processing unit 420 is configured to determine the first antenna information based on the third antenna capability information.

In some embodiments, the antenna port indexes correspond to element indexes in each column of precoding vectors in the precoding matrix; elements corresponding to element indexes associated with the antenna port indexes are non-zero, and elements corresponding to other element indexes are zero.

In some embodiments, the communication unit 410 is further configured to receive precoding capability information sent by the terminal device before the network device sends the first information.

The precoding capability information is used to indicate at least one transmit precoding matrix indicator (TPMI) supported by the terminal device, and precoding matrix(matrices) corresponding to the at least one TPMI supports the terminal device to perform physical uplink shared channel (PUSCH) full power transmission; or

the precoding capability information is used to indicate a TPMI group supported by the terminal device, and a precoding matrix corresponding to the TPMI group supports the terminal device to perform PUSCH full power transmission.

In some embodiments, the communication unit 410 is further configured to send second information to the terminal device.

The second information is determined based on the precoding capability information, and the second information is used to instruct the terminal device to send a PUSCH using the indicated TPMI, and the precoding matrix corresponding to the indicated TPMI supports the terminal device to send the PUSCH using full power.

In some embodiments, the precoding capability information is associated with the number of antenna ports of the terminal device and/or first antenna information, herein the first antenna information is used to determine an antenna port group for partial coherent transmission; or

the precoding capability information is associated with antenna port power information of the terminal device, herein the antenna port power information is associated with a radio frequency of the terminal device or a power amplifier of the terminal device.

In some embodiments, the at least one TPMI corresponds to one or more precoding matrices in a target precoding matrix set, or the TPMI group corresponds to one or more precoding matrices in the target precoding matrix set.

Precoding matrix(matrices) in the target precoding matrix set belong(s) to at least one precoding matrix set.

In some embodiments, the at least one precoding matrix set includes a first precoding matrix set.

The number of transmission layers corresponding to each precoding matrix in the first precoding matrix set is 1, the precoding matrix(matrices) in the first precoding matrix set correspond to first antenna port power information of the terminal device, and the first antenna port power information includes that the terminal device contains two coherent ports with half-power transmission capability.

In some embodiments, the at least one precoding matrix set includes a second precoding matrix set.

The number of transmission layers corresponding to each precoding matrix in the second precoding matrix set is 2, the each precoding matrix in the second precoding matrix set is a combination of any two precoding matrices with numbers of transmission layers being 1, or the each precoding matrix in the second precoding matrix set is a combination, satisfying a first condition, of two precoding matrices in precoding matrices with numbers of transmission layers being 1.

The first condition is that precoding matrix with the number of transmission layers being 2 supports coherent transmission of 2 ports or 4 ports; or the first condition is that precoding matrix with the number of transmission layers being 2 supports coherent transmission of one antenna port group or two antenna port groups.

In some embodiments, precoding matrices in the second precoding matrix set correspond to second antenna port power information of the terminal device.

The second antenna port power information includes that the terminal device contains two coherent ports with half-power transmission capability, or the second antenna port power information includes that the terminal device contains four coherent ports with half-power transmission capability.

In some embodiments, the precoding matrices in the second precoding matrix set are divided into two groups.

In one precoding matrix group in the second precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group.

In another precoding matrix group in the second precoding matrix set, the terminal device contains 4 coherent ports with half-power transmission capability, or precoding matrix(matrices) support(s) coherent transmission of 4 ports, or the precoding matrix(matrices) support(s) coherent transmission of 2 antenna port groups.

In some embodiments, the at least one precoding matrix set includes a third precoding matrix set.

The number of transmission layers corresponding to each precoding matrix in the third precoding matrix set is 3, the each precoding matrix in the third precoding matrix set is a combination of any three precoding matrices with numbers of transmission layers being 1, or the each precoding matrix in the third precoding matrix set is a combination, satisfying a second condition, of three precoding matrices in precoding matrices with numbers of transmission layers being 1.

The second condition is that precoding matrix with the number of transmission layers being 3 supports coherent transmission of 2 ports or 6 ports; or the second condition is that precoding matrix with the number of transmission layers being 3 supports coherent transmission of one antenna port group or three antenna port groups.

In some embodiments, the precoding matrices in the third precoding matrix set correspond to third antenna port power information of the terminal device.

The third antenna port power information includes that the terminal device contains two coherent ports with half-power transmission capability, or the third antenna port power information includes that the terminal device contains six coherent ports with half-power transmission capability.

In some embodiments, the precoding matrices in the third precoding matrix set are divided into two groups.

In one precoding matrix group in the third precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group.

In another precoding matrix set in the third precoding matrix set, the terminal device contains 6 coherent ports with half-power transmission capability, or precoding matrix(matrices) support(s) coherent transmission of 6 ports, or the precoding matrix(matrices) support(s) coherent transmission of 3 antenna port groups.

In some embodiments, the at least one precoding matrix set includes a fourth precoding matrix set.

The number of transmission layers corresponding to each precoding matrix in the fourth precoding matrix set is 4, and the each precoding matrix in the fourth precoding matrix set is a combination of any four precoding matrices with numbers of transmission layers being 1, or the each precoding matrix in the fourth precoding matrix set is a combination, satisfying a third condition, of four precoding matrices in precoding matrices with numbers of transmission layers being 1.

The third condition is that precoding matrix with the number of transmission layers being 4 supports coherent transmission of 4 ports; or the third condition is that precoding matrix with the number of transmission layers being 3 supports coherent transmission of 2 antenna port groups.

In some embodiments, the precoding matrices in the fourth precoding matrix set correspond to fourth antenna port power information of the terminal device.

The fourth antenna port power information includes that the terminal device contains four coherent ports with half-power transmission capability.

In some embodiments, the at least one precoding matrix set includes a fifth precoding matrix set.

The number of transmission layers corresponding to each precoding matrix in the fifth precoding matrix set is 5, the each precoding matrix in the fifth precoding matrix set is a combination of any five precoding matrices with numbers of transmission layers being 1, or the each precoding matrix in the fifth precoding matrix set is a combination, satisfying a fourth condition, of five precoding matrices in precoding matrices with numbers of transmission layers being 1.

The fourth condition is that precoding matrix with the number of transmission layers being 5 supports coherent transmission of 4 ports; or the fourth condition is that precoding matrix with the number of transmission layers being 5 supports coherent transmission of 2 antenna port groups.

In some embodiments, the precoding matrices in the fifth precoding matrix set correspond to fifth antenna port power information of the terminal device.

The fifth antenna port power information includes that the terminal device contains fifth coherent ports with half-power transmission capability.

In some embodiments, the at least one precoding matrix set includes a sixth precoding matrix set.

The number of transmission layers corresponding to each precoding matrix in the sixth precoding matrix set is 6, the each precoding matrix in the sixth precoding matrix set is a combination of any six precoding matrices with numbers of transmission layers being 1, or the each precoding matrix in the sixth precoding matrix set is a combination, satisfying a fifth condition, of six precoding matrices in precoding matrices with number of transmission layers being 1.

The fifth condition is that precoding matrix with the number of transmission layers being 6 supports coherent transmission of 6 ports; or the fifth condition is that precoding matrix with the number of transmission layers being 6 supports coherent transmission of 3 antenna port groups.

In some embodiments, the precoding matrices in the sixth precoding matrix set correspond to sixth antenna port power information of the terminal device.

The sixth antenna port power information includes that the terminal device contains sixth coherent ports with half-power transmission capability.

In some embodiments, the at least one precoding matrix set includes a seventh precoding matrix set.

The number of transmission layers corresponding to each precoding matrix in the seventh precoding matrix set is 7, and the each precoding matrix in the seventh precoding matrix set is a combination of any seven precoding matrices with numbers of transmission layers being 1, or the each precoding matrix in the seventh precoding matrix set is a combination of seven precoding matrices satisfying a sixth condition in precoding matrices with numbers of transmission layers being 1.

The sixth condition is that precoding matrix with the number of transmission layers being 7 supports coherent transmission of 6 ports; or the sixth condition is that precoding matrix with the number of transmission layers being 7 supports coherent transmission of 3 antenna port groups.

In some embodiments, the precoding matrices in the seventh precoding matrix set correspond to seventh antenna port power information of the terminal device.

The seventh antenna port power information includes that the terminal device contains sixth coherent ports with half-power transmission capability.

In some embodiments, the at least one precoding matrix set includes an eighth precoding matrix set.

The number of transmission layers corresponding to each precoding matrix in the eighth precoding matrix set is 1, and the each precoding matrix in the eighth precoding matrix set supports coherent transmission of 4 antenna ports.

In some embodiments, in the eighth precoding matrix set, the terminal device contains 4 coherent ports with half-power transmission capability, or precoding matrix(matrices) support(s) coherent transmission of 4 ports, or precoding matrix(matrices) support(s) coherent transmission of 2 antenna port groups.

In some embodiments, the at least one precoding matrix set includes a ninth precoding matrix set.

The number of transmission layers corresponding to each precoding matrix in the ninth precoding matrix set is 1, and the each precoding matrix in the ninth precoding matrix set supports coherent transmission of 6 antenna ports.

In some embodiments, in the ninth precoding matrix set, the terminal device contains 6 coherent ports with half-power transmission capability, or precoding matrix(matrices) support coherent transmission of 6 ports, or precoding matrix(matrices) support coherent transmission of 3 antenna port groups.

In some embodiments, the uplink information includes at least one of following: a physical uplink shared channel (PUSCH), and a sounding reference signal (SRS).

In some embodiments, the communication unit may be a communication interface or transceiver or an input-output interface of a communication chip or a system-on-chip. The processing unit may be one or more processors.

It should be understood that the network device 400 according to the embodiment of the present disclosure may correspond to the network device in the method embodiment of the present disclosure, and the above and other operations and/or functions of the individual units in the network device 400 are designed to implement the respective flow of the network device in the method 200 illustrated in FIG. 4 respectively, which will not be repeated here for the sake of brevity.

FIG. 7 is a schematic structural diagram of a communication device 500 provided by an embodiment of the present disclosure. The communication device 500 illustrated in FIG. 7 includes a processor 510 that may call and execute a computer program from a memory to implement the method in an embodiment of the present disclosure.

In some embodiments, as illustrated in FIG. 7, the communication device 500 may also include a memory 520. The processor 510 may call and execute a computer program from memory 520 to implement the method in the embodiments of the present disclosure.

The memory 520 may be a separate device independent of the processor 510 or may be integrated in the processor 510.

In some embodiments, as illustrated in FIG. 7, the communication device 500 may also include a transceiver 530. The processor 510 may control the transceiver 530 to communicate with other devices, and in particular send information or data to other devices, or receive information or data sent by other devices.

The transceiver 530 may include a transmitter and a receiver. The transceiver 530 may further include antennas. The number of antennas may be one or more.

In some embodiments, the communication device 500 may be specifically a network device of the embodiments of the present disclosure, and the communication device 500 may implement corresponding processes implemented by the network device in various methods of the embodiments of the present disclosure, which will not be repeated here for the sake of brevity.

In some embodiments, the communication device 500 specifically may be a terminal device of embodiments of the present disclosure, and the communication device 500 may implement corresponding processes implemented by the terminal device in the respective methods of the embodiment of the present disclosure, which will not be repeated here for the sake of brevity.

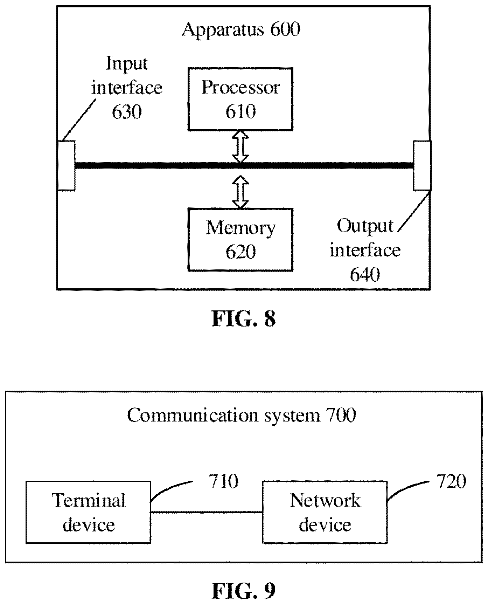

FIG. 8 is a schematic structural diagram of an apparatus according to an embodiment of the present disclosure. The apparatus 600 illustrated in FIG. 8 includes a processor 610 that may call and execute a computer program from memory to implement the method in an embodiment of the present disclosure.

In some embodiments, as illustrated in FIG. 8, the apparatus 600 may also include a memory 620. The processor 610 may call and execute a computer program from memory 620 to implement the method in the embodiments of the present disclosure.

The memory 620 may be a separate device independent of the processor 610 or may be integrated in the processor 610.

In some embodiments, the apparatus 600 may also include an input interface 630. The processor 610 may control the input interface 630 to communicate with other devices or chips, and in particular obtain information or data sent by other devices or chips.

In some embodiments, the apparatus 600 may also include an output interface 640. The processor 610 may control the output interface 640 to communicate with other devices or chips, and in particular output information or data to other devices or chips.

In some embodiments, the apparatus may be applied to be a network device of an embodiment of the present disclosure, and the apparatus may implement corresponding processes implemented by the network device in the respective methods of the embodiment of the present disclosure, which will not be repeated here for the sake of brevity.

In some embodiments, the apparatus may be applied to be a terminal device of an embodiment of the present disclosure, and the apparatus may implement corresponding processes implemented by the terminal device in the respective methods of the embodiment of the present disclosure, which will not be repeated here for the sake of brevity.

In some embodiments, the apparatus mentioned in the embodiment of the present disclosure may also be a chip. It should be understood that the chip referred to in embodiments of the present disclosure may also be referred to as system-level chip, system chip, chip system or system-on-chip or the like.

FIG. 9 is a schematic block diagram of a communication system 700 provided by an embodiment of the present disclosure. As illustrated in FIG. 9, the communication system 700 includes a terminal device 710 and a network device 720.

The terminal device 710 may be configured to implement corresponding functions implemented by the terminal device in the above method, and the network device 720 may be configured to implement corresponding functions implemented by the network device in the above method, which will not be repeated here for the sake of brevity.

It should be understood that the processor may be an integrated circuit chip having signal processing capability. In implementation, the operations of the above method embodiments may be accomplished by integrated logic circuitry of hardware in processor or instructions in the form of software. The processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, operations and logic diagrams disclosed in the embodiments of the present disclosure. The general purpose processor may be a microprocessor or any conventional processor. The operations of the method disclosed in the embodiments of the present disclosure may be directly embodied as being executed by a hardware decoding processor or being executed by the hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the operations of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It should be noted that the memory in the systems and methods described herein is intended to include, but is not limited to, these memories and any other suiTable types of memory.

It should be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suiTable types of memory.

In an embodiment of the present disclosure, there is further provided a computer-readable storage medium, configured to store a computer program.

In some embodiments, the computer readable storage medium may be applied to the network device of the embodiments of the present disclosure, and the computer program causes a computer to implement corresponding processes implemented by the network device in the methods of the embodiments of the present disclosure, which will not be repeated here for the sake of brevity.

In some embodiments, the computer readable storage medium may be applied to the terminal device of the embodiments of the present disclosure, and the computer program causes a computer to implement corresponding processes implemented by the terminal device in the methods of the embodiments of the present disclosure, which will not be repeated here for the sake of brevity.

In an embodiment of the present disclosure, there is further provided a computer program product, which includes computer program instructions.

In some embodiments, the computer program product may be applied to the network device of the embodiments of the present disclosure, and the computer program instructions cause a computer to implement corresponding processes implemented by the network device in the methods of the embodiments of the present disclosure, which will not be repeated here for the sake of brevity.

In some embodiments, the computer program product may be applied to the terminal device of the embodiments of the present disclosure, and the computer program instructions cause a computer to implement corresponding processes implemented by the terminal device in the methods of the embodiments of the present disclosure, which will not be repeated here for the sake of brevity.

In an embodiment of the present disclosure, there is further provided a computer program.

In some embodiments, the computer program may be applied to the network device of the embodiments of the present disclosure, the computer program, when running on a computer, causes the computer to implement corresponding processes implemented by the network device in the methods of the embodiments of the present disclosure, which will not be repeated here for the sake of brevity.

In some embodiments, the computer program may be applied to the terminal device of the embodiments of the present disclosure, the computer program, when running on a computer, causes the computer to implement corresponding processes implemented by the terminal device in the methods of the embodiments of the present disclosure, which will not be repeated here for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it should be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, each functional unit in each embodiment of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure in essence or the part contributing to the prior art or the part of the technical solution may be embodied in the form of a software product, and the computer software product is stored in a storage medium, which includes several instructions so that a computer device (may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

The above is only the specific implementation of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be subject to the scope of protection of the claims.

**Claims**

1. A method for wireless communication, comprising:

   acquiring, by a terminal device, first information, wherein the first information is used to determine a precoding matrix for transmission of uplink information;
   precoding, by the terminal device, the uplink information using the precoding matrix; and
   sending, by the terminal device, precoded uplink information,
   wherein the first information is determined according to at least one of: codebook subset configuration information, antenna port number information, a maximum number of transmission layers of the uplink information, a waveform used for uplink transmission, first indication information, second indication information and third indication information; and
   wherein the codebook subset configuration information is used to indicate a codebook subset to which the precoding matrix belongs, the antenna port number information is used to indicate a number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

2. The method of claim 1, wherein

   the codebook subset configuration information is associated with first capability information and first antenna information;
   wherein the first capability information comprises that the terminal device supports a codebook subset for partial coherent transmission; and
   wherein the first antenna information is used to determine an antenna port group for partial coherent transmission.

3. The method of claim 2, wherein the first antenna information is predefined, or the first antenna information is determined based on antenna capability information reported by the terminal device.

4. The method of claim 2 or 3, wherein
   a number of antenna ports for coherent transmission of the terminal device is $N_1$, wherein $N_1$ is greater than or equal to 2 and $N_1$ is less than 8.

5. The method of claim 4, wherein in a case of $N_1=2$, antenna port indexes corresponding to an antenna port group for coherent transmission determined by the first antenna information comprise one of the following:

   antenna port 1 and antenna port 3;
   antenna port 2 and antenna port 4;
   antenna port 5 and antenna port 7;
   antenna port 6 and antenna port 8;
   antenna port 1 and antenna port 2;
   antenna port 3 and antenna port 4;
   antenna port 5 and antenna port 6;
   antenna port 7 and antenna port 8.

6. The method of claim 4, wherein in a case of $N_1=4$, antenna port indexes corresponding to an antenna port group for coherent transmission determined by the first antenna information comprise one of the following:

> antenna port 1, antenna port 2, antenna port 3 and antenna port 4;
> antenna port 5, antenna port 6, antenna port 7 and antenna port 8;
> antenna port 1, antenna port 3, antenna port 5 and antenna port 7;
> antenna port 2, antenna port 4, antenna port 6 and antenna port 8.

7. The method of claim 4, wherein in a case of $N_1=6$, antenna port indexes corresponding to an antenna port group for coherent transmission determined by the first antenna information comprise one of the following:

> antenna port 1, antenna port 2, antenna port 3, antenna port 4, antenna port 5 and antenna port 6;
> antenna port 2, antenna port 3, antenna port 4, antenna port 5, antenna port 6 and antenna port 7;
> antenna port 3, antenna port 4, antenna port 5, antenna port 6, antenna port 7, and antenna port 8.

8. The method of claim 2 or 3, wherein
a number of antenna ports for coherent transmission of the terminal device is $N_2$, wherein $N_2$ is greater than or equal to 2 and $N_2$ is less than 6.

9. The method of claim 8, wherein in a case of $N_2=2$, antenna port indexes corresponding to an antenna port group for coherent transmission determined by the first antenna information comprises one of the following:

> antenna port 1 and antenna port 3;
> antenna port 2 and antenna port 4;
> antenna port 5 and antenna port 6;
> antenna port 1 and antenna port 2;
> antenna port 3 and antenna port 5;
> antenna port 4 and antenna port 6.

10. The method of claim 8, wherein in a case of $N_2=3$, antenna port indexes corresponding to an antenna port group for coherent transmission determined by the first antenna information comprise one of the following:

> antenna port 1, antenna port 2 and antenna port 3;
> antenna port 4, antenna port 5 and antenna port 6;
> antenna port 1, antenna port 3 and antenna port 5;
> antenna port 2, antenna port 4, and antenna port 6.

11. The method of claim 8, wherein in a case of $N_2=4$, antenna port indexes corresponding to an antenna port group for coherent transmission determined by the first antenna information comprise one of the following:

> antenna port 1, antenna port 2, antenna port 3 and antenna port 4;
> antenna port 2, antenna port 3, antenna port 4 and antenna port 5;
> antenna port 3, antenna port 4, antenna port 5 and antenna port 6.

12. The method of claim 2 or 3, wherein

> the first antenna information is determined based on first antenna capability information reported by the terminal device;
> wherein the first antenna capability information is used to indicate one of the following: a first type of antenna port group, a second type of antenna port group, and a third type of antenna port group; and
> wherein a number of antenna ports for coherent transmission comprised in the first type of antenna port group is 2, a number of antenna ports for coherent transmission comprised in the second type of antenna port group is 4, and a number of antenna ports for coherent transmission comprised in the third type of antenna port group is 6.

13. The method of claim 12, wherein
in a case where the first antenna capability information is used to indicate the first type of antenna port group, antenna port indexes corresponding to an antenna port group for coherent transmission determined by the first antenna information comprise one of the following:

antenna port 1 and antenna port 3;
antenna port 2 and antenna port 4;
antenna port 5 and antenna port 7;
antenna port 6 and antenna port 8;
antenna port 1 and antenna port 2;
antenna port 3 and antenna port 4;
antenna port 5 and antenna port 6;
antenna port 7 and antenna port 8.

14. The method of claim 12, wherein
in a case where the first antenna capability information is used to indicate the second type of antenna port group, antenna port indexes corresponding to an antenna port group for coherent transmission determined by the first antenna information comprise one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

15. The method of claim 12, wherein
in a case where the first antenna capability information is used to indicate the third type of antenna port group, antenna port indexes corresponding to an antenna port group for coherent transmission determined by the first antenna information comprise one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7, and antenna port 8.

16. The method of claim 2 or 3, wherein

the first antenna information is determined based on second antenna capability information reported by the terminal device;
wherein the second antenna capability information is used to indicate one of the following: a fourth type of antenna port group, a fifth type of antenna port group, and a sixth type of antenna port group; and
wherein a number of antenna ports for coherent transmission comprised in the fourth type of antenna port group is 2, a number of antenna ports for coherent transmission comprised in the fifth type of antenna port group is 3, and a number of antenna ports for coherent transmission comprised in the sixth type of antenna port group is 4.

17. The method of claim 16, wherein
in a case where the second antenna capability information is used to indicate the fourth type of antenna port group, antenna port indexes corresponding to an antenna port group for coherent transmission determined by the first antenna information comprise one of the following:

antenna port 1 and antenna port 3;
antenna port 2 and antenna port 4;
antenna port 5 and antenna port 6;
antenna port 1 and antenna port 2;
antenna port 3 and antenna port 5;
antenna port 4 and antenna port 6.

18. The method of claim 16, wherein
in a case where the second antenna capability information is used to indicate the fifth type of antenna port group, antenna port indexes corresponding to an antenna port group for coherent transmission determined by the first antenna information comprise one of the following:

antenna port 1, antenna port 2 and antenna port 3;
antenna port 4, antenna port 5 and antenna port 6;
antenna port 1, antenna port 3 and antenna port 5;

antenna port 2, antenna port 4, and antenna port 6.

19. The method of claim 16, wherein
in a case where the second antenna capability information is used to indicate the sixth type of antenna port group, antenna port indexes corresponding to an antenna port group for coherent transmission determined by the first antenna information comprise one of the following:

antenna port 1, antenna port 2, antenna port 3 and antenna port 4;
antenna port 2, antenna port 3, antenna port 4 and antenna port 5;
antenna port 3, antenna port 4, antenna port 5 and antenna port 6.

20. The method of claim 2 or 3, wherein

the first antenna information is determined based on third antenna capability information reported by the terminal device;
wherein the third antenna capability information is used to indicate one of the following: a seventh type of antenna port group, an eighth type of antenna port group, a ninth type of antenna port group, and a tenth type of antenna port group; and
wherein a number of antenna ports for coherent transmission comprised in the seventh type of antenna port group is 2, a number of antenna ports for coherent transmission comprised in the eighth type of antenna port group is 3, a number of antenna ports for coherent transmission comprised in the ninth type of antenna port group is 4, and a number of antenna ports for coherent transmission comprised in the tenth type of antenna port group is 6.

21. The method of claim 5, 6, 7, 9, 10, 11, 13, 14, 15, 17, 18 or 19, wherein
the antenna port indexes correspond to element indexes in each column of precoding vectors in the precoding matrix; elements corresponding to element indexes associated with the antenna port indexes are non-zero, and elements corresponding to other element indexes are zero.

22. The method of any one of claims 1 to 21, wherein before acquiring, by the terminal device, the first information, the method further comprises:

sending, by the terminal device, precoding capability information;
wherein the precoding capability information is used to indicate at least one transmit precoding matrix indicator (TPMI) supported by the terminal device, and precoding matrix(matrices) corresponding to the at least one TPMI supports the terminal device to perform physical uplink shared channel (PUSCH) full power transmission; or the precoding capability information is used to indicate a TPMI group supported by the terminal device, and a precoding matrix corresponding to the TPMI group supports the terminal device to perform PUSCH full power transmission.

23. The method of claim 22, further comprising:

receiving, by the terminal device, second information;
wherein the second information is determined based on the precoding capability information, and the second information is used to instruct the terminal device to send a PUSCH using the indicated TPMI, and the precoding matrix corresponding to the indicated TPMI supports the terminal device to send the PUSCH using full power.

24. The method of claim 22 or 23, wherein

the precoding capability information is associated with the number of antenna ports of the terminal device and/or first antenna information, wherein the first antenna information is used to determine an antenna port group for partial coherent transmission; or
the precoding capability information is associated with antenna port power information of the terminal device, wherein the antenna port power information is associated with a radio frequency of the terminal device or a power amplifier of the terminal device.

25. The method of any one of claims 22 to 24, wherein

the at least one TPMI corresponds to one or more precoding matrices in a target precoding matrix set, or the TPMI group corresponds to one or more precoding matrices in the target precoding matrix set; and

wherein precoding matrix(matrices) in the target precoding matrix set belong(s) to at least one precoding matrix set.

26. The method of claim 25, wherein

the at least one precoding matrix set comprises a first precoding matrix set; and
wherein a number of transmission layers corresponding to each precoding matrix in the first precoding matrix set is 1, the precoding matrix(matrices) in the first precoding matrix set correspond to first antenna port power information of the terminal device, and the first antenna port power information comprises that the terminal device contains two coherent ports with half-power transmission capability.

27. The method of claim 25 or 26, wherein

the at least one precoding matrix set comprises a second precoding matrix set;
wherein a number of transmission layers corresponding to each precoding matrix in the second precoding matrix set is 2, the each precoding matrix in the second precoding matrix set is a combination of any two precoding matrices with numbers of transmission layers being 1, or the each precoding matrix in the second precoding matrix set is a combination, satisfying a first condition, of two precoding matrices in precoding matrices with numbers of transmission layers being 1; and
wherein the first condition is that precoding matrix with a number of transmission layers being 2 supports coherent transmission of 2 ports or 4 ports; or the first condition is that precoding matrix with a number of transmission layers being 2 supports coherent transmission of one antenna port group or two antenna port groups.

28. The method of claim 27, wherein

precoding matrices in the second precoding matrix set correspond to second antenna port power information of the terminal device; and
wherein the second antenna port power information comprises that the terminal device contains two coherent ports with half-power transmission capability, or the second antenna port power information comprises that the terminal device contains four coherent ports with half-power transmission capability.

29. The method of claim 27 or 28, wherein

the precoding matrices in the second precoding matrix set are divided into two groups;
wherein in one precoding matrix group in the second precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group; and
in another precoding matrix group in the second precoding matrix set, the terminal device contains 4 coherent ports with half-power transmission capability, or precoding matrix(matrices) support(s) coherent transmission of 4 ports, or the precoding matrix(matrices) support(s) coherent transmission of 2 antenna port groups.

30. The method of any one of claims 25 to 29, wherein

the at least one precoding matrix set comprises a third precoding matrix set;
wherein a number of transmission layers corresponding to each precoding matrix in the third precoding matrix set is 3, the each precoding matrix in the third precoding matrix set is a combination of any three precoding matrices with numbers of transmission layers being 1, or the each precoding matrix in the third precoding matrix set is a combination, satisfying a second condition, of three precoding matrices in precoding matrices with numbers of transmission layers being 1; and
wherein the second condition is that precoding matrix with a number of transmission layers being 3 supports coherent transmission of 2 ports or 6 ports; or the second condition is that precoding matrix with a number of transmission layers being 3 supports coherent transmission of one antenna port group or three antenna port groups.

31. The method of claim 30, wherein

the precoding matrices in the third precoding matrix set correspond to third antenna port power information of the terminal device; and

wherein the third antenna port power information comprises that the terminal device contains two coherent ports with half-power transmission capability, or the third antenna port power information comprises that the terminal device contains six coherent ports with half-power transmission capability.

32. The method of claim 30 or 31, wherein

the precoding matrices in the third precoding matrix set are divided into two groups;

wherein in one precoding matrix group in the third precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group; and

in another precoding matrix set in the third precoding matrix set, the terminal device contains 6 coherent ports with half-power transmission capability, or precoding matrix(matrices) support(s) coherent transmission of 6 ports, or the precoding matrix(matrices) support(s) coherent transmission of 3 antenna port groups.

33. The method of any one of claims 25 to 32, wherein

the at least one precoding matrix set comprises a fourth precoding matrix set;

wherein a number of transmission layers corresponding to each precoding matrix in the fourth precoding matrix set is 4, and the each precoding matrix in the fourth precoding matrix set is a combination of any four precoding matrices with numbers of transmission layers being 1, or the each precoding matrix in the fourth precoding matrix set is a combination, satisfying a third condition, of four precoding matrices in precoding matrices with numbers of transmission layers being 1; and

wherein the third condition is that precoding matrix with a number of transmission layers being 4 supports coherent transmission of 4 ports; or the third condition is that precoding matrix with a number of transmission layers being 3 supports coherent transmission of 2 antenna port groups.

34. The method of claim 33, wherein

precoding matrix(matrices) in the fourth precoding matrix set correspond(s) to fourth antenna port power information of the terminal device; and

wherein the fourth antenna port power information comprises that the terminal device contains four coherent ports with half-power transmission capability.

35. The method of any one of claims 25 to 34, wherein

the at least one precoding matrix set comprises a fifth precoding matrix set;

wherein a number of transmission layers corresponding to each precoding matrix in the fifth precoding matrix set is 5, the each precoding matrix in the fifth precoding matrix set is a combination of any five precoding matrices with numbers of transmission layers being 1, or the each precoding matrix in the fifth precoding matrix set is a combination, satisfying a fourth condition, of five precoding matrices in precoding matrices with numbers of transmission layers being 1; and

wherein the fourth condition is that precoding matrix with a number of transmission layers being 5 supports coherent transmission of 4 ports; or the fourth condition is that precoding matrix with a number of transmission layers being 5 supports coherent transmission of 2 antenna port groups.

36. The method of claim 35, wherein

precoding matrix(matrices) in the fifth precoding matrix set correspond(s) to fifth antenna port power information of the terminal device; and

wherein the fifth antenna port power information comprises that the terminal device contains five coherent ports with half-power transmission capability.

37. The method of any one of claims 25 to 36, wherein

the at least one precoding matrix set comprises a sixth precoding matrix set;

wherein a number of transmission layers corresponding to each precoding matrix in the sixth precoding matrix set is 6, the each precoding matrix in the sixth precoding matrix set is a combination of any six precoding matrices with numbers of transmission layers being 1, or the each precoding matrix in the sixth precoding matrix set is a combination, satisfying a fifth condition, of six precoding matrices n in precoding matrices with number of transmission layers being 1; and

wherein the fifth condition is that precoding matrix with a number of transmission layers being 6 supports coherent transmission of 6 ports; or the fifth condition is that precoding matrix with a number of transmission layers being 6 supports coherent transmission of 3 antenna port groups.

38. The method of claim 37, wherein

precoding matrix(matrices) in the sixth precoding matrix set correspond(s) to sixth antenna port power information of the terminal device; and

wherein the sixth antenna port power information comprises that the terminal device contains six coherent ports with half-power transmission capability.

39. The method of any one of claims 25 to 38, wherein

the at least one precoding matrix set comprises a seventh precoding matrix set;

wherein a number of transmission layers corresponding to each precoding matrix in the seventh precoding matrix set is 7, the each precoding matrix in the seventh precoding matrix set is a combination of any seven precoding matrices with numbers of transmission layers being 1, or the each precoding matrix in the seventh precoding matrix set is a combination, satisfying a sixth condition, of seven precoding matrices in precoding matrices with numbers of transmission layers being 1; and

wherein the sixth condition is that precoding matrix with a number of transmission layers being 7 supports coherent transmission of 6 ports; or the sixth condition is that precoding matrix with a number of transmission layers being 7 supports coherent transmission of 3 antenna port groups.

40. The method of claim 39, wherein

precoding matrix(matrices) in the seventh precoding matrix set correspond(s) to seventh antenna port power information of the terminal device; and

wherein the seventh antenna port power information comprises that the terminal device contains six coherent ports with half-power transmission capability.

41. The method of any one of claims 25 to 40, wherein

the at least one precoding matrix set comprises an eighth precoding matrix set; and

wherein a number of transmission layers corresponding to each precoding matrix in the eighth precoding matrix set is 1, and the each precoding matrix in the eighth precoding matrix set supports coherent transmission of 4 antenna ports.

42. The method of claim 41, wherein

in the eighth precoding matrix set, the terminal device contains 4 coherent ports with half-power transmission capability, or precoding matrix(matrices) support(s) coherent transmission of 4 ports, or precoding matrix(matrices) support(s) coherent transmission of 2 antenna port groups.

43. The method of any one of claims 25 to 42, wherein

the at least one precoding matrix set comprises a ninth precoding matrix set; and

wherein a number of transmission layers corresponding to each precoding matrix in the ninth precoding matrix set is 1, and the each precoding matrix in the ninth precoding matrix set supports coherent transmission of 6 antenna ports.

44. The method of claim 43, wherein

in the ninth precoding matrix set, the terminal device contains 6 coherent ports with half-power transmission capability, or precoding matrix(matrices) support(s) coherent transmission of 6 ports, or precoding matrix(matrices) support(s) coherent transmission of 3 antenna port groups.

45. The method of any one of claims 1 to 44, wherein the uplink information comprises at least one of the following:

a physical uplink shared channel (PUSCH), and a sounding reference signal (SRS).

**46.** A method for wireless communication, comprising:

sending, by a network device, first information to a terminal device, wherein the first information is used to determine a precoding matrix for transmission of uplink information;

wherein the first information is determined according to at least one of: codebook subset configuration information, antenna port number information, a maximum number of transmission layers of the uplink information, a waveform used for uplink transmission, first indication information, second indication information and third indication information; and

wherein the codebook subset configuration information is used to indicate a codebook subset to which the precoding matrix belongs, the antenna port number information is used to indicate a number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

**47.** The method of claim 46, further comprising:

receiving, by the network device, first capability information sent by the terminal device, wherein the first capability information comprises that the terminal device supports a codebook subset for partial coherent transmission; and

determining, by the network device, the codebook subset configuration information based on the first capability information and first antenna information, wherein the first antenna information is used to determine an antenna port group for partial coherent transmission.

**48.** The method of claim 47, wherein the first antenna information is predefined, or the first antenna information is determined based on antenna capability information reported by the terminal device.

**49.** The method of claim 47 or 48, wherein

a number of antenna ports for coherent transmission of the terminal device is $N_1$, wherein $N_1$ is greater than or equal to 2 and $N_1$ is less than 8.

**50.** The method of claim 49, wherein in a case of $N_1=2$, antenna port indexes corresponding to an antenna port group for coherent transmission determined by the first antenna information comprise one of the following:

antenna port 1 and antenna port 3;
antenna port 2 and antenna port 4;
antenna port 5 and antenna port 7;
antenna port 6 and antenna port 8;
antenna port 1 and antenna port 2;
antenna port 3 and antenna port 4;
antenna port 5 and antenna port 6;
antenna port 7 and antenna port 8.

**51.** The method of claim 49, wherein in a case of $N_1=4$, antenna port indexes corresponding to an antenna port group for coherent transmission determined by the first antenna information comprise one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

**52.** The method of claim 49, wherein in a case of $N_1=6$, antenna port indexes corresponding to an antenna port group for coherent transmission determined by the first antenna information comprise one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7, and antenna port 8.

53. The method of claim 47 or 48, wherein
a number of antenna ports for coherent transmission of the terminal device is $N_2$, wherein $N_2$ is greater than or equal to 2 and $N_2$ is less than 6.

54. The method of claim 53, wherein in a case of $N_2=2$, antenna port indexes corresponding to an antenna port group for coherent transmission determined by the first antenna information comprises one of the following:

   antenna port 1 and antenna port 3;
   antenna port 2 and antenna port 4;
   antenna port 5 and antenna port 6;
   antenna port 1 and antenna port 2;
   antenna port 3 and antenna port 5;
   antenna port 4 and antenna port 6.

55. The method of claim 53, wherein in a case of $N_2=3$, antenna port indexes corresponding to an antenna port group for coherent transmission determined by the first antenna information comprise one of the following:

   antenna port 1, antenna port 2 and antenna port 3;
   antenna port 4, antenna port 5 and antenna port 6;
   antenna port 1, antenna port 3 and antenna port 5;
   antenna port 2, antenna port 4, and antenna port 6.

56. The method of claim 53, wherein in a case of $N_2=4$, antenna port indexes corresponding to an antenna port group for coherent transmission determined by the first antenna information comprise one of the following:

   antenna port 1, antenna port 2, antenna port 3 and antenna port 4;
   antenna port 2, antenna port 3, antenna port 4 and antenna port 5;
   antenna port 3, antenna port 4, antenna port 5 and antenna port 6.

57. The method of claim 47 or 48, further comprising:

   receiving, by the network device, first antenna capability information sent by the terminal device, wherein the first antenna capability information is used to indicate one of the following: a first type of antenna port group, a second type of antenna port group, and a third type of antenna port group; wherein a number of antenna ports for coherent transmission comprised in the first type of antenna port group is 2, a number of antenna ports for coherent transmission comprised in the second type of antenna port group is 4, and a number of antenna ports for coherent transmission comprised in the third type of antenna port group is 6;
   determining, by the network device, the first antenna information according to the first antenna capability information.

58. The method of claim 57, wherein
in a case where the first antenna capability information is used to indicate the first type of antenna port group, antenna port indexes corresponding to an antenna port group for coherent transmission determined by the first antenna information comprise one of the following:

   antenna port 1 and antenna port 3;
   antenna port 2 and antenna port 4;
   antenna port 5 and antenna port 7;
   antenna port 6 and antenna port 8;
   antenna port 1 and antenna port 2;
   antenna port 3 and antenna port 4;
   antenna port 5 and antenna port 6;
   antenna port 7 and antenna port 8.

59. The method of claim 57, wherein
in a case where the first antenna capability information is used to indicate the second type of antenna port group, antenna port indexes corresponding to an antenna port group for coherent transmission determined by the first antenna information comprise one of the following:

antenna port 1, antenna port 2, antenna port 3 and antenna port 4;
antenna port 5, antenna port 6, antenna port 7 and antenna port 8;
antenna port 1, antenna port 3, antenna port 5 and antenna port 7;
antenna port 2, antenna port 4, antenna port 6 and antenna port 8.

60. The method of claim 57, wherein
in a case where the first antenna capability information is used to indicate the third type of antenna port group, antenna port indexes corresponding to an antenna port group for coherent transmission determined by the first antenna information comprise one of the following:

antenna port 1, antenna port 2, antenna port 3, antenna port 4, antenna port 5 and antenna port 6;
antenna port 2, antenna port 3, antenna port 4, antenna port 5, antenna port 6 and antenna port 7;
antenna port 3, antenna port 4, antenna port 5, antenna port 6, antenna port 7, and antenna port 8.

61. The method of claim 47 or 48, further comprising:

receiving, by the network device, second antenna capability information sent by the terminal device, wherein the second antenna capability information is used to indicate one of the following: a fourth type of antenna port group, a fifth type of antenna port group, and a sixth type of antenna port group; wherein a number of antenna ports for coherent transmission comprised in the fourth type of antenna port group is 2, a number of antenna ports for coherent transmission comprised in the fifth type of antenna port group is 3, and a number of antenna ports for coherent transmission comprised in the sixth type of antenna port group is 4; and
determining, by the network device, the first antenna information according to the second antenna capability information.

62. The method of claim 61, wherein
in a case where the second antenna capability information is used to indicate the fourth type of antenna port group, antenna port indexes corresponding to an antenna port group for coherent transmission determined by the first antenna information comprise one of the following:

antenna port 1 and antenna port 3;
antenna port 2 and antenna port 4;
antenna port 5 and antenna port 6;
antenna port 1 and antenna port 2;
antenna port 3 and antenna port 5;
antenna port 4 and antenna port 6.

63. The method of claim 61, wherein
in a case where the second antenna capability information is used to indicate the fifth type of antenna port group, antenna port indexes corresponding to an antenna port group for coherent transmission determined by the first antenna information comprise one of the following:

antenna port 1, antenna port 2 and antenna port 3;
antenna port 4, antenna port 5 and antenna port 6;
antenna port 1, antenna port 3 and antenna port 5;
antenna port 2, antenna port 4, and antenna port 6.

64. The method of claim 61, wherein
in a case where the second antenna capability information is used to indicate the sixth type of antenna port group, antenna port indexes corresponding to an antenna port group for coherent transmission determined by the first antenna information comprise one of the following:

antenna port 1, antenna port 2, antenna port 3 and antenna port 4;
antenna port 2, antenna port 3, antenna port 4 and antenna port 5;
antenna port 3, antenna port 4, antenna port 5 and antenna port 6.

65. The method of claim 47 or 48, further comprising:

receiving, by the network device, third antenna capability information sent by the terminal device, the third antenna capability information being used to indicate one of the following: a seventh type of antenna port group, an eighth type of antenna port group, a ninth type of antenna port group, and a tenth type of antenna port group; wherein a number of antenna ports for coherent transmission comprised in the seventh type of antenna port group is 2, a number of antenna ports for coherent transmission comprised in the eighth type of antenna port group is 3, a number of antenna ports for coherent transmission comprised in the ninth type of antenna port group is 4, and a number of antenna ports for coherent transmission comprised in the tenth type of antenna port group is 6; and determining, by the network device, the first antenna information according to the third antenna capability information.

66. The method of claim 50, 51, 52, 54, 55, 56, 58, 59, 60, 62, 63 or 64, wherein
the antenna port indexes correspond to element indexes in each column of precoding vectors in the precoding matrix; elements corresponding to element indexes associated with the antenna port indexes are non-zero, and elements corresponding to other element indexes are zero.

67. The method of any one of claims 46 to 66, wherein before sending, by the network device, the first information, the method further comprises:

receiving, by the network device, precoding capability information sent by the terminal device;
wherein the precoding capability information is used to indicate at least one transmit precoding matrix indicator (TPMI) supported by the terminal device, and precoding matrix(matrices) corresponding to the at least one TPMI supports the terminal device to perform physical uplink shared channel (PUSCH) full power transmission; or the precoding capability information is used to indicate a TPMI group supported by the terminal device, and a precoding matrix corresponding to the TPMI group supports the terminal device to perform PUSCH full power transmission.

68. The method of claim 67, further comprising:

sending, by the network device, a second information to the terminal device;
wherein the second information is determined based on the precoding capability information, and the second information is used to instruct the terminal device to send a PUSCH using the indicated TPMI, and the precoding matrix corresponding to the indicated TPMI supports the terminal device to send the PUSCH using full power.

69. The method of claim 67 or 68, wherein

the precoding capability information is associated with the number of antenna ports of the terminal device and/or first antenna information, wherein the first antenna information is used to determine an antenna port group for partial coherent transmission; or
the precoding capability information is associated with antenna port power information of the terminal device, wherein the antenna port power information is associated with a radio frequency of the terminal device or a power amplifier of the terminal device.

70. The method of any one of claims 67 to 69, wherein

the at least one TPMI corresponds to one or more precoding matrices in a target precoding matrix set, or the TPMI group corresponds to one or more precoding matrices in the target precoding matrix set; and
wherein precoding matrix(matrices) in the target precoding matrix set belong(s) to at least one precoding matrix set.

71. The method of claim 70, wherein

the at least one precoding matrix set comprises a first precoding matrix set; and
wherein a number of transmission layers corresponding to each precoding matrix in the first precoding matrix set is 1, the precoding matrix(matrices) in the first precoding matrix set correspond to first antenna port power information of the terminal device, and the first antenna port power information comprises that the terminal device contains two coherent ports with half-power transmission capability.

72. The method of claim 70 or 71, wherein

the at least one precoding matrix set comprises a second precoding matrix set;

wherein a number of transmission layers corresponding to each precoding matrix in the second precoding matrix set is 2, the each precoding matrix in the second precoding matrix set is a combination of any two precoding matrices with numbers of transmission layers being 1, or the each precoding matrix in the second precoding matrix set is a combination of two precoding matrices satisfying a first condition in precoding matrices with numbers of transmission layers being 1; and

wherein the first condition is that precoding matrix with a number of transmission layers being 2 supports coherent transmission of 2 ports or 4 ports; or the first condition is that precoding matrix with a number of transmission layers being 2 supports coherent transmission of one antenna port group or two antenna port groups.

73. The method of claim 72, wherein

precoding matrices in the second precoding matrix set correspond to second antenna port power information of the terminal device; and

wherein the second antenna port power information comprises that the terminal device contains two coherent ports with half-power transmission capability, or the second antenna port power information comprises that the terminal device contains four coherent ports with half-power transmission capability.

74. The method of claim 72 or 73, wherein

the precoding matrices in the second precoding matrix set are divided into two groups;

wherein in one precoding matrix group in the second precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group; and

in another precoding matrix group in the second precoding matrix set, the terminal device contains 4 coherent ports with half-power transmission capability, or precoding matrix(matrices) support(s) coherent transmission of 4 ports, or the precoding matrix(matrices) support(s) coherent transmission of 2 antenna port groups.

75. The method of any one of claims 70 to 74, wherein

the at least one precoding matrix set comprises a third precoding matrix set;

wherein a number of transmission layers corresponding to each precoding matrix in the third precoding matrix set is 3, the each precoding matrix in the third precoding matrix set is a combination of any three precoding matrices with numbers of transmission layers being 1, or the each precoding matrix in the third precoding matrix set is a combination, satisfying a second condition, of three precoding matrices in precoding matrices with numbers of transmission layers being 1; and

wherein the second condition is that precoding matrix with a number of transmission layers being 3 supports coherent transmission of 2 ports or 6 ports; or the second condition is that precoding matrix with a number of transmission layers being 3 supports coherent transmission of one antenna port group or three antenna port groups.

76. The method of claim 75, wherein

the precoding matrices in the third precoding matrix set correspond to third antenna port power information of the terminal device; and

wherein the third antenna port power information comprises that the terminal device contains two coherent ports with half-power transmission capability, or the third antenna port power information comprises that the terminal device contains six coherent ports with half-power transmission capability.

77. The method of claim 75 or 76, wherein

the precoding matrices in the third precoding matrix set are divided into two groups;

wherein in one precoding matrix group in the third precoding matrix set, the terminal device contains 2 coherent ports with half-power transmission capability, or precoding matrix(matrices) support(s) coherent transmission of 2 ports, or precoding matrix(matrices) support(s) coherent transmission of 1 antenna port group; and

in another precoding matrix set in the third precoding matrix set, the terminal device contains 6 coherent ports with half-power transmission capability, or precoding matrix(matrices) support(s) coherent transmission of 6 ports, or the precoding matrix(matrices) support(s) coherent transmission of 3 antenna port groups.

**78.** The method of any one of claims 70 to 77, wherein

the at least one precoding matrix set comprises a fourth precoding matrix set;

wherein a rank corresponding to each precoding matrix in the fourth precoding matrix set is 4, and the each precoding matrix in the fourth precoding matrix set is a combination of any four precoding matrices with numbers of transmission layers being 1, or the each precoding matrix in the fourth precoding matrix set is a combination, satisfying a third condition, of four precoding matrices in precoding matrices with numbers of transmission layers being 1; and

wherein the third condition is that precoding matrix with a number of transmission layers being 4 supports coherent transmission of 4 ports; or the third condition is that precoding matrix with a number of transmission layers being 3 supports coherent transmission of 2 antenna port groups.

**79.** The method of claim 78, wherein

precoding matrix(matrices) in the fourth precoding matrix set correspond(s) to fourth antenna port power information of the terminal device; and

wherein the fourth antenna port power information comprises that the terminal device contains four coherent ports with half-power transmission capability.

**80.** The method of any one of claims 50 to 79, wherein

the at least one precoding matrix set comprises a fifth precoding matrix set;

wherein a number of transmission layers corresponding to each precoding matrix in the fifth precoding matrix set is 5, the each precoding matrix in the fifth precoding matrix set is a combination of any five precoding matrices with numbers of transmission layers being 1, or the each precoding matrix in the fifth precoding matrix set is a combination, satisfying a fourth condition, of five precoding matrices in precoding matrices with numbers of transmission layers being 1; and

wherein the fourth condition is that precoding matrix with a number of transmission layers being 5 supports coherent transmission of 4 ports; or the fourth condition is that precoding matrix with a number of transmission layers being 5 supports coherent transmission of 2 antenna port groups.

**81.** The method of claim 80, wherein

precoding matrix(matrices) in the fifth precoding matrix set correspond(s) to fifth antenna port power information of the terminal device; and

wherein the fifth antenna port power information comprises that the terminal device contains five coherent ports with half-power transmission capability.

**82.** The method of any one of claims 50 to 81, wherein

the at least one precoding matrix set comprises a sixth precoding matrix set;

wherein a number of transmission layers corresponding to each precoding matrix in the sixth precoding matrix set is 6, the each precoding matrix in the sixth precoding matrix set is a combination of any six precoding matrices with numbers of transmission layers being 1, or the each precoding matrix in the sixth precoding matrix set is a combination, satisfying a fifth condition, of six precoding matrices in precoding matrices with number of transmission layers being 1; and

wherein the fifth condition is that precoding matrix with a number of transmission layers being 6 supports coherent transmission of 6 ports; or the fifth condition is that precoding matrix with a number of transmission layers being 6 supports coherent transmission of 3 antenna port groups.

**83.** The method of claim 82, wherein

precoding matrix(matrices) in the sixth precoding matrix set correspond(s) to sixth antenna port power information of the terminal device; and

wherein the sixth antenna port power information comprises that the terminal device contains six coherent ports with half-power transmission capability.

**84.** The method of any one of claims 50 to 83, wherein

the at least one precoding matrix set comprises a seventh precoding matrix set;

wherein a number of transmission layers corresponding to each precoding matrix in the seventh precoding matrix set is 7, the each precoding matrix in the seventh precoding matrix set is a combination of any seven precoding matrices with numbers of transmission layers being 1, or the each precoding matrix in the seventh precoding matrix set is a combination, satisfying a sixth condition, of seven precoding matrices in precoding matrices with numbers of transmission layers being 1; and

wherein the sixth condition is that precoding matrix with a number of transmission layers being 7 supports coherent transmission of 6 ports; or the sixth condition is that precoding matrix with a number of transmission layers being 7 supports coherent transmission of 3 antenna port groups.

85. The method of claim 84, wherein

precoding matrix(matrices) in the seventh precoding matrix set correspond(s) to seventh antenna port power information of the terminal device; and

wherein the seventh antenna port power information comprises that the terminal device contains six coherent ports with half-power transmission capability.

86. The method of any one of claims 50 to 85, wherein

the at least one precoding matrix set comprises an eighth precoding matrix set; and

wherein a number of transmission layers corresponding to each precoding matrix in the eighth precoding matrix set is 1, and the each precoding matrix in the eighth precoding matrix set supports coherent transmission of 4 antenna ports.

87. The method of claim 86, wherein
in the eighth precoding matrix set, the terminal device contains 4 coherent ports with half-power transmission capability, or precoding matrix(matrices) support(s) coherent transmission of 4 ports, or precoding matrix(matrices) support(s) coherent transmission of 2 antenna port groups.

88. The method of any one of claims 50 to 87, wherein

the at least one precoding matrix set comprises a ninth precoding matrix set; and

wherein a number of transmission layers corresponding to each precoding matrix in the ninth precoding matrix set is 1, and the each precoding matrix in the ninth precoding matrix set supports coherent transmission of 6 antenna ports.

89. The method of claim 88, wherein
in the ninth precoding matrix set, the terminal device contains 6 coherent ports with half-power transmission capability, or precoding matrix(matrices) support(s) coherent transmission of 6 ports, or precoding matrix(matrices) support(s) coherent transmission of 3 antenna port groups.

90. The method of any one of claims 46 to 89, wherein the uplink information comprises at least one of the following: a physical uplink shared channel (PUSCH), and a sounding reference signal (SRS).

91. A terminal device, comprising:

a communication unit, configured to acquire first information, wherein the first information is used to determine a precoding matrix for transmission of uplink information;
a processing unit, configured to precode the uplink information using the precoding matrix; and
a communication unit, configured to send precoded uplink information,
wherein the first information is determined according to at least one of: codebook subset configuration information, antenna port number information, a maximum number of transmission layers of the uplink information, a waveform used for uplink transmission, first indication information, second indication information and third indication information; and
wherein the codebook subset configuration information is used to indicate a codebook subset to which the precoding matrix belongs, the antenna port number information is used to indicate a number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

92. A network device, comprising:

a communication unit, configured to send first information to a terminal device, wherein the first information is used to determine a precoding matrix for transmission of uplink information;
wherein the first information is determined according to at least one of: codebook subset configuration information, antenna port number information, a maximum number of transmission layers of the uplink information, a waveform used for uplink transmission, first indication information, second indication information and third indication information; and
wherein the codebook subset configuration information is used to indicate a codebook subset to which the precoding matrix belongs, the antenna port number information is used to indicate a number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook.

93. A terminal device, comprising a processor and a memory for storing a computer program, wherein the processor is configured to call and execute the computer program stored in the memory to implement the method of any one of claims 1 to 45.

94. A network device, comprising a processor and a memory for storing a computer program, wherein the processor is configured to call and execute the computer program stored in the memory to implement the method of any one of claims 46 to 90.

95. A chip, comprising: a processor, configured to call and execute a computer program from a memory to cause a device equipped with the chip to implement the method of any one of claims 1 to 45.

96. A chip, comprising: a processor, configured to call and execute a computer program from a memory to cause a device equipped with the chip to implement the method of any one of claims 46 to 90.

97. A computer-readable storage medium, configured to store a computer program that causes a computer to implement the method of any one of claims 1 to 45.

98. A computer-readable storage medium, configured to store a computer program that causes a computer to implement the method of any one of claims 46 to 90.

99. A computer program product, comprising computer program instructions that cause a computer to implement the method of any one of claims 1 to 45.

100. A computer program product, comprising computer program instructions that cause a computer to implement the method of any one of claims 46 to 90.

101. A computer program, which causes a computer to implement the method of any one of claims 1 to 45.

102. A computer program, which causes a computer to implement the method of any one of claims 46 to 90.

**100**

**FIG. 1**

**FIG. 2**

Terminal                                      Base station

Performing downlink channel measurement and determining precoding of SRS for non-codebook uplink transmission

SRS corresponding to PUSCH transmission of non-codebook ⟶

Determining information of SRI and MCS, etc

⟵ Information of SRI and MCS, etc

PUSCH ⟶

**FIG. 3**

200

| Terminal device | | Network device |
|---|---|---|

S210,Sending first information, herein the first information is used to determine a precoding matrix for transmission of uplink information, the first information is determined according to at least one of: codebook subset configuration information, antenna port number information, the maximum number of transmission layers of the uplink information, a waveform used for uplink transmission, first indication information, second indication information and third indication information; and the codebook subset configuration information is used to indicate a codebook subset to which the precoding matrix belongs, the antenna port number information is used to indicate the number of antenna ports used by the terminal device to send the uplink information, the number of antenna ports is greater than 4, the number of antenna ports is a multiple of 2, the first indication information is used to indicate a precoding matrix index, the second indication information is used to indicate an antenna selection codebook, and the third indication information is used to indicate a phase selection codebook

S220,Precoding, by the terminal device, the uplink information using the precoding matrix

S230,Sending precoded uplink information

**FIG. 4**

Terminal device 300

Communication unit 310

Processing unit 320

**FIG. 5**

Network device 400

Communication unit 410

Processing unit 420

**FIG. 6**

Communication device 500

Memory
520

Processor
510

Transceiver
530

**FIG. 7**

Apparatus 600

Input interface 630

Processor 610

Memory 620

Output interface 640

**FIG. 8**

Communication system 700

Terminal device 710

Network device 720

**FIG. 9**

## INTERNATIONAL SEARCH REPORT

| International application No. |
| --- |
| **PCT/CN2021/136715** |

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

H04B; H04W; H04L

Documentation searched other than minimum documentation to the extent that such documents are included in the fields searched

Electronic data base consulted during the international search (name of data base and, where practicable, search terms used)

WPI, EPODOC, CNKI, CNPAT, 3GPP: 终端, 网络设备, 天线端口, 码本, 预编码矩阵, 码本子集, 传输层数, 波形; terminal, network device, antenna port, codebook, precoding matrix, codebook subset, transmission layers, waveform

### C. DOCUMENTS CONSIDERED TO BE RELEVANT

| Category* | Citation of document, with indication, where appropriate, of the relevant passages | Relevant to claim No. |
| --- | --- | --- |
| X | CN 112751597 A (HUAWEI TECHNOLOGIES CO., LTD.) 04 May 2021 (2021-05-04) description, paragraphs 2 and 198-248 | 1-102 |
| X | CN 113497645 A (DATANG MOBILE COMMUNICATIONS EQUIPMENT CO., LTD.) 12 October 2021 (2021-10-12) description, paragraphs 210-493 | 1-102 |
| X | WO 2021169819 A1 (GUANGDONG OPPO MOBILE TELECOMMUNICATIONS CORP., LTD.) 02 September 2021 (2021-09-02) description, page 3, line 12 to page 12, line 18 | 1-102 |
| X | CATT. "Remaining Issues on Codebook Based UL Transmission" *3GPP TSG RAN WG1 Meeting #92 R1-1801716*, 02 March 2018 (2018-03-02), sections 6.1.1.1-6.1.1.2 | 1-102 |
| A | US 2018287682 A1 (SAMSUNG ELECTRONICS CO., LTD.) 04 October 2018 (2018-10-04) entire document | 1-102 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 August 2022** | **07 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/136715**

| Patent document cited in search report | | | Publication date (day/month/year) | Patent family member(s) | | | Publication date (day/month/year) |
|---|---|---|---|---|---|---|---|
| CN | 112751597 | A | 04 May 2021 | WO | 2021083285 | A1 | 06 May 2021 |
| CN | 113497645 | A | 12 October 2021 | WO | 2021197418 | A1 | 07 October 2021 |
| | | | | TW | 202139619 | A | 16 October 2021 |
| WO | 2021169819 | A1 | 02 September 2021 | | None | | |
| US | 2018287682 | A1 | 04 October 2018 | WO | 2018174641 | A2 | 27 September 2018 |
| | | | | KR | 20180108357 | A | 04 October 2018 |
| | | | | EP | 3563510 | A2 | 06 November 2019 |

Form PCT/ISA/210 (patent family annex) (January 2015)